# EUROPEAN PATENT SPECIFICATION

(11) **EP 3 817 994 B1**
(45) Date of publication and mention of the grant of the patent: **20.09.2023**
(21) Application number: 18925159.8
(22) Date of filing: 06.07.2018
(51) Int. Cl.: B65D 90/00, B65G 17/32, B65G 17/36, B65G 43/00, B65G 47/40, B65G 67/60

(54) **APPARATUS AND METHOD FOR CONTAINER CONING AND/OR DECONING**
VORRICHTUNG UND VERFAHREN ZUR BEHÄLTERKONISIERUNG UND/ODER -DEKONISIERUNG
APPAREIL ET PROCÉDÉ PERMETTANT DE PLACER DES CÔNES ET/OU DE RETIRER DES CÔNES SUR UN CONTENEUR

(43) Date of publication of application: 12.05.2021
(73) Proprietor: PSA International Pte Ltd, Singapore 117352 (SG)
(72) Inventor: LIM, Tian Yew, Singapore 117352 (SG)
(74) Representative: Barker Brettell LLP
(86) International application number: PCT/SG2018/050335
(87) International publication number: WO 2020/009656

(56) References cited:
- WO-A2-2012/141658
- CN-A- 107 265 009
- US-A1- 2006 115 350
- US-A1- 2012 321 418

## Description

### Field of Invention

The present invention relates to an apparatus for container coning and/or deconing, in particular, to facilitate coning and/or deconing of connectors (e.g. twist-locks or cones) to/from a container having corner fittings. The present invention also relates to a method for container coning and/or deconing.

### Background

Shipping companies are constantly looking for ways to reduce time a ship spends at a port facility that is involved in berthing operations to increase efficiency of each vessel. For instance, in unloading or loading of containers from/to a vessel, it is important that the entire unloading/loading process is fast. The bottle neck of managing operations in a port is usually associated with the ability to direct a container to or from the vessel. Before containers are loaded or unloaded from the vessel, a coning or deconing operation has to be carried out. The coning and deconing operation adds time to the overall cycle time of container handling, thereby reducing productivity.

Coning is a process of attaching automatic or semi-automatic twist-locks (TL) or cones (AC) to container corner castings prior to loading onto vessels. Cones are also known as stackers. Deconing is a process of removing twist-locks or cones from container corner castings upon discharge from vessels. In general, twist-locks are used for containers placed above deck, while cones are used for containers placed below deck. No connector may be required to secure the 12.192 m (40 feet) in hatch for some vessel designs (particularly for a large vessel).

Typically, a connector is used to secure between a first container that is stacked on top of a second container. This will ensure that the containers going on board a vessel is safe for journey at sea. These connectors are typically provided in a plurality of bins from the vessel. For semi-automatic twist-locks, during deconing, workers on the vessel will release a lower cone of the connector from a corner casting of the second container manually so that the first container can be lifted by a quay crane to be transported to the wharf. This process of releasing the lower cone is not required for other types of connectors. At the wharf, the workers remove an upper cone of the connector from a corner casting of the first container. During coning, after an upper cone of the connector has been installed to the corner casting of the first container, the first container will be lifted up and stacked on top of the second container. For semi-automatic twist-locks, the workers on the vessel will then secure the lower cone of the connector to the bottom container. This process of securing the lower cone is not required for other types of connectors.

Coning and deconing are typically executed in one of two ways. One method of deployment is a de-centralized concept of deploying a number of workers per quay crane to execute the tasks of coning and deconing under the quay crane. Workers would place a safety cone in front of a Prime Mover (PM) that transports a container during the process to inform the driver not to shift his vehicle and proceed with coning or deconing activities. Once coning (during loading operation) or deconing (during discharging operation) has been completed, the lashing workers will remove the safety cone. Once the lashing workers have moved away from the vehicle, a wharf operations supervisor (WOS) will notify the terminal operating system (TOS) via his WOS computer (WOS PC) that the coning/deconing job has been completed and is safe for the PM to move away. Thereafter, the TOS informs the prime mover driver to proceed to his next location via the PM computer (PMPC) installed inside the PM cabin. TOS in brief is a central system that manages work flow at a port facility.

The second method is a centralized method of coning and deconing. In this way of operations, workers from the cranes working on the same vessel are pooled and deployed at a bow (deconing operations) or stern (coning operations) of the vessel. Prime Mover drivers receive containers from the quay crane (during discharging) or Yard Crane (during loading) and proceed to the bow or stern of the vessel accordingly. As the PM drivers approach a coning or deconing station, they will be marshalled into one of a plurality of lanes for execution of coning or deconing by a consolidated pool of lashing workers. Once the coning or deconing job is completed, prime mover drivers would be informed of their respective new job locations via the PMPC through communication with TOS

A cone or a twist-lock (i.e. a connector) can weigh up to 8kg. Therefore, the coning and/or deconing operation can be quite exhausting for the lashing workers and the worker is prone to hand or finger injury. It is also inefficient as it depends on the ability of the lashing working to install or remove the connector. Typically, it takes about 20 - 40 seconds to install or remove the connectors, thereby increasing the time the ship has to spend in the port. This process is carried out by workers with the container either still carried by a quay crane and hanging in the air, or has landed on a platform, such as trailer.

Some improvements have been suggested in recent years to enhance the centralized concept of operations and further reduce the manpower required at the Wharf. For example, International patent publication no. WO/2012/141658.

US 2006/115350 A1 discloses a device for automatically mounting or removing twistlocks in the corners of containers in order to interconnect containers in such a way as to increase stability during transport. Said device consists of container part, comprising handling openings into which die twistlocks project once the container has been set down, the distance between said openings being adjustable, twistlock grippers which are arranged inside the container and are used to remove or to mount the twistlock, and storage possibilities for twistlocks.

However, a problem remains in that sorting of connectors, for instance, connectors removed from deconing operations or connectors to be provided for coning is still a manually handled process. The efficiency of the prior art in regard to management of workflow for container coning or deconing in a port facility can also be further improved.

### Summary

The invention is defined in the independent claims. Some optional features of the invention are defined in the dependent claims.

According to an aspect of the present invention, there is provided an apparatus for container coning and/or deconing, wherein the apparatus comprises: a processor for executing instructions to operate the apparatus; a store for storing a plurality of connectors; a conveyor mechanism comprising a plurality of holders for holding the plurality of connectors, the conveyor mechanism being configured for moving one or more of the plurality of holders to a location for retrieving a connector used for coning a container or for moving one or more of the plurality of holders to a location for receiving a connector obtained from deconing a container; characterised in that the apparatus further comprises: a sorter for identifying type of connector; a dispensing mechanism configured to tilt one of the plurality of holders in a manner to dispense a connector out of the tilted holder; and a memory for storing indexing data indicating: a presence of a connector in each of the plurality of holders; a type of the connector that is held in each holder; and a position of each holder on the conveyor mechanism, wherein the sorter is configured to pick up one connector stored in the store, identify type of the picked connector, orientate the picked connector to a suitable orientation for placement into the holder, and place the orientated connector with type identified into one of the plurality of holders that is indicated as having no presence of a connector in the indexing data, and the processor is configured to operate the apparatus to update the indexing data in the memory to indicate presence of a connector in the holder containing the placed connector, and the identified type of the placed connector.

According to another aspect of the present invention, there is provided a method for container coning and/or deconing, wherein the method comprises: a conveying step for moving one or more of a plurality of holders mounted to a conveyor mechanism to a location for retrieving a connector used for coning a container or for moving one or more of a plurality of holders mounted to a conveyor mechanism to a location for receiving a connector obtained from deconing a container, characterised in that the method further comprises: a sorting step for identifying type of connector for a plurality of connectors in a store; a dispensing step for tilting one of the plurality of holders in a manner to dispense a connector out of the one holder to the store; a storing step for storing indexing data indicating: a presence of a connector in each of the plurality of holders; a type of the connector that is held in each holder; and a position of each holder on the conveyor mechanism, wherein the sorting step comprises: picking up one connector stored in the store; identifying type of the picked connector; orientating the picked connector to an orientation for placement into the holder; and placing the orientated connector with type identified into one of the plurality of holders that is indicated as having no presence of a connector in the indexing data; and an updating step for updating the indexing data to indicate presence of a connector in the holder containing the placed connector and the identified type of the placed connector.

### Brief Description of the Drawings

In the drawings, the same reference numerals generally relate to the same parts throughout different views, unless otherwise specified. Embodiments of the invention will be better understood and readily apparent to one skilled in the art from the following written description, by way of example only and in conjunction with the drawings, in which:
Figure 1 shows a station (an apparatus) for coning or deconing according to an example of the present disclosure.
Figure 2 shows a sorting and storing apparatus (in which a sorter is comprised) working together with an equipment control unit as a sub-station used in the station according to an example of the present disclosure.
Figure 3A shows a storing module of the sorting and storing apparatus according to an example of the present disclosure when a discharging mechanism of the storing module is inactive.
Figure 3B shows a perspective view of a storing module of the sorting and storing apparatus according to an example of the present disclosure when the discharging mechanism of the storing module is active.
Figure 3C shows a perspective view of two storing modules of the sorting and storing apparatus being cascaded according to an example of the present disclosure.
Figure 3D shows an exploded (perspective) view of a holder according to an example of the present disclosure.
Figure 3E shows a front view of a holding pin in a holder pocket according to an example of the present disclosure.
Figure 3F shows a perspective view of a holding pin in a holder pocket arranged to move along a guide rail according to an example of the present disclosure.
Figure 3G shows the holding pin in Figure 3F in connection with a guide roller holder according to an example of the present disclosure.
Figure 4A shows a connector within a holder in a storing module and in an upright orientation (i.e. not tilted) according to an example of the present disclosure.
Figure 4B shows a connector within a holder in a storing module and being tilted according to an example of the present disclosure.
Figure 4C shows a top view of a top plate of a holder according to an example of the present disclosure.
Figure 4D shows different views of a holder pocket for keeping the connector in place and a counterweight within a holder in a storing module according to an example of the present disclosure.
Figure 4E shows different states of a holder pocket of a holder with respect to a pin as the holder is being tilted according to an example of the present disclosure.
Figures 5A and 5B show respective upright position and upside-down position of a connector in a desired horizontal orientation according to an example of the present disclosure.
Figures 5C and 5D show respective upright position and upside-down position of a connector in an undesired horizontal orientation according to an example of the present disclosure.
Figure 5E shows an orientation unit for re-orientating a connector to a suitable orientation for placing into an empty holder according to an example of the present disclosure.
Figure 5F shows a visioning unit according to an example of the present disclosure for identifying a type of a connector picked up by the sorter and for identifying an orientation of the picked connector.
Figure 6A shows a side view of an exemplary interchangeable end effector for coning and/or deconing according to an example of the present disclosure.
Figure 6B shows a perspective view of the interchangeable end effector of Figure 6A in a working operation.
Figures 6C shows a perspective view of the exemplary interchangeable end effector of Figure 6A in a disengaged state.
Figure 6D shows a close-up view of an exemplary casing enclosing a pushing portion of the interchangeable end effector of Figure 6A in a retracted state that is connected to a twisting portion of the interchangeable end effector of Figure 6A.
Figures 6E and 6F shows two examples of pushing devices in an extended state according to the example in Figure 6D.
Figure 6G illustrates an example of a twisting portion of the interchangeable end effector of Figure 6A.
Figures 6H shows an exploded view of a top mating member and a bottom member of the interchangeable end effector of Figure 6A that are operably connected by a locking mechanism.
Figure 6I shows a universal end effector that can be used with the robotic arm.
Figures 7A to 7D show how the position and orientation of a twist-lock changes during a coning operation according to an example of the present disclosure.
Figures 7E to 7H show how the position and orientation of a twist-lock changes during a deconing operation according to an example of the present disclosure.
Figure 8A shows where a station can be set up near the vessel at the wharf or in the thoroughfare of the yard in a port facility according to an example of the present disclosure.
Figure 8B shows where a station can be set up under a quay crane in a port facility according to an example of the present disclosure
Figure 8C shows where a station can be set up as a part of a quay crane in a port facility according to an example of the present disclosure
Figure 8D shows where a station can be set up as a part of a quay crane in a port facility according to an example of the present disclosure
Figure 9A to 9D show four different modes of transporting the equipment control unit and/or the sorting and storing apparatus according to an example of the present disclosure.
Figure 10 shows a station (an apparatus) for coning or deconing according to an example of the present disclosure.
Figure 11A shows an example of indexing data stored in a memory of the sorting and storage device according to an example of the present disclosure.
Figure 11B shows an example of operation information stored in a server according to an example of the present disclosure.
Figure 12A shows how the station communicates with a server for managing operations in a port facility (i.e. Terminal Operating System)
Figure 12B shows a flow chart of a coning or deconing process according to an example of the present disclosure.
Figure 13 illustrates how an apparatus according to an example of the present disclosure communicates with a crew device.
Figure 14 shows a corner casting of a top (first) container and a bottom (second) container and how a connector can be connected to these respective corner castings according to an example of the present disclosure.
Figure 15 illustrates a workflow of a coning and/or deconing operation being performed by an apparatus according to an example of the present disclosure.
Figure 16 illustrates a workflow indicating how a coning/deconing job is being performed by a storing and sorting unit of an apparatus according to an example of the present disclosure.
Figure 17 illustrates a workflow indicating how a coning/deconing job is being performed by an equipment control unit of an apparatus according to an example of the present disclosure.
Figure 18A illustrates a workflow indicating how a sorter according to an example of the present disclosure prepares a connector for coning and delivers it to a location for retrieving the connector used for coning the container
Figure 18B is a continuation of the workflow in Figure 18A.
Figure 19 illustrates how exception handling and/or error handling is carried out by an apparatus according to an example of the present disclosure.
Figure 20 illustrates, according to an example of the present disclosure, a movable platform used to align and/or orientate a vehicle to facilitate the coning or deconing of one or more containers carried by the vehicle.
Figure 21A illustrates, according to an example of the present disclosure, a movable platform used to align and/or orientate a robotic manipulator (of an equipment control unit) to facilitate the coning or deconing of one or more containers carried by a vehicle.
Figure 21B illustrates, according to another example of the present disclosure, a movable platform used to align and/or orientate a robotic manipulator (of an equipment control unit) to facilitate the coning or deconing of one or more containers carried by a vehicle.
Figure 21C illustrates a driving mechanism within the movable platform of Figure 21B.
Figure 22A illustrates a skew control unit of a movable platform according to an example of the present disclosure.
Figure 22B illustrates a movable platform for controlling transverse movement according to an example of the present disclosure.
Figures 23A to 23D illustrate some examples of movable platforms for aligning and/or orientating a vehicle or a robotic manipulator in forward, rearward and/or sideward directions.

### Detailed Description

Implementation of the techniques and examples disclosed herein may be in the form of an apparatus for managing storage and retrieval of twist-locks and cones during a coning and/or deconing operation at a port facility. As used herein, the term "connector" may be considered as a twist-lock or a cone suitable for use during a coning and/or a deconing operation of a container at a port facility. In general, connectors used during the coning operation are provided by the vessel transporting the container and brought manually to a designated area (such as a lashing platform) for performing the coning operation. Similarly, the connectors removed from the container are returned to the vessel prior to the vessel departing the port facility.

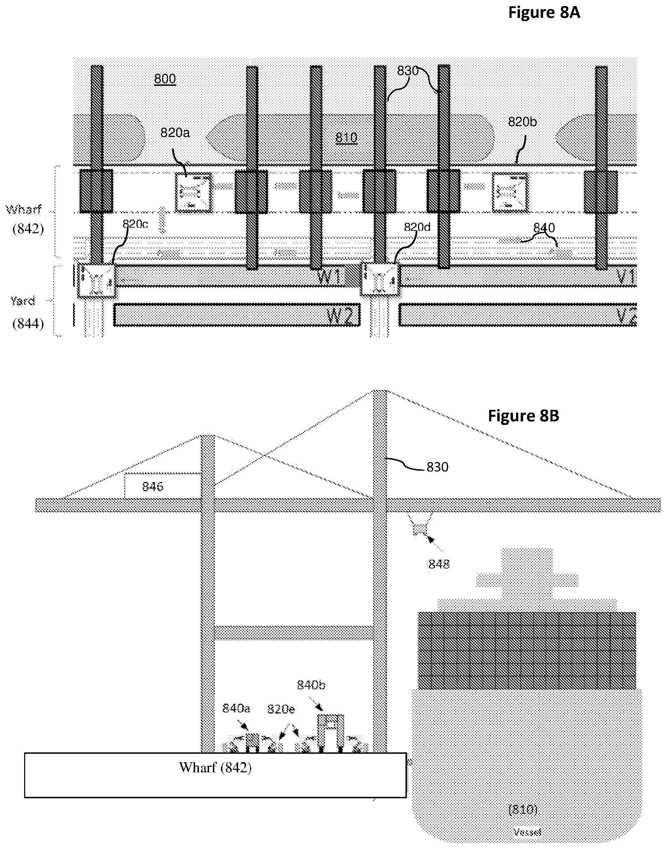

"Station" in the present disclosure refers to a holding area of a predetermined size in a port facility for containers to be transported thereto to perform a coning and/or deconing operation. It should be appreciated that in actual implementation, a station is portable and can be set up at any area (e.g. berth area or container stacking area). In one arrangement as shown in Figure 8A, stations 820a and 820b are placed at the stern and bow of a vessel 810 respectively in a wharf area 842. In such arrangement, the station 820a may be configured for a strictly deconing operation and the station 820b may be configured for a strictly coning operation and vehicles 840 are arranged to transport the containers to the respective stations 820a and 820b for deconing or coning. In another arrangement, a station may be placed at a suitable area to perform both coning and deconing operations. In some parts of the present disclosure, the station may be termed as Automated Integrated Wharf Operation Station ("AIWOS").

For example, and referring to Figure 8A, stations 820c and 820d may also be placed at the yard area 844 to perform coning and deconing operations. Containers can be transported to the station by a container transporter (or also known herein as a vehicle) 840 such as prime mover with a trailer, chassis trucks or automated guided vehicles (AGVs) or a movable device with lifting capability (e.g. a straddle carrier). In another example, and referring to Figure 8B, a station 820e can be placed under a quay crane 830. In such an example, a vehicle 840, for example in the form of a prime mover 840a, is being arranged to enter a respective station 820e and wait for the quay crane 830 to place a container to be coned or a container to be deconed on the vehicle 840. The quay crane 830 comprises a spreader 848, a boom 847 and a machinery house 846. The machinery house 846 is an enclosure comprising necessary mechanism, such as motors, gearboxes, wire rope drums, electrical drives, programmable logic controller, and etc., for moving the spreader 848 and the crane 830. The spreader 848 is controlled by the machinery house 846. Optionally, the quay crane 830 may be configured to communicate with the station 820e to align the vehicle 840 for the placement of the container(s) on the vehicle 840 by the spreader 848. An operator can either operate in a cabin (not illustrated in Figures) near the spreader or remotely in a terminal building or other location on the crane 830. In the same example, where the vehicle is in the form of a straddle carrier 840b, the straddle carrier 840b is arranged to place the container to be coned onto a coning platform placed on the ground of the wharf area 842 and move out before the station 820e performs coning. The spreader 840 is arranged to pick up the container only after the station 820e completes the coning operation. In addition, the spreader 848 is arranged to place the container to be deconed onto the coning platform placed on the ground of the wharf area 842, and the straddle carrier 840b is arranged to enter the station 820e to pick up the container only after the station 820e completes the deconing operation. It should be appreciated that the coning platform is portable and can be arranged to be transported into or away from the wharf area 842, if a straddle carrier 840b is not used.

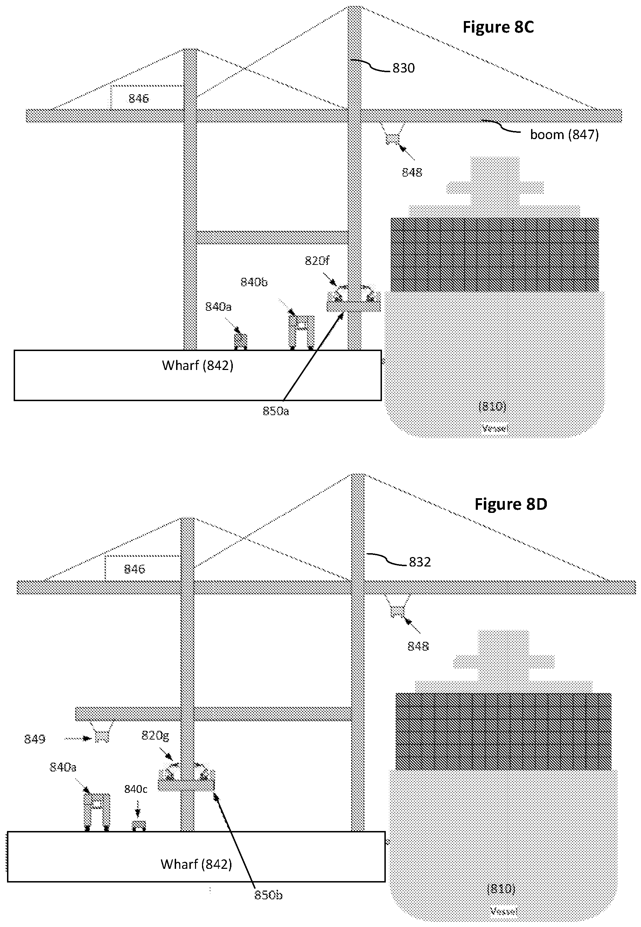

In another example, and referring to Figure 8C, a station 820f can be placed on a fixed seaside platform 850a mounted to a quay crane 830. In such an example, a container to be coned or a container to be deconed is placed on the seaside platform 850a. This means that during deconing operations, the quay crane 830 is arranged to transport the container to be deconed from a vessel 810 to the seaside platform 850a, and to transport the deconed container to the vehicle 840 for commuting to the yard area. During coning operations, the quay crane 830 is arranged to transport the container to be coned from a vehicle 840 to the seaside platform 850a, and to transport the coned container directly to the vessel 810.

In another example, and referring to Figure 8D, a station 820g can be placed on a fixed landside platform 850b mounted to a quay crane 832 having a primary spreader 848 and a secondary spreader 849. The primary spreader 848 handles an operation between the platform 850b and vessel 810, while the secondary spreader 849 handles an operation between the platform 850b and the vehicle 840. In such an example, a container to be coned or a container to be deconed is placed on the landside platform 850b. This means that during deconing operations, the primary spreader 848 is arranged to transport the container to be deconed from a vessel 810 to the landside platform 850b. The secondary spreader is arranged to transport the deconed container to a vehicle 840. The vehicle 840 may be manned or unmanned, such as in the form of a straddle carrier 840d and an automated guided vehicle 840c. During coning operations, the secondary spreader 849 is arranged to transport the container to be coned from the vehicle 840 to the landside platform 850b. The primary spreader 848 is arranged to transport the coned container directly to the vessel 810. It should be appreciated that the use of a secondary spreader allows a cycle time that comprises duration for transporting a container to the station and/or vessel to be more consistent. Customization of the primary spreader and the secondary spreader can be attained more easily.

Optionally, the seaside platform 850a and/or landside platform 850b may comprise a driving mechanism (not illustrated in Figures) for moving along a horizontal beam of a main structure of the quay crane 830 or 832. Optionally, in the event that the secondary spreader 849 is out of operation, the primary spreader 848 may also be configured to handle transportation of a container from the landside platform 850b to the vehicle 840. In another variation, the quay crane 832 having two spreaders may be configured to operate with the seaside platform 850a, instead of the landside platform 850a. Optionally, one or more stations may be permanently mounted on the seaside platform 850a or landside platform 850b.

In the examples of Figures 8C and 8D, the quay crane 830 or 832 is used to lift a bin comprising connectors used to perform coning and/or connector obtained during deconing, as well as a sub-station or a station to the platform 850a and/or 850b. It should be appreciated that a traffic management unit, a vehicle alignment unit, and vehicle number recognition unit (details of which will become apparent in the following description) are not installed in the station because in these examples, the vehicle 840 is not being instructed to enter the station. Although the example of Figure 8A will be much discussed in detail in the following paragraphs, it would be easily understood by a skilled person that similar operations would apply for the examples of Figures 8B to 8D and such similar operations are thus omitted in the present disclosure.

"Crew device" or "Alerting Device" in the present disclosure refers to a mobile device or a typical computing device that can provide for connectivity to the internet and/or intranet to communicate with the station (e.g. receive alerts and/or allow inputs). It can be a desktop, laptop, mobile phone, smart phone, and other equivalent hand-held devices which can be used to communicate with the station. Typically, a crew device uses, for instance, Wireless Local Area Network (WLAN), 2nd to 5th Generation Telecommunication networks and the like for data communication with the apparatus. The crew device may comprise a client application for allowing a crew member to update a status of the station, receive alerts such as predetermined exceptions in the workflow of container coning or deconing, control machinery at the station, and/or check details of supervision jobs being assigned to the crew member. Alternatively, the end user can simply type the hyperlink of a website to arrive at a graphical user interface configured for communicating with the apparatus.

"Cycle time" in the present disclosure refers to the total time where a vehicle carrying a container (or two containers) enters the station, the station performs a coning or deconing operation on the container and the vehicle leaves the station. Coning is a process of attaching twist-locks (TL) or cones (AC) to container corner castings prior to loading onto vessels. Cones are also known as stackers. Deconing is a process of removing twist-locks or cones or stackers from container corner castings upon discharge from vessels. This means that cycle time will increase if a vehicle carrying a container (or two containers) to be coned or a container (or two containers) to be deconed continues to remain in the station for the coning or deconing operation to be completed.

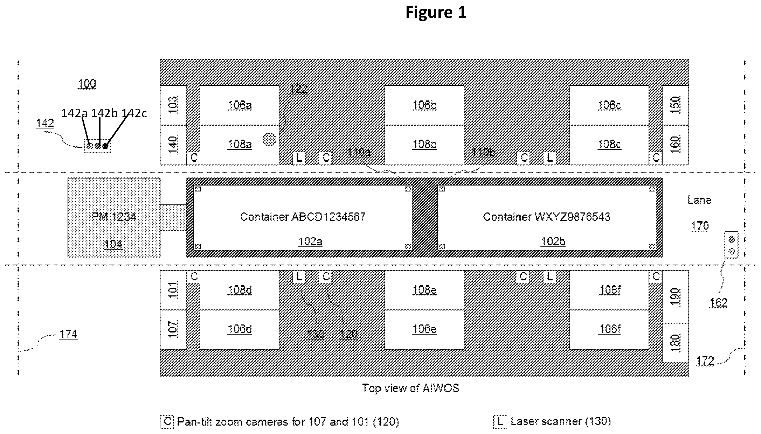

A station (or apparatus) 100 according to an exemplary example of the present disclosure for loading and unloading containers at a port facility is illustrated in Figure 1. The station 100 comprises a station controller 190 for managing coning and/or deconing operations necessary for the loading and unloading of containers at the port facility. The station controller 190 comprises a processor configured to execute instructions in a memory to operate the station as a traffic management unit (e.g. TMS) 160 for controlling movement of one or more vehicles 104 transporting the container (i.e. container transporter) into a lane 170 leading to the station 100, a vehicle number recognition unit 150 for receiving information relating to a vehicle number of the vehicle entering the station and a vehicle alignment unit (e.g. VAU) 140 for aligning the vehicle in the station. The vehicle 104 may be arranged to carry more than one container. One end of the lane 170 is an entry point 172 for receiving a vehicle with a container to be coned and/or deconed. The other end of the lane or road is an exit point 174 for the vehicle to exit. There may be traffic lights 162 for signalling the vehicles to enter the station from the entry point 172 and exit from the exit point 174. The width of the lane can be in a range from 3m to 5.1m for allowing the vehicle 104 to enter for the coning or deconing operations depending on the type of vehicle 104. The lane 170 may be long enough to accommodate more than one vehicle carrying more than one containers respectively. In the present example, the lane 170 is long enough to accommodate one vehicle 104 carrying two small containers (e.g. 6.096 m (20 feet) in length) 102a and 102b. In another example, the lane may be long enough to accommodate two vehicles carrying one small container (e.g. 6.096 m (20 feet) in length) respectively. In such example, the respective locations of each vehicle carrying the container would have to be determined. Some physical realignment of modules (e.g. equipment control unit and storage and sorting unit) in the station may be required. In another example, the lane may be long enough to accommodate one vehicle carrying one big container (e.g. 12.192 m (40 feet) in length). The basic dimensions of containers are largely determined by ISO standards. It should be easily understood that the containers can also be 13.716 m (45 feet), 14.6304 m (48 feet) or 16.1544 m (53 feet) in length.

The traffic management unit 160 is configured to manage the flow of vehicles 104 in and out of the lane 170 of the station 100 and the vehicle queue outside station 100 by communicating with the container transporter 104 via vehicle communication infrastructure, in the case of an unmanned vehicle, inform the container transporter 104, or in the case of manned vehicle, alerting the driver via a user interface in the vehicle or a traffic light indicator 162 that the station 100 is ready to receive the container transporter 104 and the vehicle 104 may enter the station 100 from the entry point 172. Examples of vehicle communication infrastructure may be in the form of devices supporting Bluetooth, 3G/4G/5G or WIFI communication, one or more loudspeaker devices, and the like. The vehicle may also be equipped with a transponder or a display unit that comprises a transponder. For instance, the traffic management unit is configured to provide signals to the driver of a prime mover 104 with a trailer, to move the vehicle (with the container) into the station 100. For instance, if the station 100 is currently performing a coning or deconing operation, the traffic management unit 160 is configured to turn a traffic light 162 located at the entry point 172 along the lane 170 to flash the colour red, which means "to stop", in the present example. In another instance, if the station has to stop its operation due to an error and is unable to recover within a predetermined time, the station controller 190 may be configured to communicate with a terminal operating system (TOS). The TOS may then redirect the vehicle 104 presently in the station via a user interface for manned vehicle 104 or issue a new job order to the unmanned vehicle 104 (after cancelling the present job order).

In one arrangement, the vehicle number recognition unit 150 communicates with a vehicle 104 to obtain data relating to the vehicle number via the vehicle communication infrastructure. In another arrangement, the vehicle number recognition unit 150 may be placed outside of the station 100 and apply visual imaging techniques to obtain the vehicle number from a vehicle number plate mounted on the vehicle 104 prior to the vehicle 104 entering the station 100.

The station 100 may be further incorporated with a container identification unit 101 for identifying or verifying an identification number on the container of the vehicle 104. The container recognition unit 101 is configured to cooperate with one or more pan-tilt zoom cameras 120 and one or more laser scanners 130 in the station 100. Other recognition devices (e.g. radiography detector or radiation detector) may be incorporated for improved functionality.

Although it is described in this specific example that the station 100 is equipped with a container identification unit 101 and a vehicle number recognition unit 150, it should be appreciated that the station 100 can be configured without a container identification unit and/or a vehicle number recognition unit. For instance, a container identification unit may be disposed at a location away from the station 100. In one example, the quay crane may be equipped with a visioning unit to check the container number and/or the condition of the container before picking the container up and landing it on the vehicle 104. In such an example, the TOS may arrange for a particular vehicle (of known vehicle number) to transport the container to a designated station 100.

If the station 100 is equipped with a container identification unit 101 and a vehicle number recognition unit 150, the quay cranes that are involved in the unloading of the containers need not be equipped with a visioning unit. It is therefore more economical to equip an imaging unit (e.g. camera) at a coning/deconing station. It would also be more efficient since the container number and vehicle number have to be obtained during a coning operation in order to determine the model of twist-lock or cone used for the coning operation and/or other specific requirements during coning or deconing. Other specific requirements may comprise any one of the following conditions:
- no coning or deconing required,
- fix connectors only at two diagonal corners of a container.

Furthermore, if the obtained container number and/or the obtained vehicle number do not match with the job detail/sequence provided by TOS, it will be easier to manage at the coning/deconing station. Therefore, having the container identification unit 101 in the station 100 is advantageous to automate port operations in a port facility.

The vehicle alignment unit 140 is configured for instructing the vehicle 104 that enters the station to align itself at a preferred parking position before the coning and/or deconing operation is performed. In one example, the vehicle alignment unit 140 is configured to communicate with an unmanned vehicle 104 via vehicle communication infrastructure to fine tune the parking position of the vehicle 104 for a more effective coning/deconing operation. In another arrangement, the vehicle alignment unit 140 is configured to provide alignment signals via an alignment light indicator 142 to the driver of a prime mover 104 with a trailer to fine tune the parking position of the vehicle 104 for a more effective coning/deconing operation. In such arrangement, the vehicle alignment unit 140 is configured to provide signals for displaying up/down indicators 142a/142c to a driver of the vehicle 104 to fine tune its parking position by moving the vehicle 104 forward or rearward. In addition, the vehicle alignment unit 140 is configured to provide signals for displaying a stop indicator 142b to indicate to the driver to stop any vehicle movement and park the vehicle. The vehicle alignment unit 140 may include an image processor for detecting positioning of the vehicle 104 through captured images of the vehicle 140 or measurement of the position of the vehicle 104 and for determining the signals to be displayed based on the detected positioning of the vehicle 104.

In another arrangement, the vehicle alignment unit 140 may be configured to communicate and control remotely a movable platform that is installed on the ground before the vehicle 104 enters the station 100. The movable platform may extend partially along the lane 170 or throughout the lane 170. In an example, the movable platform may comprise a conveyor belt. Front tires of the vehicle 104 may be positioned on the conveyor belt, and the driver of the prime mover is instructed to put the vehicle in neutral gear. The conveyor belt then guides the vehicle 104 into the station 100 to a preferred parking location and/or orientation that is aligned for coning or deconing of containers carried by the vehicle 104. In another example, the vehicle 104 may be arranged to move onto the movable platform, wherein the movable platform is arranged to move, in a step-wise manner, forward or rearward along a longitudinal axis of the vehicle 104, or sideward along a direction transverse to the longitudinal axis of the vehicle 104 to align the vehicle 104 for coning or deconing or containers carried by the vehicle 104. The movable platform may also be arranged to rotate the vehicle 104.

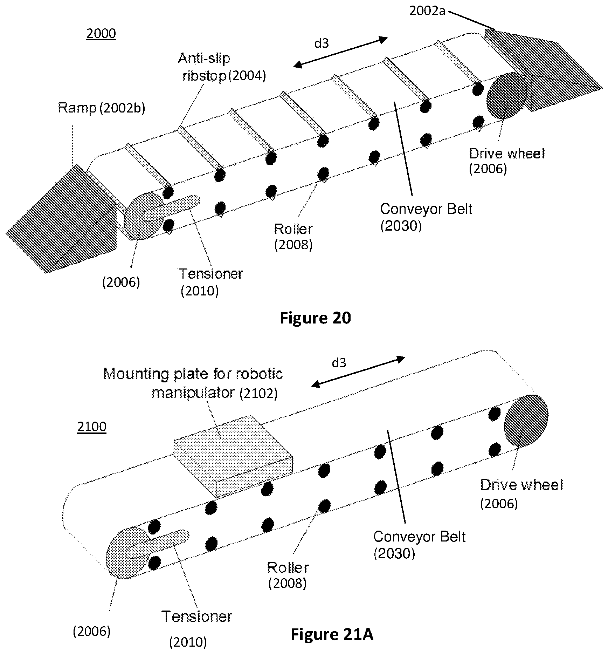

Figure 20 illustrates an example of the aforementioned movable platform that is suitable for alignment of a vehicle (e.g. 104 of Figure 1) along positions in forward or rearward directions d3 along a longitudinal axis of the vehicle. The alignment process may be controlled by taking in user input or automatically by taking input from a plurality of sensors (e.g. cameras, distance sensors, and the like). In Figure 20, a movable platform 2000 is used to align vehicle (not shown in Figure 20) to facilitate coning or deconing of one or more containers carried by the vehicle. In the present example, the movable platform 2000 comprises a conveyor belt 2030 forming an endless loop for conveying the vehicle residing thereon linearly to positions along a length of the conveyor belt 2030 so as to align the vehicle for coning or deconing. In the present example, the movable platform 2000 comprises a first inclined ramp 2002a and a second inclined ramp 2002b located at two opposite ends of the conveyor belt 2030. When the movable platform 2000 is in use to align the vehicle, the vehicle first moves up the conveyor belt 2030 using the first inclined ramp 2002a. Next, the conveyor belt 2030 is driven to align the vehicle by conveying the vehicle to a desired position for coning or deconing that is along the length of the conveyor belt 2030. After the coning or deconing job has completed at the desired position, the vehicle is moved down from the conveyor belt 2030 using the second inclined ramp 2002b to exit. The conveyor belt 2030 may be controlled to move the vehicle from the desired position to the second inclined ramp 2002b so that the vehicle can move down the second inclined ramp 2002b. In the present example, the conveyor belt 2030 comprises a tensioner 2010 for tensioning the conveyor belt 2030 to ensure the conveyor belt 2030 is sufficiently taut for conveying the vehicle residing thereon, a pair of drive wheels 2006, located at front and rear locations, for driving movement of the conveyor belt 2030 and a plurality of rollers 2008 spaced apart to facilitate movement of the conveyor belt 2030 and to hold the weight of the vehicle that has moved up the conveyor belt 2030. One or both of the drive wheels 2006 may be connected to one or more drivers, such as a motor (not shown in Figure 20), that is configured to drive the forward or rearward movement of the conveyor belt 2030. The one or more drivers may be connected to a transponder (not shown in the Figures) for communicating with a vehicle alignment unit (e.g. 140 of Figure 1) or a respective equipment control unit (e.g. 108a-f of Figure 1) and/or station controller (e.g. 190 of Figure 1) that is or are configured to control the one or more drivers. The transponder may be a wireless transponder configured for wireless data communication. The conveyor belt 2030 may comprise one or more anti-slip rib stops 2004 to prevent the vehicle 104 from slipping or skidding on the conveyor belt 2030. In one example, the whole of the vehicle can be located on the conveyor 2030 that is, in the case that the vehicle has wheels, all the wheels of the vehicle are on the conveyor belt 2030. In another example, there may be a pair of the conveyor belt 2030, wherein each conveyor belt is used to hold one side of the vehicle. For example, left side wheels of the vehicle contact a first conveyor belt 2030, while right side wheels of the vehicle contact a second conveyor belt (not illustrated in Figure 20) that has similar configuration as the first conveyor belt 2030.

The movement of the aforementioned movable platform (e.g. 2000 in Figure 20) may be determined from images captured from the pan-tilt zoom cameras 120 and/or data acquired from one or more laser scanners 130 (or in other examples, other scanners such as accelerometer, gyrometer etc.), in the station 100. Fine tuning commands may be sent remotely from the vehicle alignment unit 140 to the movable platform. Such movable platform arrangements are beneficial to the prime mover i.e. the vehicle 104 because such arrangements can reduce the time the prime mover driver needs to align the vehicle 104 at the preferred location. In another example, instead of the movable platform, a container transporter 104 (which is one type of the vehicle 104) may be configured to transport one or more containers on a track (which can be a railway track) that has a predetermined path to the station 100. In this case, the track is already aligned to the station 100 in a manner that one or more containers transported to the station 100 would require little or no alignment for coning or deconing of the transported one or more containers.

In the present example, the station 100 comprises a plurality of equipment control units 108a-108f configured to be placed in line lengthwise along the sides of the lane 170. In other examples, it is possible that the station 100 has only one of the equipment control units 1 08a-1 08f or another number of the equipment control units 1 08a-108f that is different from the number of the plurality of equipment control units 108a-108f. The equipment control units 108a, 108b and 108c are placed in line lengthwise along one side of the lane 170 and the equipment control units 108d, 108e and 108f are placed in line lengthwise along the other side of the lane 170. The equipment control units on each side of the lane may be approximately aligned to one another. Each of the one or more equipment control units 108a-108f comprises a robotic manipulator (not shown in Figure 1) for performing coning or deconing operation.

In one arrangement, each of the equipment control units 108a -180f may be placed on a movable platform. In such arrangement, after entering into the station 100, the vehicle 104 may not be required to align itself at the preferred parking position and orientation for coning or deconing of containers carried by the vehicle 104. Instead, each of the equipment control units 108a -108f may be configured to align itself around the vehicle 104 that is parked in the station 100. The maximum distance the movable platform can move may be set as the reach of the robotic manipulator or at a predetermined distance from an initial set up location. In the event that any of the equipment control units 108a -108f is not able to be aligned to a preferred distance from the vehicle while keeping a safe distance with the adjacent equipment control unit, an alert may be sent to a remote controller. Alternatively, the vehicle alignment unit 140 is configured to instruct the vehicle 104 to make further adjustments to align itself to the preferred parking position. There is an advantage to place the equipment control unit on such movable platform. The movable platform can be guided remotely, for instance, through TOS or the vehicle alignment unit that is communicatively coupled to TOS. With this movable platform, it is easier to deploy the equipment control unit into the station 100. In another arrangement, both the equipment control units 108a - 108f and the vehicle 104 can be aligned relative to each other. This can be done by placing or mounting the equipment control units 108a- 108f and the vehicle 104 to respective movable platforms.

Figure 21A illustrates an example of the movable platform described above that can be used to align movement along positions in forward or rearward directions d3 of a mounting plate 2102 for mounting a robotic manipulator of an equipment control unit (e.g. 108a of Figure 1). The alignment process may be controlled by taking in user input or automatically by taking input from a plurality of sensors (e.g. cameras, distance sensors, and the like). The reference numerals for elements in Figure 20 are re-used for the same elements found in Figure 21A. In Figure 21A, a movable platform 2100 comprises a conveyor belt 2030 forming an endless loop for conveying the mounting plate 2102 mounted thereon linearly to positions along a length of the conveyor belt 2030 so as to align the robotic manipulator mounted to the mounting plate 2102 for coning or deconing of one or more containers brought to a coning or deconing station. Similar to the movable platform 2000 of Figure 20, the conveyor belt 2030 in Figure 21A comprises a tensioner 2010 for tensioning the conveyor belt 2030 to ensure the conveyor belt 2030 is sufficiently taut for conveying the robotic manipulator residing thereon, a pair of drive wheels 2006 for driving movement of the conveyor belt 2030 and a plurality of rollers 2008 spaced apart to facilitate movement of the conveyor belt 2030 and to hold the weight of the robotic manipulator that is mounted to the conveyor belt 2030. Similarly, one or both of the drive wheels 2006 may be connected to one or more drivers, such as a motor or engine (not shown in Figure 20), that is configured to drive the forward or rearward movement of the conveyor belt 2030. The one or more drivers may be connected to a transponder (not shown in the Figures) for communicating with a vehicle alignment unit (e.g. 140 of Figure 1) or a respective equipment control unit (e.g. 108a-f of Figure 1) and/or station controller (e.g. 190 of Figure 1) that is or are configured to control the one or more drivers. The transponder may be a wireless transponder configured for wireless data communication. Unlike the case in Figure 20, the conveyor belt 2030 of Figure 21A does not require anti-slip rib stops 2004 of Figure 20 since, in the present example, the robotic manipulator is mounted to the conveyor belt 2030 and is not moved up the conveyor belt 2030 like the vehicle described in the example of Figure 20.

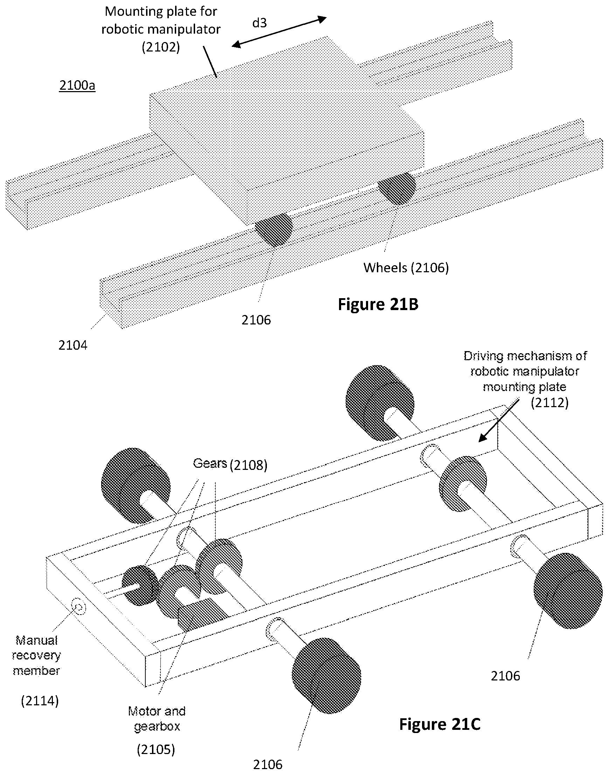

Figure 21B illustrates a movable platform 2100a that is an alternative to the movable platform 2100 of Figure 21A. The reference numeral for the mounting plate 2102 in Figure 20 is re-used for a similar mounting plate present in Figure 21A. The movable platform 2100a can be used to align movement of the mounting plate 2102 along positions in forward or rearward directions d3. The movable platform 2100a comprises of a plurality of wheels 2106 that are movable to convey the mounting plate 2102 along one or more tracks 2104. Although it is illustrated in Figure 21B that the mounting plate 2102 is placed on a pair of adjacent tracks 2104, it is appreciated that the mounting plate 2102 can also be arranged to move along a single track 2104. The track or tracks 2104 may be a part of a railway that has a predetermined path leading to a desired location for coning or deconing.

In the example of Figure 21B, there is no requirement to have the conveyor belt 2030 of Figure 20 and its driving mechanisms, as the mounting plate 2102 comprises a driving mechanism of its own. An example of such driving mechanism of the mounting plate 2102 is illustrated in Figure 21C. With reference to Figure 21C, the mounting plate 2102 may have a driving mechanism 2112 comprising a motor and gearbox 2105 for controlling a series of interconnected gears 2108 to move along the track 2104 and a manual recovery member 2114 for disengaging the gear if the driving mechanism 2112 is faulty. The motor and gearbox 2105 drive the gears and the plurality of wheels 2106 to move the mounting plate 2102 forward or rearward on the one or more tracks 2104. Each driving mechanism 2112 may comprise a transponder (not shown in the Figures) for communicating with a vehicle alignment unit (e.g. 140 of Figure 1) or a respective equipment control unit (e.g. 108a-f of Figure 1) or station controller (e.g. 190 of Figure 1) controlling the motor 2105. The transponder may be a wireless transponder configured for wireless data communication.

In another example, the mounting plate 2102 of Figures 21B and 21C may be configured as a platform for carrying one or more containers to be coned or deconed or a vehicle carrying one or more containers to be coned or deconed, and perform the alignment to facilitate the coning or deconing of the one or more containers that is described earlier for the example of Figure 20. In the case that the platform is for carrying one or more containers to be coned or deconed, the one or more containers may be placed on the platform using cranes. In the case that the platform is for carrying a vehicle, two ramps similar to the ramps 2002a and 2002b in Figure 20 may be placed adjacent to the platform to facilitate the vehicle to move up and down the platform like in the example of Figure 20.

It is appreciated that there may be more than one of the mounting plate 2102 present on the one or more tracks 2104 to enable alignment of one or more objects mounted or moved onto the one or more mounting plates 2102. The one or more objects can be one or more robotic manipulators, one or more containers, or one or more vehicles carrying one or more containers.

The movable platforms 2000, 2100, and 2100a of Figures 20, 21A and 21B respectively may be modified to adjust orientation as well.

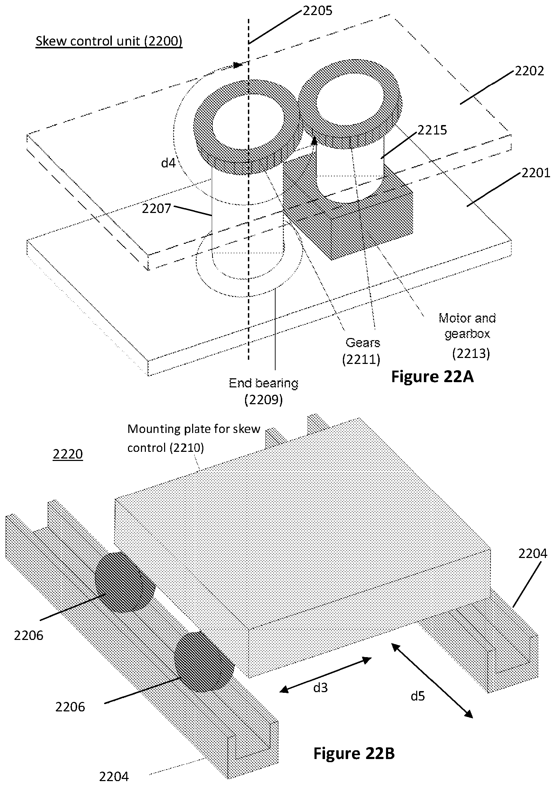

Figure 22A illustrates an example of a skew control unit 2200 that can be added to the movable platforms 2000, 2100, and 2100a of Figures 20, 21A and 21B respectively to enable them to adjust orientation as well. With reference to Figure 22A, there is present a bottom plate 2201 connected to an top plate 2202 through a shaft 2207 such that the shaft is disposed orthogonally with respect to the bottom plate 2201 and the top plate 2202. The bottom plate 2201 and the top plate 2202 are parallel to each other in the present example. The top plate 2202 is rotatable about a longitudinal axis 2205 of the shaft 2207 in two opposite rotational directions d4. In the present example, the shaft 2207 is fixed to the top plate 2202 but is rotatably coupled to the bottom plate 2201 via an end bearing 2209. A servo motor and gearbox 2213 are connected to the bottom plate 2201, wherein the servo motor is coupled to the gearbox 2213. The servo motor and gearbox 2213 drive a second shaft 2215 extending from the servo motor and gearbox 2213. Separate gears 2211 are provided on the shaft 2207 and the second shaft 2215. The second shaft is not in contact with the top plate 2202. During operation, the servo motor and gearbox 2213 rotates the second shaft 2215 and the gear 2211 arranged on the second shaft 2215 turns a corresponding gear 2211 arranged on the shaft 2207 to rotate the shaft 2207 about the longitudinal axis 2205. As the shaft 2207 is fixed to the top plate 2202, rotation of the shaft 2207 would result in rotation of the top plate 2202 along one of the two opposite rotational directions d4. The direction of rotation of the top plate 2202 is controlled by the direction of rotation of the servo motor. With reference to Figure 20, to enable orientation adjustment, the entire structure of the conveyor belt 2030 can be mounted to the top plate 2202 of the skew control unit 2200 of Figure 22A . With reference to Figure 21A, to enable orientation adjustment, the bottom plate 2201 of the skew control unit 2200 of Figure 22A can be mounted to the mounting plate 2102. Similarly, with reference to Figure 21B, to enable orientation adjustment, the bottom plate 2201 of the skew control unit 2200 of Figure 22A can be mounted to the mounting plate 2102. One or more containers, one or more robotic manipulators, or one or more vehicles carrying one or more containers can be moved or mounted to the top plate 2202 of the skew control unit 2200 and the orientation of the one or more containers, one or more robotic manipulators, or one or more vehicles carrying one or more containers can be adjusted by the skew control unit 2200 to facilitate coning or deconing.

The movable platforms 2000, 2100, and 2100a of Figures 20, 21A and 21B respectively may be modified to adjust both alignment along the directions of movement d3 of the movable platforms 2000, 2100, or 2100a in Figures 20, 21A or 21B respectively, and additionally adjust alignment along transverse directions orthogonal to the directions of movement d3. Figure 22B illustrates an example of a movable platform 2220 that can be configured to work with the movable platforms 2000, 2100, and 2100a of Figures 20, 21A and 21B respectively to enable alignment adjustment along transverse directions d5 orthogonal to the directions of movement d3 of the movable platforms 2000, 2100, or 2100a in Figures 20, 21A or 21B respectively. In the present example, the movable platform 2220 has a similar configuration as the movable platform 2100a of Figure 21B. The movable platform 2220 comprises a mounting plate 2210. The mounting plate 2210 comprises a plurality of wheels 2206 for moving the mounting plate 2210. The plurality of wheels 2206 move along a pair of tracks 2204. The mounting plate 2210 may be configured to be driven by the driving mechanism 2112 of the example of Figure 21C. Instead of moving in the directions of movement d3 of the movable platforms 2000, 2100, or 2100a in Figures 20, 21A or 21B respectively, the pair of tracks 2204 are orientated to enable the mounting plate 2210 to move along directions of movement d5 that is orthogonal to the directions of movement d3 of the movable platforms 2000, 2100, or 2100a in Figures 20, 21A or 21B respectively.

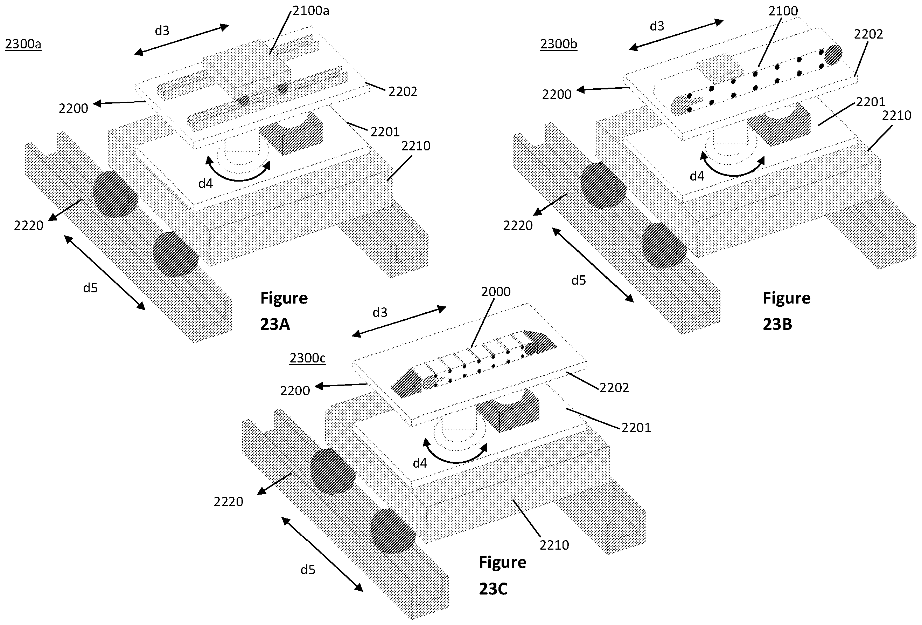

Figures 23A, 23B, and 23C show different combinations of the movable platform 2220 of Figure 22B, the movable platform 2000, 2100, or 2100a in Figures 20, 21A or 21B respectively, and the skew control unit 2200 of Figure 22A. Specifically, Figure 23A shows a combination 2300a comprising the movable platform 2100a of Figure 21B mounted on the top plate 2202 of the skew control unit 2200 of Figure 22A. The bottom plate 2201 of the skew control unit 2200 in the combination 2300a is mounted on the mounting plate 2210 of the movable platform 2220 of Figure 22B. Figure 23B shows a combination 2300b comprising the movable platform 2100 of Figure 21A mounted on the top plate 2202 of the skew control unit 2200 of Figure 22A. The bottom plate 2201 of the skew control unit 2200 in the combination 2300b is mounted on the mounting plate 2210 of the movable platform 2220 of Figure 22B. Figure 23C shows a combination 2300c comprising the movable platform 2000 of Figure 20 mounted on the top plate 2202 of the skew control unit 2200 of Figure 22B. The bottom plate 2201 of the skew control unit 2200 in the combination 2300c is mounted on the mounting plate 2210 of the movable platform 2220 of Figure 22B.

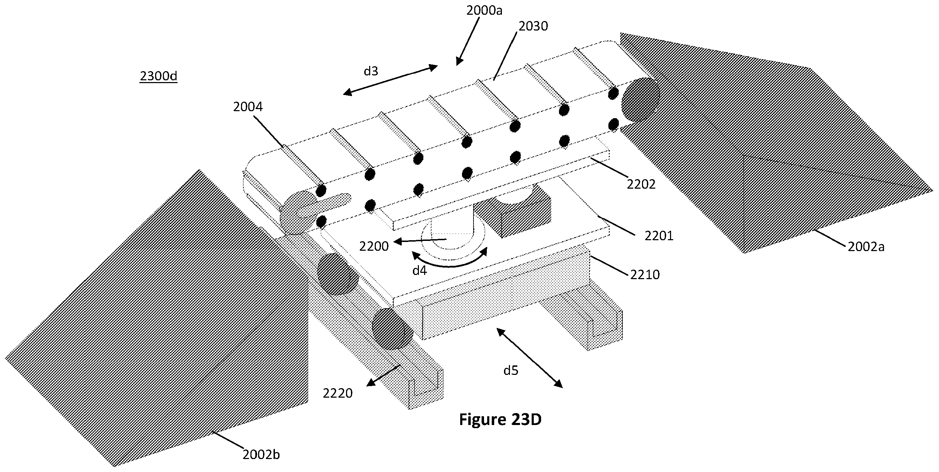

Figure 23D shows yet another combination 2300d that comprises a modified version 2000a of the movable platform 2000 of Figure 20, wherein the conveyor belt 2030 is mounted on the top plate 2202 of the skew control unit 2200 of Figure 22A. The bottom plate 2201 of the skew control unit 2200 is mounted on the mounting plate 2210 of the movable platform 2220 of Figure 22B. In the modified version 2000a, the inclined ramps 2002a and 2002b are not located on the top plate 2202. This is unlike the case of Figure 23C, wherein the inclined ramps 2002a and 2002b of the movable platform 2000 are mounted on the top plate 2202. The conveyor belt 2030 is configured to be larger than the conveyor belt 2030 of the combination 2300c of Figure 23C. The skew control unit 2200 and the movable platform 2220 are configured to be smaller than those of the combination 2300c. The inclined ramps 2002a and 2002b of the modified version 2000a are arranged on a ground adjacent to the conveyor belt 2030. The inclined ramps 2002a and 2002b of the modified version 2000a are arranged with a height that is substantially at a height of the larger conveyor belt 2030 to enable movement of vehicle up or down the conveyor belt 2030. The various combinations 2300a to 2300d described above enable alignment along directions d3 and d5 that are orthogonal to each other, and/or orientation via rotation of the skew control unit 2200.

The robotic manipulator described above may comprise an end effector. With reference to Figure 1, each of the equipment control units 108b and 108e is configured to install and/or remove connectors from the containers 102a and 102b. In one arrangement, the equipment control unit 108b and 108e may comprise two robotic manipulators to perform the coning or deconing operation at two corner castings (e.g. 110a and 110b) of the containers 102a and 102b simultaneously. In another arrangement, the equipment control unit 108b and 108e may comprise one robotic manipulator to perform the coning or deconing operation at a corner casting of the containers. In the arrangement with one robotic manipulator to perform the coning or deconing operation, the robotic manipulator of the equipment control unit 108b may be configured to install or remove the connector from the corner casting 110a of the container 102a before installing or removing the connector from the corner casting 110b of the container 102b.

"A location for performing a coning or deconing operation" in the present disclosure refers to a preferred parking position of a vehicle with a container to be coned or a container to be deconed before the coning and/or deconing operation is performed. "A location for retrieving a connector used for coning" or "a location for receiving a connector obtained from deconing" in the present disclosure refers to a place at a sorting and storage device for the robotic manipulator to receive a connector to be handled or to return a connector for storing respectively. Details of the sorting and storage device would be discussed later. "A location for a dispensing mechanism to dispense a connector" in the present disclosure refers to a place where a connector is being arranged to drop out of a holder after a tilting action by the dispensing mechanism of the sorting and storage device. Details of the dispensing operation used to discharge a connector from a holder would be discussed later. "A location for loading a connector" in the present disclosure refers to a place where a connector is placed into a holder by the sorting device. In one arrangement, the location for loading a connector is typically opposite of the location for retrieving a connector used for coning and the location for receiving a connector obtained from deconing.

In robotics, an end effector is commonly referred as a device or tool that is connected to one end of a robot arm where handling operations take place. The end effector is typically the part of the robot that interacts with the environment.

Each robotic manipulator in each of the one or more equipment control units 108a-108f has a robotic arm. The robotic arm may be configured to cooperate with one or more end effectors to remove or install the connector from the corner casting of the container.

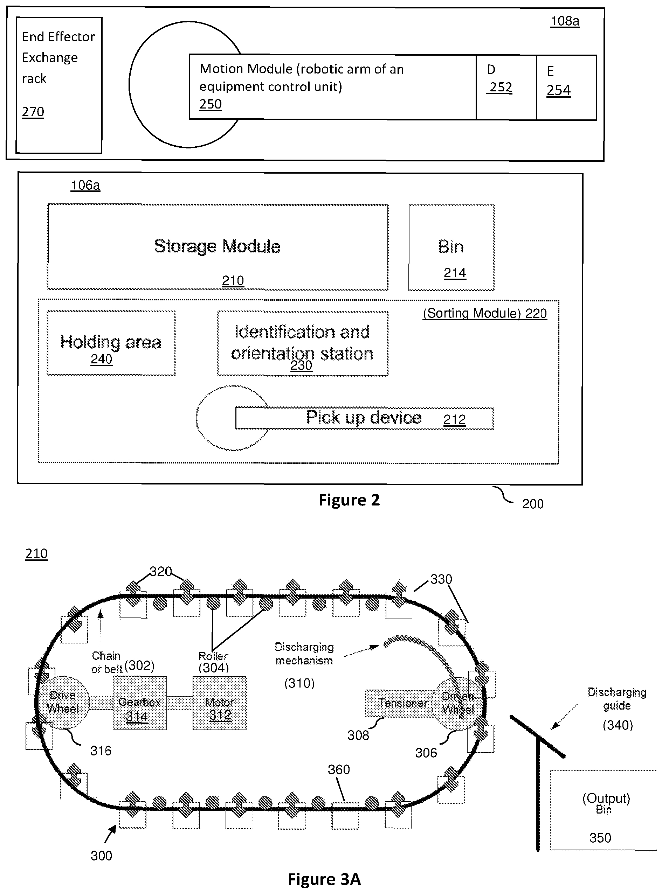

With reference to Figures 1 and 2, the station controller 190 may be configured to instruct change of an appropriate end effector 254 of a robotic arm 250 to match the type of connector to be handled during coning or deconing after a determination of a change of the end effector is required. The determination of the change of the end effector may be performed by the station controller 190 or a processor residing at each of the one or more equipment control units 108a-108f using information transmitted from TOS. If a change of the end effector is required, the robotic manipulator is configured to:
- retrieve information about a location of a target end effector 254 at the exchange store 270;
- instruct the robot manipulator 250 to disengage an existing end effector mounted on the robotic manipulator 250 at a predetermined location in the exchange store; and
- move to the location of the target end effector to engage the target end effector 254.

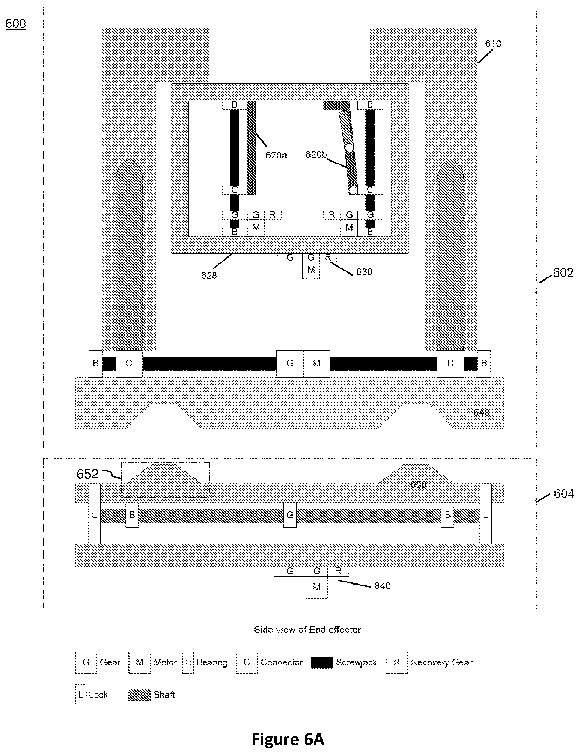

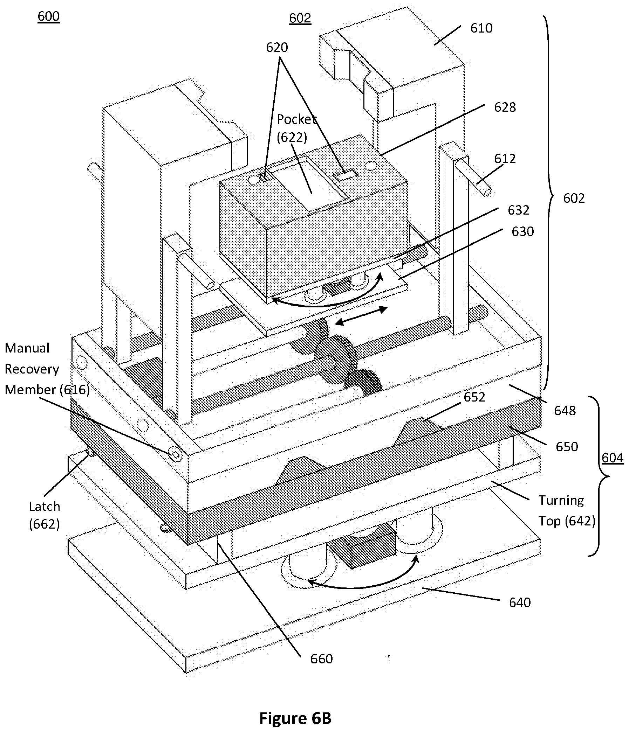

Figures 6A and 6B illustrate one example of the robotics present in each of the one or more equipment control units 108a-108f of Figure 1. There is present an end effector 600 that is connected to the end of a robotic arm. End effector 600 comprises a base 604 for matching with one or more tops 602. Each top 602 is configured to handle a specific type of connector during container coning or deconing. This means that the end effector 600 is designed with a view to cooperate with various interchangeable tops 602 to suit different types of connectors to be handled in container handling operations. The tops 602 may be attached to the base 604 by way of magnetic means. For instance, the base 604 of the end effector 600 may have transitory electromagnetic strips. Each top 602 may have permanent magnets. For disengagement of an existing top 602 attached to the base 604 of the end effector 600, the base 604 of the end effector 600 may be configured such that polarities of the transitory electromagnetic strips become the same as the polarities of the permanent magnets of the existing attached top 602. For engagement of the end effector 600 to a target top 602, the base 604 of the end effector 600 may be configured such that polarities of the transitory electromagnetic strips become different from the polarities of the permanent magnets of the target top 602. The engagement and disengagement process between a top 602 and the base 604 of the end effector 600 may be assisted by visioning means (or imaging techniques). There may be visual guides/indicators present in the robotic arm to facilitate the operation of the visioning means (or imaging techniques).

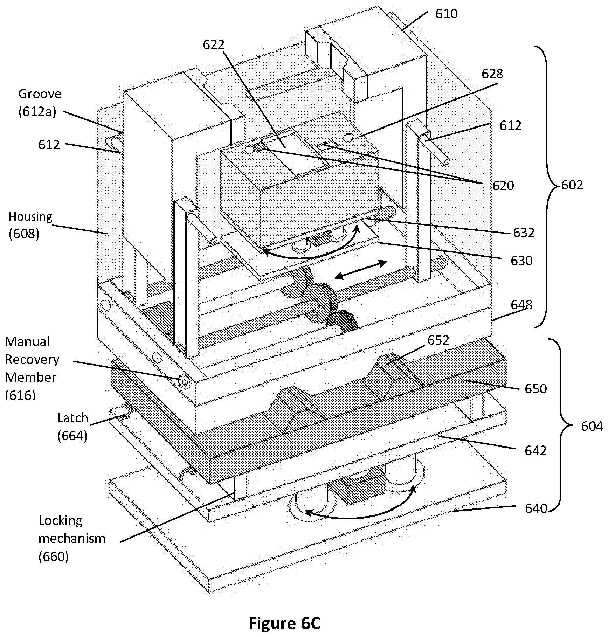

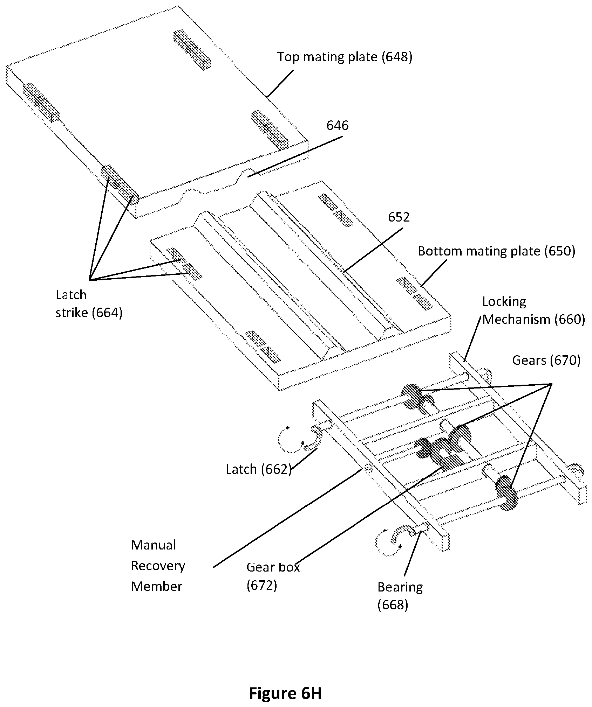

In another arrangement, the top 602 may be attached to the base 604 by an electronically controlled lock. Figure 6H illustrates a top view of an electronic locking mechanism between the base 604 of the end effector 600 and the top 602 to secure the two parts together. The base 604 comprises of an electronically controlled locking mechanism 660 that controls a pair of latches 662 that are configured to engage with a corresponding set of latch strikes 664. Once the latches 662 are fully set into the latch strikes 664, the base 604 and top 602 are fully engaged. Figures 6B and 6C show the top 602 in respective engaged and disengaged configurations with the base 604.

For instance, and referring to Figure 2, after determining that a change of the end effector is required, a robotic manipulator 250 of an equipment control unit (e.g. any one of 108a - 108f of Figure 1) may be configured to retrieve an appropriate end effector 254 from an end effector exchange rack 270. Each robotic manipulator 250 may be equipped with a visioning unit 252 or detection means for measuring and calculating a possibility of collision with a corner casting (not shown in Figure 2). The robotic manipulator may be equipped with an impact sensor (not illustrated in Figures) that is configured to detect an impact of the end effector with an obstacle.

With reference to Figures 6A to 6H, an interchangeable end effector 600 comprises of a top portion 602 and a bottom portion 604 that are configured to be fitted with each other and operatively connected via a locking mechanism 660. The bottom portion 604 is interchanged with a plurality of top portions 602 that are being housed at the end effector exchange rack 270 (of Figure 2). Each top portion 602 has a top mating plate 648 that is configured to fit with a corresponding bottom mating plate 650 of the bottom portion 604. For instance, as shown in Figure 6H, the bottom mating plate 650 further comprises one or more ridges 652 arranged between two opposing ends and are shaped to fit within corresponding one or more recesses 646 of the top mating plate 648. Preferably, four pairs of latch strikes 664 are arranged at four corners of the top mating plate and the bottom mating plate. In the example as shown in Figure 6H, each latch 662 is arranged to be engaged with each respective pair of latch strikes 664. In such arrangement, the locking mechanism 660 is arranged to be disposed between a turning top 642 of a rotation portion 640 and a bottom mating plate 650 of the base 604.

An example of each top 602 may comprise of a clamping portion 610, a pushing portion 620 and/or a twisting portion 630, while the base 604 of the end effector 600 comprises the rotation portion 640. In one example, there can be a top 602 that comprises only the twisting portion 630 and clamping portion 610. In another example, there can be an end effector 602 that comprises only the pushing portion 620 and clamping portion 610.

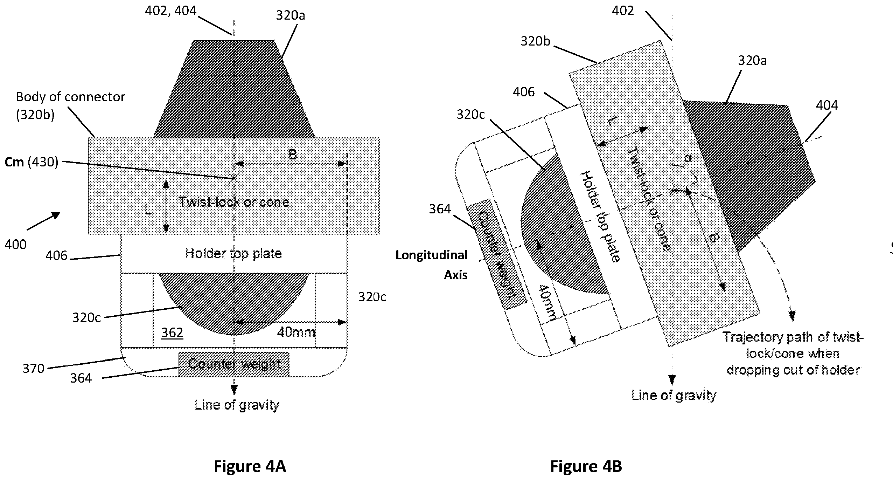

The clamping portion 610 of the top 602 is configured for clamping to a body of a connector (see 320b of Figure 4A). The clamping portion 610 is configured to have protrusions 612 that will slide within a groove 612a of a housing 608 of the top 602 such that the clamps of the clamping portion 610 can slide inwards to clamp a connector or slide outwards to release a connector. The clamping portion 610 may be equipped with a sensor (e.g. proximity sensor or infrared sensor) to detect the presence of the connector. This means that if the connector being handled has been dropped during transfer (movement to/from corner casting and to/from storage device respectively), the station controller 190 can be notified of the fault and remote exception handling can be done to address the fault (e.g. another connector is arranged to be retrieved to complete a coning job).

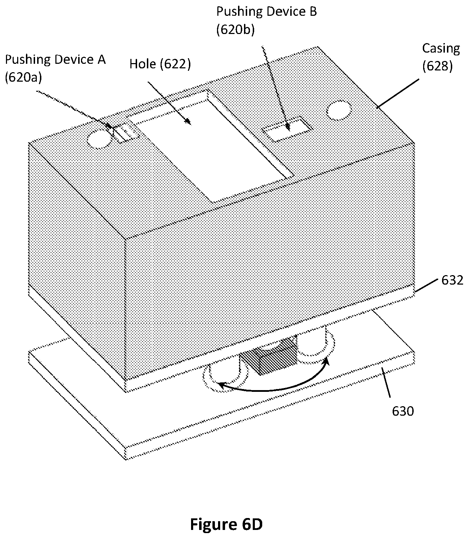

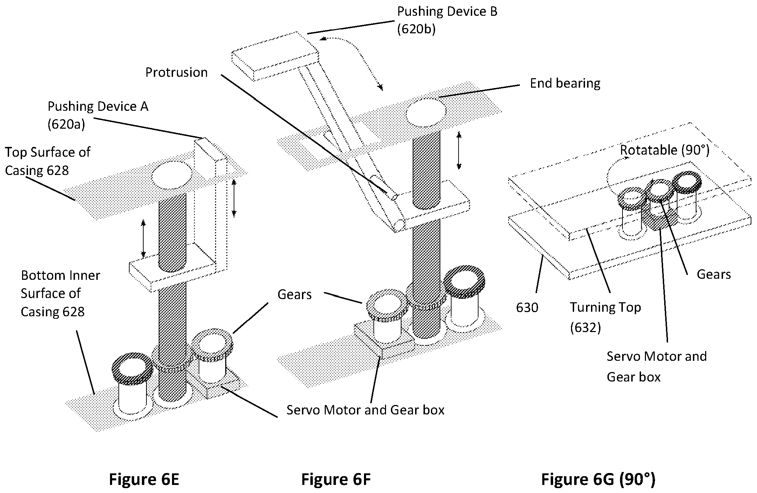

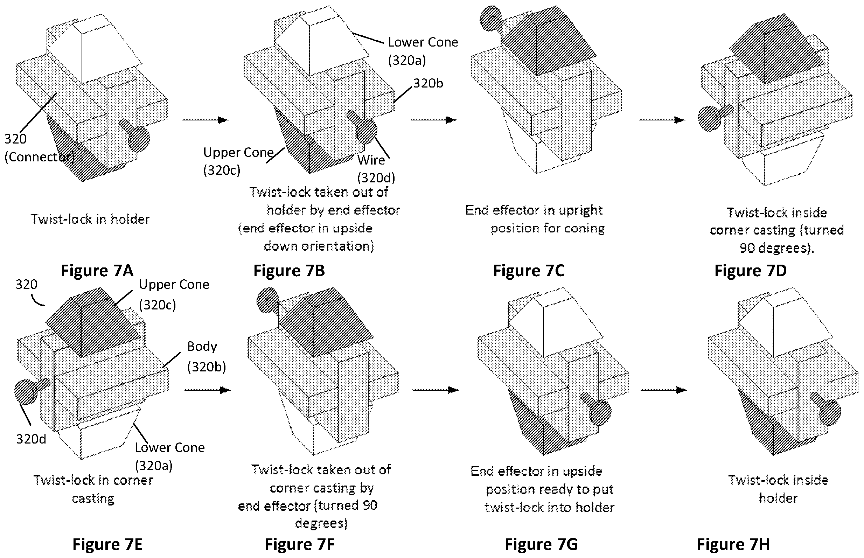

The twisting portion 630 is configured to turn a movable part of some types of connectors while the pushing portion 620 is configured to push another movable part of some types of connectors during installation/removal of a connector to/from the container. Referring to Figures 6D to 6G, the twisting portion 630 has a twisting top 632 that is mounted together with a casing 628 that houses one or more pushing devices (e.g. 620a and 620b). The casing 628 comprises of a pocket 622 for allowing a portion of the connector to sit in. It should be appreciated that a body of a connector (see 320b of Figure 4A) and an upper/lower cone of the connector (see 320c/320a of Figure 4A) remains exposed when the respective lower/upper cone portion of the connector is arranged to sit in the pocket 622 (see Figures 7A to 7H). The pocket 622 allows the lower cone portion of the connector to be rotated to a specific angle during coning or deconing operations to secure or remove the connector from the corner casting respectively. Each pushing device 620a and 620b and the twisting portion 630 are operable through gears and servo motor. Figure 6D shows the pushing devices 620a and 620b in retracted configurations, whereas Figures 6E and 6F show the pushing devices 620a and 620b in extended configurations for pushing a movable part of a connector. The pushing device of each pushing portion 620a and 620b can be configured to move linearly, pivot or to move linearly and pivot upon travelling a maximum linear movement. For instance, the pushing device 620b can move linearly and pivot upon travelling a maximum linear movement. The pushing device 620a can move linearly.

Figure 6G shows the twisting portion 630 before twisting a movable part of a connector. The twisting portion is typically configured to rotate by a maximum of 90° in order to avoid causing excess mechanical strain to the connector. However, any predetermined angles can be envisaged. The twisting portion 630 may be configured to detect if a connector is jammed to the corner casting during coning and deconing by monitoring a torque control parameter of the twisting portion 630. The rotation portion 640 of the base 604 (as illustrated in Figures 6B and 6C) is configured to position the top 602 for more effective installation or removal of a connector. The operation of the twisting portion 630 is similar to the operation of the rotation portion 640. It should be appreciated that the rotational movement of a twisting portion is more restricted than the rotating portion of the base 604 of the end effector 600. The rotational movement is configured in a manner such that a portion of the connector would not over-turn.

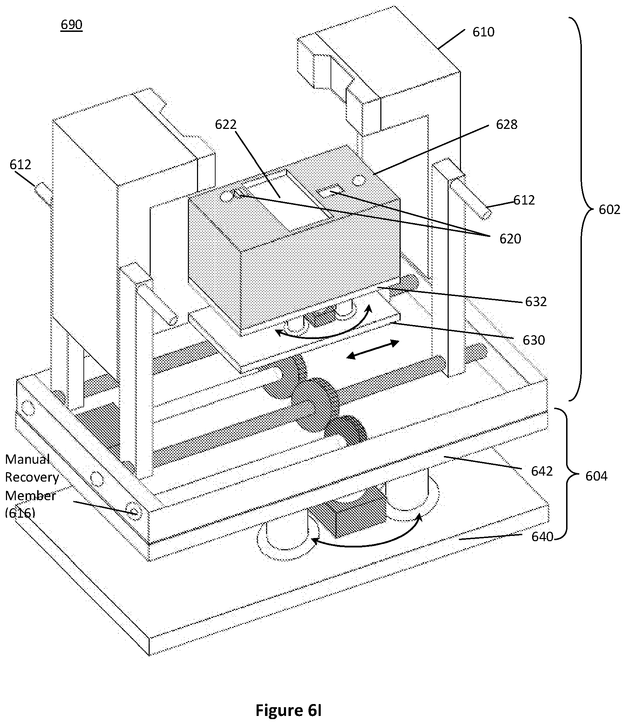

Each top 602 may further comprise a manual recovery member 666 for use during repair and recovery. By activating the manual recovery member 666 of a motion unit in the top 602, the top 602 may be released from the base 604. Advantageously, this allows for manual intervention if the robotic arm 600 does not successfully release an attached end effector 602 during change of the end effector 602. Optionally, the clamping portion 610, the twisting portion 630, the pushing portion 620, the rotation portion 640, may each be arranged with a manual recovery member (not shown in figures) to release a connector from itself during repair and recovery. For instance, the clamping portion 610 comprises a manual recovery member 616 to release the clamping action of a connector during repair and recovery. The clamping portion 610, the twisting portion 630, the pushing portion 620, and the rotation portion 640, may each or all of them be electrically powered or pneumatically powered. In a preferred arrangement, all the clamping portion 610, the twisting portion 630, the pushing portion 620, and the rotation portion 640 are electrically powered. The electromechanical propulsion provides fast responses for continuous operations. The electromechanical propulsion also ensures easier troubleshooting and/or repair. Although a change of end effector is described above, it should be appreciated that in another example of a robotic manipulator of the present disclosure, the base 604 of the end effector 600 may be configured to work with a universal top that can handle all types of connectors without need for changing the top 602. In another arrangement, and as illustrated in Figure 6I, the universal end effector 690 can be pre-manufactured as an integral unit. In such an arrangement, the locking means 660, the top mating plate 648 and the bottom mating plate 650 would not be required. The top 602 of the universal end effector 690 is directly mounted or integrated with the base 604 of the universal end effector 690.

Referring back to Figure 1, the one or more equipment control units 108a-108f may each be configured to terminate coning or deconing and retract a robotic manipulator when a motion sensor (e.g. use of laser scanner 130) installed at the station 100 detects movement of a vehicle 104 carrying one or more containers 102a or 102b being coned or deconed or movement of the one or more containers 102a or 102b on the vehicle 104 that is being coned or deconed during the coning and/or deconing process. The motion sensor may be a sensor that is capable of calculating displacement or acceleration of a fixed point on the container 102a or 102b, or a fixed point on the vehicle 104 using any of known techniques such as, infrared detection, laser detection or gyrometer detection.

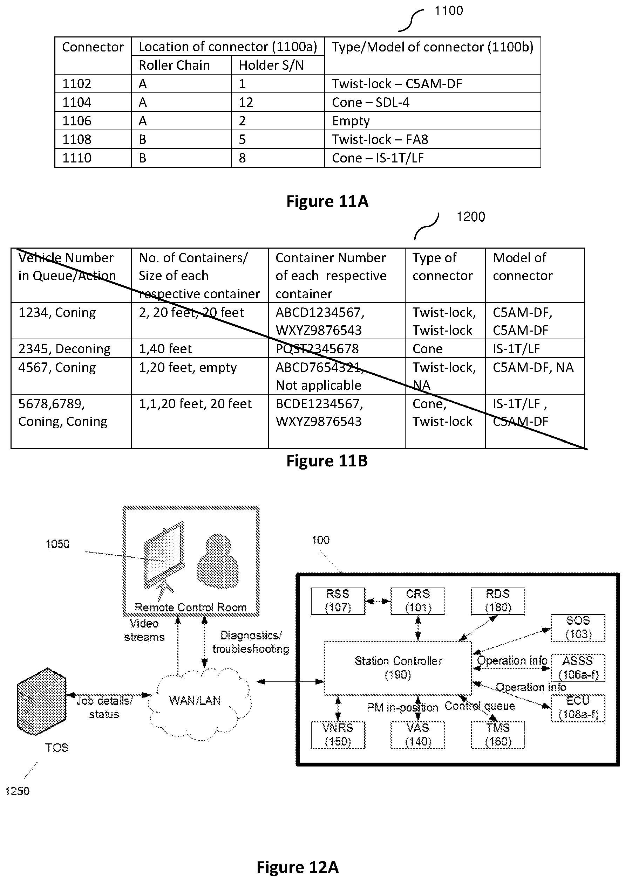

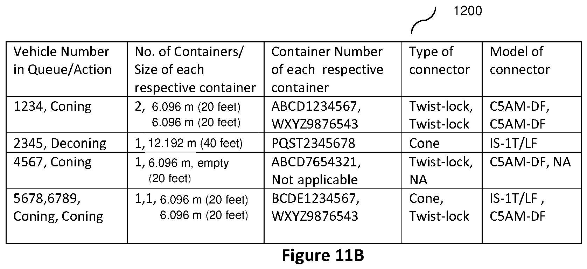

The station controller 190 is configured to verify a type of operation to be carried out in the station 100 and its related parameters (i.e. operation information) based on data relating to the vehicle number of the vehicle 104 and/or data relating to the container identification number of the one or more containers 102a and 102b and operation information provided by a central server managing all operations within the port facility to the station controller 190. In the present disclosure, this central server is known as "Terminal Operating System" (TOS) (e.g. 1250 of Figure 12A). The data relating to the vehicle number of the vehicle 104 and/or the data relating to the container identification number of the one or more containers 102a and 102b may be captured by the vehicle number recognition unit 150 and/or container recognition unit 101 respectively. The data is subsequently analysed by the station controller 190 to work out the type of operation. In one arrangement to work out the type of operation, the data captured by the recognition units is compared with operation information retrieved from a memory accessible to the station controller 190. The operation information indicates whether each container has to be coned or deconed. An example of the operation information being stored at the TOS and accessible by the station controller 190 is illustrated in Figure 11B.

With reference to Figure 11B, data of the operation information may be structured according to a list 1200. The list 1200 records:
- vehicle numbers of vehicles in a queue for coning or deconing at the station 100,
- an action (i.e. coning or deconing) to be conducted for each listed vehicle ,
- number of containers each vehicle is transporting,
- the size of each container each vehicle is transporting.
- container number of each container transported by each vehicle,
- type of connectors to be handled for each container, and
- model of the connector to enable selection of the type of an end effector of a robotic manipulator that is compatible with the type of connector to be handled for one action listed in the list.

Figure 11B illustrates 3 example situations as follows.

The first example situation (i.e. first row of the list 1200) is where one or more equipment control units (e.g. 108a - 108f of Figure 1) in a station (e.g. 100 in Figure 1) are configured to perform a coning operation for a vehicle containing two 6.096 m (20-feet) containers. The vehicle has a vehicle number "1234". Respective robotic manipulators of the one or more equipment control units each use a "C5AM-DF" type end effector to install twist-locks to the two containers.

The second example situation (i.e. second row of the list 1200) is where one or more equipment control units (e.g. 108a - 108f of Figure 1) in a station (e.g. 100 in Figure 1) are configured to perform a deconing operation for a vehicle containing one 12.192 m (40-feet) container. The vehicle has a vehicle number "2345". Respective robotic manipulators of the one or more equipment control units each use a "IS-1T/LF" type end effector to remove cones from the two containers.

The third example situation (i.e. third row of the list 1200) is where there is a detection, for instance, through the plurality of cameras 120 of the container identification unit described with reference to Figure 1, that no connectors are to be handled. For example, there is present a vehicle with a vehicle number "4567". The vehicle is configured to carry two 6.096 m (20-feet) containers on its trailer but the vehicle is presently only carrying one 20-feet container. The vehicle enters a station (e.g. 100 in Figure 1) to perform coning for the only container that it carries. Based on the data "1, 6.096 m (20 feet), empty", the station controller 190 is notified that the vehicle is carrying one container at the front of its trailer while the back of its trailer is empty. Thereafter, the station controller 190 communicates with the one or more equipment control units designated to carry out coning action for the single container. The container being coned has an identification number "ABCD7654321" and the connectors for the coning are of "twist-lock" type. Correspondingly, the appropriate end effector for coning the container is of "C5AM-DF" type. In this case, container identification number for the empty container space in the trailer of the vehicle is indicated as "Not applicable". The type of connector to be managed for the empty container space is indicated as "NA"(not applicable) and the model type for the empty container space is indicated as "NA" to indicate that no change of any end effector mounted on robotic manipulators of the one or more equipment control units is required.

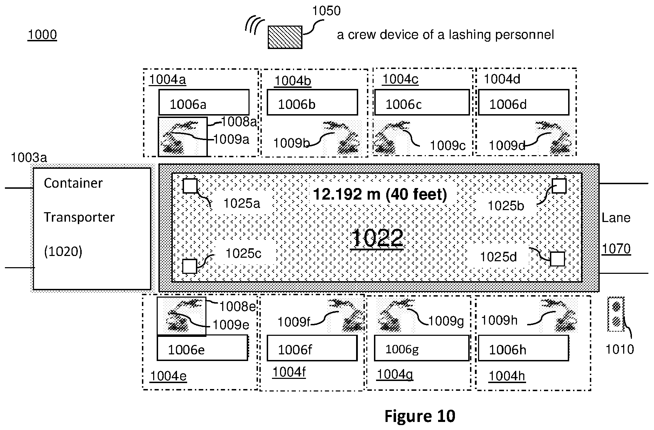

The fourth example situation (i.e. fourth row of the list 1200) is where the station is configured to allow two smaller automated guided vehicles 104 to enter the station, wherein each vehicle 104 is arranged to carry a single 6.096 m (20-feet) container. For example, there are present two vehicles with respective vehicle number "5678" and "6789". The two vehicles in line are signalled to enter a station (e.g. 1000 in Figure 10) consecutively in order to perform coning for the two containers simultaneously. Based on the data "1, 1, 6.096 m (20 feet), 6.096 m (20 feet)", the station controller 190 is notified that two vehicles, each carrying one container, have entered the station 100 for coning operation. Thereafter, the station controller 190 communicates with the respective equipment control units (e.g. 1008a - 1008f of Figure 10) designated to carry out coning action for the two containers. The connectors for the coning operation of a first container having an identification number "BCDE1234567" and a second container having an identification number "WXYZ9876543" are identified to be of "cone" type and "twist-lock" type respectively. Correspondingly, the appropriate end effector for coning the first and the second container is of "IS-1T/LF" type and "C5AM-DF" type respectively. In this case, the robotic manipulators of the equipment control units are equipped with different end effectors. For instance, and referring to Figure 10, the substations 1004a, 1004b, 1004e and 1004f are equipped with end effectors of "IS-1T/LF" type and the substations 1004c, 1004d, 1004g and 1004h are equipped with end effectors of "C5AM-DF" type.

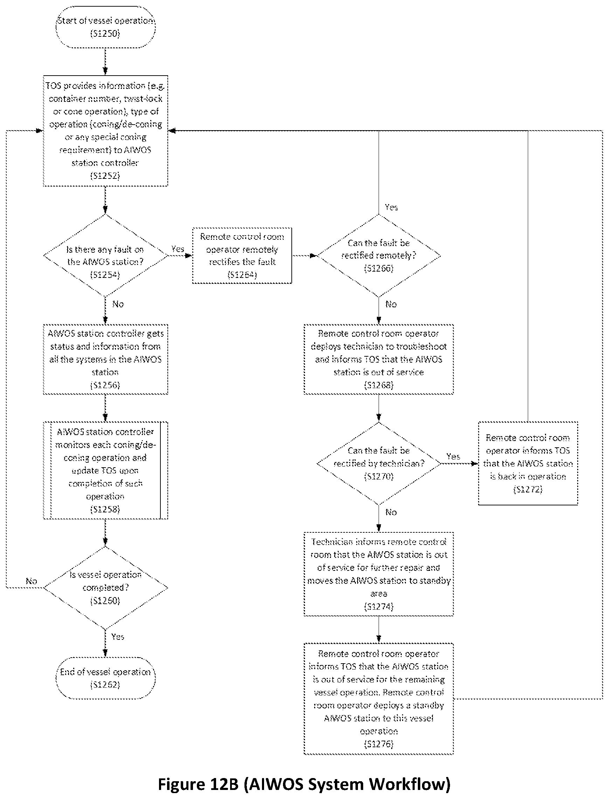

Referring back to Figure 1, the station controller 190 may be configured to instruct one or more devices, including sensors and/or the one or more cameras 120, to verify information such as a number of containers on a vehicle or container transporter 104 and the size of the one or more containers 102a and/or 102b. Thereafter, data of such information can be used to determine location data of corner castings of one or more containers to be coned or deconed. In the example as shown in Figure 1, the station controller 190 can verify job information from the server (i.e. TOS), based on the vehicle number (i.e. PM 1234) obtained through the vehicle recognition number unit 150. The job information may include an operation (i.e. coning or deconing) to be performed on the containers 102a and 102b on the vehicle 104 and the related operation information. In the present example, the related operation information is similar to the operation information 1200 of Figure 11B and shall be denoted by the same reference numeral. The station controller 190 may also be configured to obtain container identifiers of the containers 102a and 102b from the server and verify the container identifiers from the server with container identification numbers of the containers 102a and 102b obtained through the container recognition unit. The operation information 1200 in Figure 12 may, in addition to the data described in Figure 11B, further comprise data on number of robotic manipulators (of the equipment control units 108a - 108f) available to perform the coning or deconing operation and/or which of the robotic manipulators should be used. For the sake of simplicity, the number of equipment control units available at the station 100 and/or the distance between each robotic manipulator and each corner casting are not illustrated in Figure 11B.

Provided that the vehicle 104 is parked and aligned properly with the help of the vehicle alignment unit 140, each robotic manipulator is configured to locate a corner casting using imaging techniques on captured images of surrounding area of the robotic manipulator. Each robotic manipulator may be configured to work with an imaging unit 122 and/or a laser scanner 130 and/or a pan-tilt zoom camera 120 for the purpose of locating corner casting. In the present example, there are several imaging units 122, and/or several cameras 120 (i.e. all blocks indicated with "C" in Figure 1) and/or several laser scanners 130 (i.e. all blocks indicated with "L" in Figure 1). However, for convenience, only one imaging unit 122 is marked out in Figure 1 and only one laser scanner is marked with the reference numeral 130 in Figure 1.

In one arrangement, an estimated position of a container is first obtained using the laser scanners 130. Subsequently, the station controller 190 determines and/or predicts each movement trajectory of each robotic manipulator (e.g. 1009a - 1009h of Figure 10) to its designated corner casting on the container to be coned or deconed. If there is a possibility of collision between the robotic manipulator and an obstacle, and the vehicle 104 cannot be aligned to avoid collision, the station controller 190 will flag a fault. Alternatively, the robotic manipulator may proceed with the coning/deconing job, but use an imaging unit located near an end effector 600 to analyse if the probability of collision is high. It should be appreciated the determination on the probability of collision may be limited by the field of view of the imaging unit. "Collision" used herein refers to a detection of obstacle in the movement path of the robotic manipulator and/or a detection of impact on a part of the robotic manipulator, particularly the end effector.

The imaging unit 122 may comprise one or more cameras and an image processor for processing and analysing images captured by the one or more cameras. In one arrangement, the imaging unit 122 of the robotic manipulator (represented as the visioning unit 252 of Figure 2) may be placed beside the end effector or on the robotic manipulator to assist in the identification of the location of a corner casting and/or a position of a connector. The imaging unit 122 of the robotic manipulator can be configured to identify the type of connector on the corner casting to verify that the appropriate connector as identified based on retrieved data of the operation information 1200 is correct and the identification result is used to change the end effector automatically if a wrong type of end effector is currently attached to the robotic manipulator. The imaging unit 122 of the robotic manipulator may also be configured to detect a compartment position storing a target end effector in an exchange store (e.g. the exchange store 270 of Figure 2).

The plurality of cameras 120 in the station may also be configured to assess the container to be coned or deconed for damages and/or to detect a position of a door of the container. The detected position of the door and any physical condition (e.g. any damage) corresponding to the container is transmitted to the server (i.e. TOS) for monitoring and/or further processing. For instance, images captured by the plurality of cameras 120 can be compared with a set of reference images, and differences between the captured images and the reference images can be indicative of damages in the container.

Each of the one or more equipment control units 108a-108f is configured to communicate with a respective one of a plurality of storage and sorting devices 106a-106f. Each of the storage and sorting devices 106a-106f is configured for holding and delivering container connectors to each of the equipment control units 108a-108f respectively for container coning and/or deconing. In the present disclosure, the term "sub-station" is used to refer to a combination of each of the one or more equipment control units 108a-108f and each respective one of the plurality of storage and sorting devices 106a-106f. Details of each of the storage and sorting devices 106a-106f will be described later.

Figure 10 illustrates an example of a station 1000 similar to the station 100 of Figure 1. Similar to station 100, there is a center lane or road 1070 between two rows of substations. In Figure 10, a vehicle 1020 carrying a container 1022 is parked in the lane 1070. The container 1022 has four corner castings 1025a - 1025d at which coning or deconing is performed. The first row comprises substations 1004a, 1004b, 1004c and 1004d, placed in line lengthwise along one side of the lane 1070. The second row comprises substations 1004e, 1004f, 1004g and 1004h placed in line lengthwise along the other side of the lane 1234. The substation 1004a comprises of an equipment control unit 1008a having a robotic manipulator 1009a and a storage and sorting device 1006a. Likewise, the substation 1004e comprises of an equipment control unit 1008e having a robotic manipulator 1009e and a storage and sorting device 1006e. For convenience, not all equipment control units are indicated with reference numerals in Figure 10.

Although Figure 10 shows more than two substations, it should be appreciated that the station 1000 may comprise only two substations (e.g. 1004a and 1004e) residing along the opposing sides of the lane 1070 to perform coning or deconing of the container 1022 on the vehicle 1020. In the case of only two substations, the substations 1004a and 1004e can be configured to perform coning or deconing on the respective corner castings 1025a and 1025c of the container 1022, before a station controller (similar to the station controller 190 of Figure 1 and not illustrated in Figure 10) instructs the vehicle 1020 or notify a driver of the vehicle 1020 to move the vehicle forward for the substations 1004a and 1004e to perform coning or deconing on the other two corner castings 1025b and 1025d of the container 1022.

For most optimum efficiency of a station, the station 1000 may comprise eight equipment control units 1008a - 1008h as shown in Figure 10 distributed equally along the two opposing sides of the lane 1070. In the present example, the equipment control units 1008a, 1008b, 1008c and 1008d are placed in line lengthwise along one side of the lane 1070. The equipment control units 1008e, 1008f, 1008g and 1008h are placed in line lengthwise along the other side of the lane 1070. The arrangement of the equipment control units 1008a - 1008h in the present example enables the station 1000 to receive two smaller containers (e.g. of 6.096 m (20 feet) each) placed adjacent to each other on a vehicle. Each robotic manipulator of the respective equipment control units 1008a - 1008h is configured to install or remove only one connector. This arrangement reduces cycle time at the port facility.

With eight equipment control units 1008a - 1008h, in the case of one large container (e.g. 12.192 m (40 Feet)), the equipment control units in operation at the respective four corners of the container are 1008a, 1008e, 1008d and 1008h. In the case of two small containers (e.g. 6.096 m (20 Feet)), all the eight equipment control units 1008a -1008h are in operation at the respective eight corners of the two containers. Advantageously, all the robotic manipulators of the equipment control units 1008a-1008f may be activated to install or remove connectors from all the corner castings of the two containers simultaneously.

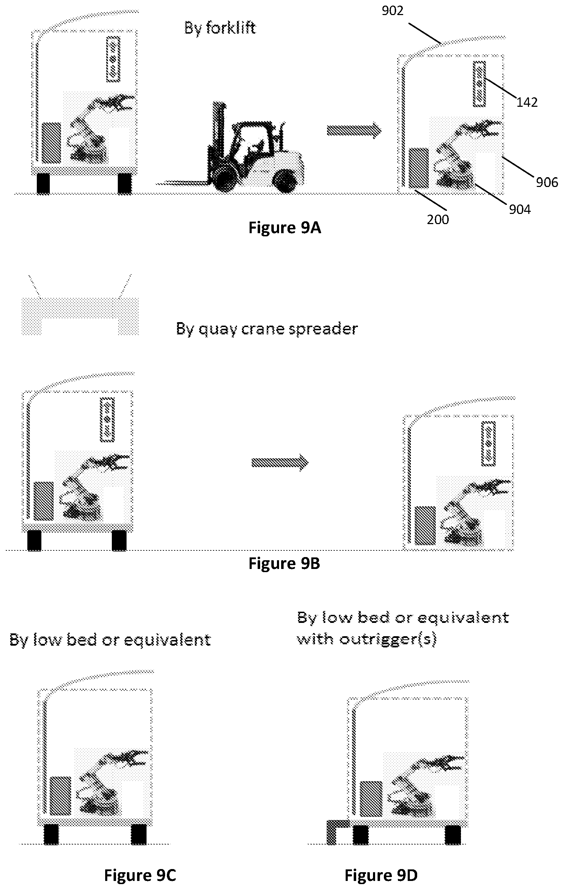

Figures 9A to 9D shows four different modes of transporting a substation 906 (e.g. 1004a or 1004e of Figure 10) or a plurality of substations mounted on a platform in the port for deployment according to an example of the present disclosure. In Figures 9A and 9B, if more substations are to be included to a station to enhance work efficiency or replace a faulty substation, the substation can be transported by a forklift or a quay crane spreader to the station. Each substation can be fitted with an energy source for providing power to the substation. The energy source may be a solar panel or a portable generator or one or more rechargeable batteries. Each substation may be fitted with a retractable shelter 902 for sheltering one or more containers (e.g. 102a and 102b of Figure 1, 1022 of Figure 10) from environmental conditions. The retractable shelter 902 is controlled by a shelter system 103 (illustrated in Figure 1) in communication with the station controller 190. The retractable shelter 902 may be triggered to extend to shelter the one or more containers by receiving a signal from a server (e.g. TOS) or from a station controller (e.g. 190 of Figure 1). In one arrangement, the retractable shelter 902 is configured to operate with a weather sensor (e.g. rain detector, not illustrated in Figures) disposed on an external surface of the retractable shelter device 902 such that the retractable shelter 902 is extended according to an input from the weather sensor. It should be appreciated that the retractable shelter is wide enough to cover an equipment control unit (e.g. 108a of Figure 1) comprising a robotic manipulator 904, an storage and sorting device 200 and an vehicle alignment unit 142 and/or all other units that have to be sheltered and that are required for the completion of a coning and or deconing operation.

### Storage and sorting device

Figure 2 illustrates a storage and sorting device 200 comprising a storage module 210 and a sorter 220. The storage and sorting device 200 is an example of each of the storage and sorting devices 106a-106f in Figure 1. The storage module 210 may be arranged as a separate module from the sorter 220 and the storage module 210 may operate independently from the operation of the sorter 220. The storage and sorting device 200 may be arranged adjacent to an equipment control unit (e.g. 108a -108f in Figure1) in order to facilitate the retrieval of connectors for coning or the storing of connectors obtained from deconing.

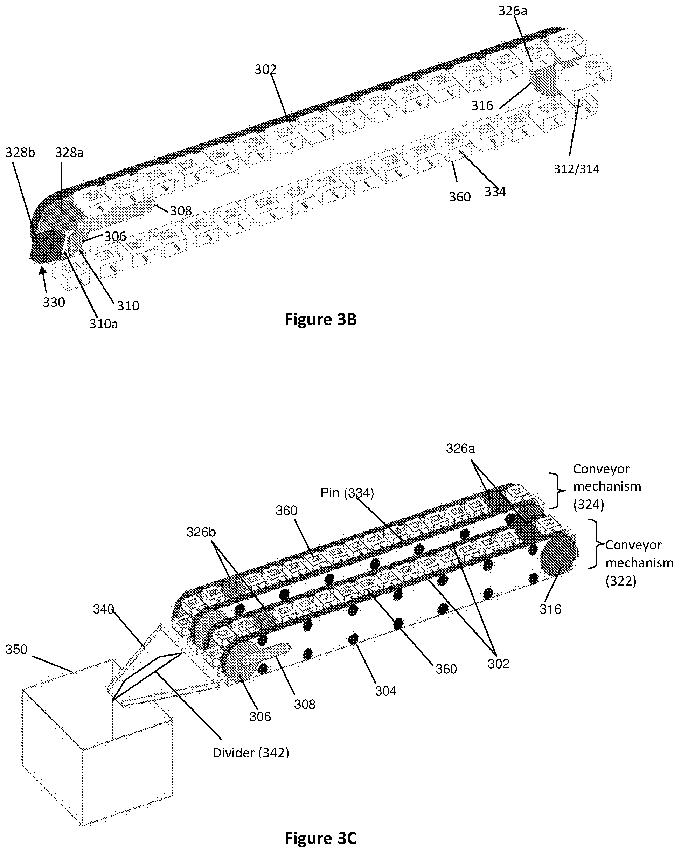

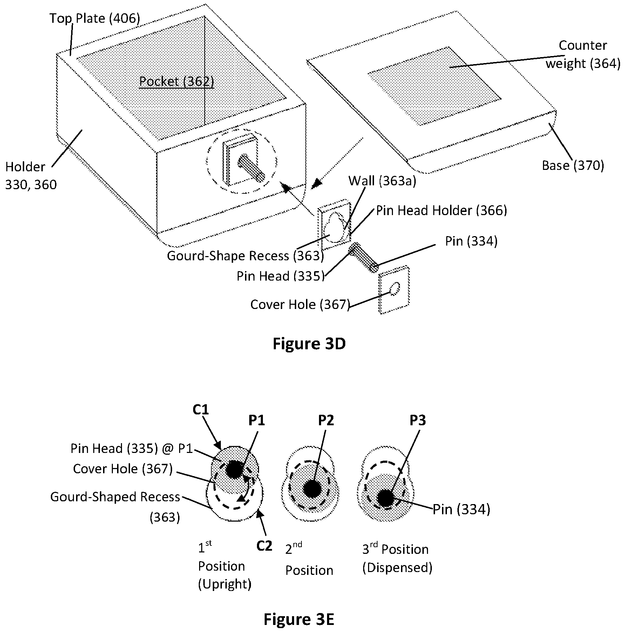

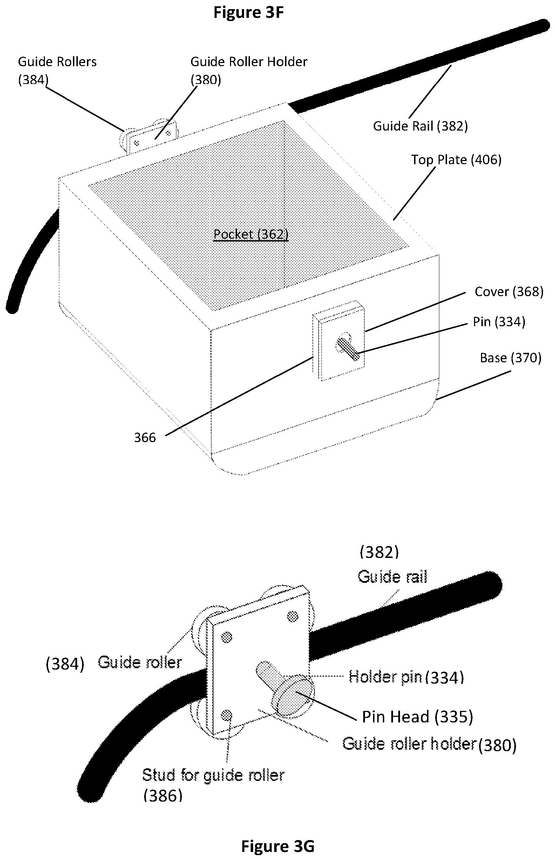

Figure 3A illustrates an example of the storage module 210 of the storage and sorting device 200 in Figure 2. The storage module 210 comprises a conveyor mechanism 300, a dispensing mechanism 310, and a memory (not shown in Figure 3) for storing indexing data and instructions to perform coning or deconing. Figure 11A shows an example of the indexing data 1100 being stored at the memory of the storage module 210 of Figure 2. In the present example, the indexing data 1100 stored in the memory of the storage module 210 may comprise:
(i) a presence of a connector in each holder,
(ii) a type and a model of the connector that is contained in each holder (i.e.1100b of Fig. 11A), and
(iii) a position of each holder of the conveyor mechanism (i.e. 1100a of Fig. 11A).

Referring back to Figure 3A, the conveyor mechanism 300 comprises a plurality of holders 330 for holding a plurality of connectors 320. The conveyor mechanism 300 is configured for moving the plurality of holders 330 to a location for retrieving a connector 320 used for coning a container and for moving the plurality of holders 330 to a location for receiving a connector 330 obtained from deconing a container. The conveyor mechanism 300 is configured to coordinate with a robotic manipulator (e.g. 250 of Figure 2) of an equipment control unit (e.g. 108a of Figure 1) used for coning or deconing at a corner casting of a container to be coned or deconed.

In one example, the conveyor mechanism 300 comprises of a tensioner 308 and a pair of roller chains 302, which is driven by an electrical/servo drive motor 312. The drive motor 312 is configured to cooperate with a gearbox 314 to drive the roller chain 302 through the drive wheel 316. Each of the pair of roller chains 302 is configured to be an endless loop. Each of the pair of roller chains 302 can be arranged to be moved in either a clockwise or a counter-clockwise direction. Each of the pair of roller chains 302 may comprise metal chains, a belt, rollers 304 and the like. The tensioner 308 is configured to maintain the tension of each roller chain 302. It should be clear that in actual implementation, the length of each roller chain 302 determines the number of holders per chain (or the capacity of the storage module 210), but the available space within a substation (e.g. 1004a) determines the length of the roller chain 302.

The conveyor mechanism 300 comprises one or more sensors (not shown in Figures) to detect the presence of a connector held by a holder at the location for receiving a connector obtained from deconing a container. In the present example, this location is also the location for retrieving a connector used for coning a container. By using one or more sensors located at the location for coning and deconing for monitoring, it ensures each connector will be handled properly between the storage module 210 and an end effector of the robotic manipulator (e.g. 250 of Figure 2) during coning or deconing. Furthermore, each holder may be configured to have a proximity sensor and/or a RFID tag for easy data management of the statuses of each holder. In other arrangements, the location for receiving a connector obtained from deconing a container can be different from the location for retrieving a connector used for coning a container i.e. the two locations are spaced apart.

In one arrangement, and referring to Figures 3B and 3C, the robotic manipulator (e.g. 250 of Figure 2) of the equipment control unit (e.g. 108a of Figure 1) is arranged to receive/retrieve a connector at a predetermined position 326b of the conveyor mechanism 300. The holder of the conveyor mechanism 300 at the predetermined position 326b remains in an upright orientation while the robotic manipulator interacts with the holder at the predetermined position 326b. In such an arrangement, a change in states between presence of a connector in the holder and absence of a connector in the holder would be used to trigger the conveyor mechanism 300 to accept another job. The new job received by the storage module 210 can be any of the following
- a movement operation of the conveyor mechanism 300 to move a holder 330 containing a connector for use in a coning operation to be performed for a vehicle next in queue to the position 326b,
- a movement operation of the conveyor mechanism 300 to move an empty holder 360 for use in a deconing operation to be performed for a vehicle next in queue to the position 326b,
- a no-movement operation of the conveyor mechanism 300 to get ready the robotic manipulator to obtain a connector for a coning operation to be performed for a vehicle next in queue (this operation occurs, for instance, if the holder 330 at the position 326b is an appropriate connector for the coning operation),
- a no-movement operation of the conveyor mechanism 300 to get ready the robotic manipulator to receive a connector obtained from a deconing operation to be performed for a vehicle next in queue (this operation occurs, for instance, if an empty holder 360 is at the position 326b),
- a movement operation of the conveyor mechanism 300 to move a holder to receive a connector picked up from a store (bin) 214 at a location 326a for loading a connector. Details will be discussed later for this operation.
- a movement operation of the conveyor mechanism 300 to move the holder 330 to a position 328b for the dispensing mechanism 310 to dispense a connector 320 held in the holder 330. Details will be discussed later for this operation.

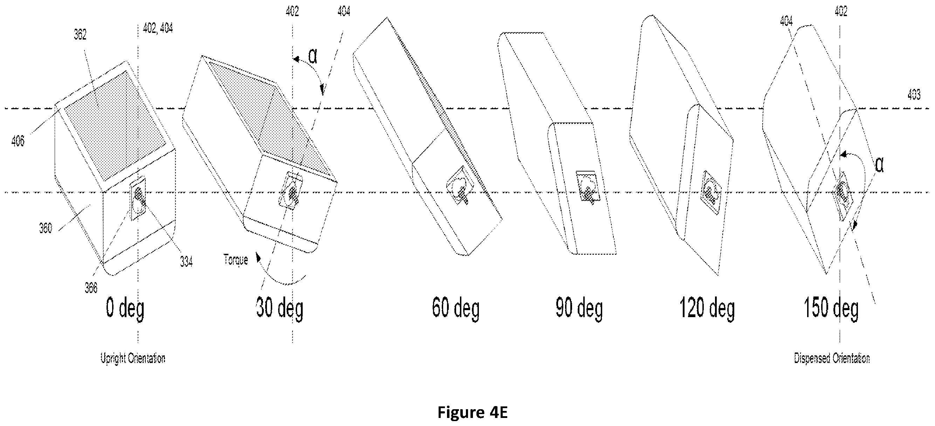

Each holder 330 is configured to be mounted to the conveyor mechanism 300 such that a connector 320 held by the holder 330 is maintained in an upright orientation when transported by the conveyor mechanism 300 and the connector 320 remains held by the holder 330 until the holder 330 is tilted by the dispensing mechanism 310 to a specific angle, α between a line of gravity (402 of Figures 4A, 4B and 4E) and a longitudinal axis of the holder 330 (e.g. 404 of Figures 4A, 4B and 4E). The specific angle is for dispensing the connector 320 and can be, for instance, any suitable angles between 55° to 150°, preferably between 55° and 90°, and more preferably between 58° and 76°. Details of the specific angle will be discussed with reference to later Figures. The dispensing mechanism 310 is deemed to be engaged when it tilts a holder to dispense a connector and the dispensing mechanism 310 is deemed to be disengaged when it is not tilting any holder. Each holder of the conveyor mechanism 300 is in upright orientation if the dispensing mechanism 310 is disengaged. Figure 3A shows the dispensing mechanism 310 in disengaged configuration and therefore all the holders 330 and 360 are held in the upright orientation.

With reference to Figures 3A to 3C, the dispensing mechanism 310 is arranged to be disposed substantially equidistant between two magazine belts i.e. the pair of roller chains 302 and at a dispensing end of the conveyor mechanism 300 adjacent to an output bin 350. The output bin 350 is configured to hold a plurality of connectors dispensed from the one or more holders 330 by the dispensing mechanism 310. A discharging guide 340 is disposed between the dispensing end of the conveyor mechanism 300 and the output bin 350 to guide connectors dispensed by the dispensing mechanism 310 into the output bin 350. The output bin 350 may contain connectors that have to be returned to the vessel owner for use at the next port facility that the vessel travels to. Each holder 330 is pivotably connected to the pair of roller chains 302 by two pins 334, wherein a first pin is connected to one of the pair of roller chains 302 and a second pin is connected to the other one of the pair of roller chains 302. The first pin and the second pin at both sides of the holder 330 hold the weight of the holder 330 and the container connector. It should be noted that the pin 334 remains engaged with the roller chains 302 while the holder 330 is being tilted by the dispensing mechanism 310. The holder 330 is always orientated to an upright orientation after being tilted to dispense a connector because of the design of the holder and the movement of the holder with respect to the pin 334.

In another example, and referring to Figures 3F and 3G, the conveyor mechanism 300 does not comprise of a pair of roller chains 302. Instead of having a pair of roller chains 302, the conveyor mechanism 300 comprises of a guide rail 382 and a roller chain 302. The roller chain 302 is driven by an electrical/servo drive motor (see 312 of Figure A) and a tensioner (308 of Figure 3A). In such configuration, one of the two pins 334 of the holder 330 is pivotally connected to a roller chain 302 and the other pin 334 is pivotally connected to a guide roller holder 380 that is placed on the guide rail 382. A first end of the other pin 334 is connected to the guide roller holder 380, and a second end of the other pin (i.e. pin head 335) is being housed in a pin head holder 366 of a holder 330. The roller chain 302 is not illustrated in Figure 3F to provide a better view of the guide roller holder 380.

The guide rail 382 is configured to be an endless loop, and has a shape and size substantially the same as the roller chain 302 discussed in Figures 3A to 3C. There are two pairs of guide rollers 384 secured at four corners of the guide roller holder 380 by studs 386. The guide roller holder 380 is configured to slide between the two pairs of guide rollers 384 when the holder 330 is driven along the conveyor mechanism 300 by the drive wheel 316 corresponding to the roller chain 302. Therefore, the guide roller holder 380 is configured to move in the same direction as the roller chain 302. Advantageously, the cost for constructing a conveyor mechanism 330 would be reduced because such arrangement will cause a reduction of motor and gearbox size and will eliminate a need for additional drive wheel, which is the case in the example having the pair of roller chains 302. Advantageously, the maintenance will be simpler because it eliminates the need to synchronize the tension between the pair of roller chains 320.

In one example, and referring now to Figure 3D, each holder 330 may be configured with a heavier base (and thus a lighter top) and is pivotably mounted, for instance, pivotably mounted via the first and second pins 334, to the conveyor mechanism 300, in particular, each of the roller chains 302, such that the heavier base would alter orientation of the holder 330 to maintain the holding of the connector 320 in the upright orientation. The holder 330 comprises of a pocket 362 for a portion of the connector 320 to reside in, and has a pin head holder 366 mounted at each of the two opposite sides of the holder 330. Each of the two opposite sides of the holder 330 on which the pin head holder 366 resides is not a side of the holder 330 facing other holders 330 mounted to the conveyor mechanism 300. More specifically, with reference to Figure 4A and 4B, an upper cone 320c of a connector 320 may sit within the pocket 362, while a body 320b of the connector 320 and a lower cone 320a of the connector 320 rest on a top plate 406 of the holder 330. The pocket 362 will ensure the connector 320 resides within the holder 330, unless a sufficient pivotal force acts on the holder 330 to drop the connector 320 from the pocket 362 due to gravitational forces.

With reference to Figure 3D, the pin head holder 366 is made up of a centrally located gourd-shaped recess 363. A wall 363a is disposed along a circumference of the gourd-shaped recess 363. A cover 368 having a central through-hole 367 that, for example, may be oblong or circular or oval in shape, is arranged to cover the gourd-shaped recess 363 of the pin head holder 366. Each of the first or second pin 334 has a pin head 335 with lateral projections for contacting the wall 363a. The lateral projections of the pin head 335 project orthogonally away from a longitudinal axis of the pin 334. The wall 363a acts as a guide for the movement of the pin head 335 when the holder 330 is being tilted by the dispensing mechanism 310. The wall 363a guides the holder 330 to return to the upright orientation. An end of each of the pins 334 opposite to the pin head 335 is arranged to slot into the central through-hole 367 of the cover 368. The end of each of the pins 334 is mounted to each of the roller chain 302. Together, the pin head holder 366 and the cover 368 hold the pin 334, which in turn holds the holder 330 at a specific position on the conveyor mechanism 300 even when the holder 330 is tilted by the dispensing mechanism 310. Furthermore, the cover 368 restrict lateral movement of the pin head 335 in a direction along the longitudinal axis of the pin 334 opposite of the pin head 335 of the pin 334 when the holder 330 is being tilted by the dispensing mechanism 310. The size of the through-hole 367 of the cover 368 is made to be larger than a circumference of a shaft body of the pin 334 to enable the pin 334 to slot into the through-hole 367 but smaller than the circumference of the pin head 335 to prevent disengagement of the pin head 335 from the gourd-shaped recess 363. In another arrangement, the wall 363a may be a groove in which the lateral projections of the pin head 335 can be slotted.

Figure 3E illustrates movement of the pin 334, in particular the movement of the pin head 335 within the gourd-shaped recess 363. The gourd-shaped recess 363 can have a shape made up of two overlapping circles i.e. a top circle C1 overlapping a lower circle C2 and the lower circle C2 has a diameter larger than the top circle C1. In the present example, the top circle C1 has a circumference that fits the circumference of the pin head 335 and the lower circle C2 has a circumference that is larger than the circumference of the pin head 335. Lateral movement of the shaft body of the pin 334 away from a center of the through-hole 367 is restricted by the size of the through-hole 367. As the pin 334 is moving within the through-hole 367, the pin head 335 may slide along the wall 363a within the gourd-shaped recess 363 of the pin head holder 366. The wall 363a guides the pin head 335 to move along the wall 363a. As an example, when a holder 330 containing a connector and is in an upright orientation, the pin head 335 attached to the holder 330 is at a first position P1, which is only in contact with the circumference of the top circle C1 of the gourd-shaped recess 363. As the holder 330 is being tilted by a dispensing mechanism (e.g. 310 of Figure 3A), the pin head 335 slides along the wall 363a to a second position P2 contacting the circumference of the lower circle C2 and no longer contacting the circumference of the top circle C1. Thereafter, the holder 330 is being tilted further such that the pin head 335 shifts to a third position P3 to contact a bottom most point of the circumference of the lower circle C2. At the third position P3, the connector in the holder 330 falls (dispenses) out of the holder 330 due to gravity. After the connector falls out of holder 330, the dispensing mechanism 310 disengages from the holder 330 and the heavier base of the holder 330 causes the holder 330 to return to its original orientation. As the holder 330 returns to its original orientation, the pin head 335 slides along the wall 363a of the gourd-shaped recess 363 to move from the third position P3 to the second position P2 and subsequently back to the first position P1, which is the upright orientation of the holder 330. There would be some momentum causing the holder 330 to swing when returning to the upright orientation.

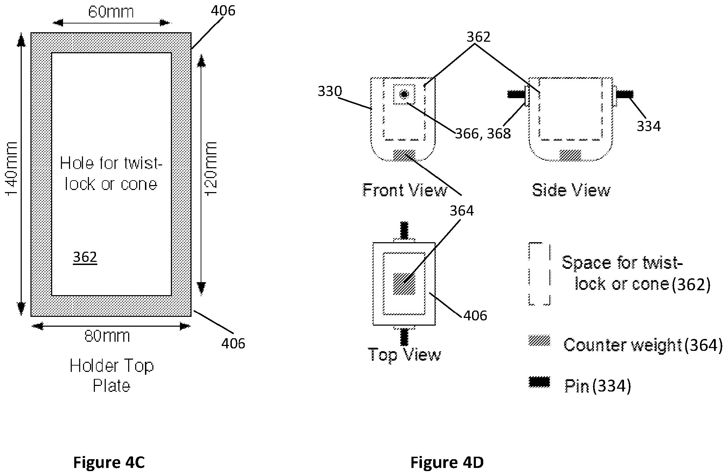

Figure 4A shows a close-up cross-sectional view of the connector 320 residing in the holder 330 in an upright orientation (i.e. not tilting). Figure 4B shows a close-up sectional view of the connector 320 residing in the holder 330 just before it is dispensed out from the holder 330. Figure 4C illustrates an example of the physical dimensions of a holder top plate 406. The holder top plate 406 may be designed with different dimensions as long as the top plate 406 is able to support respective bodies of most connectors in the market. Figure 4D shows different views of the holder 330 with a heavier base.

A counter weight 364 can be placed in a base 370 of a holder 330. The counter weight 364 may be positioned at a bottom center of the holder 330 to maintain the holder 300 in an upright orientation in the cases with or without a connector in the holder 330. Alternatively, to provide the heavier base, the base 370 of the holder 330 can be fabricated with a material that is denser than a material used for remaining portions of the holder 330. The holder 330 may be configured without any locking or clamping mechanism within the holder 330. A container connector (i.e. a twist-lock or a cone) does not need to be locked down to the holder 330, for instance, by turning the twist-lock to lock it to the holder 330. Advantageously, the holder 330 with the heavier base is orientated to be in an upright orientation despite being move around turning corners of the endless loop of the conveyor mechanism (e.g. 300 of Figure 3). The connector 320 held by the holder 330 will not fall out from the conveyor mechanism (e.g. 300 of Figure 3) when moving along the conveyor mechanism (e.g. 300 of Figure 3). The connector 320 only falls out when the dispensing mechanism (e.g. 310 of Figure 3) engages the holder 330.

Turning back to Figure 3B, Figure 3B illustrates holders 330 at positions 328a and 328b being tilted to an orientation for dispensing connectors held in these holders 330. The drawing of connectors in the holders 330 are omitted in Figure 3B for better illustration of the tilting of holders 330. The tilting is caused by the dispensing mechanism 310. The dispensing mechanism 310 is made up of a set of interconnected rollers 310a movable to contact and tilt the bottom surface of the heavier base of the holders 330 to dispense the connectors contained therein. On contact with the bottom surface, the dispensing mechanism 310 moves the holders 330 to pivot about the pin head 335 of the conveyor mechanism 300. Only the holder or holders 330 that have been tilted beyond the specific angle, α will dispense a connector from the holder. The specific angle is an angle between a line of gravity (402 Figure 4A, 4B and 4E) and a longitudinal axis of a holder in upright orientation (e.g. 404 in Figures 4A, 4B and 4E). Without the intervention of the dispensing mechanism 310, connectors held in the holders 330 will remain in an upright orientation and will not be tilted. In this manner, a connector will not be dispensed from any holder 330 unless a dispensing operation is performed by the dispensing mechanism 310. In Figure 3B, a connector stored at the holder at position 328a will not be dispensed from the holder 30 because it has not been tilted beyond the specific angle. Only the holder 330 at position 328b will tilt beyond the specific angle and dispense any connector contained therein. The dispensing mechanism 310 is preferably arranged at the location at which the conveyor mechanism 300 receives a connector 320 obtained from deconing a container in such a way that the disposal of the connector 320 removed from a corner casting of the container into the output bin 350 of Figure 3C by the dispensing mechanism is done at a different location from the location at which the conveyor mechanism 300 receives a new connector from the bin 214 of Figure 2, and the disposal will not affect the receiving of the new connector from the bin 214 by the conveyor mechanism 300.

Figure 4E illustrates different states of a holder 330 during a dispensing operation performed by the dispensing mechanism 310 of Figure 3B to remove a connector 320 from the holder 330. As the dispensing mechanism 310 is configured to tilt the holder 330, the holder 330 is gradually arranged to be orientated into a tilted or inverting configuration for dispensing the connector 320 from an upright orientation. At the upright orientation (best illustrated in Figure 4A), the longitudinal axis of the holder 404 coincides with the line of gravity 402. It is clear from Figure 4E that the pin head holder 366 is rotating about the pin 334 in a clockwise direction as the holder 330 is gradually inverting or tilted to the specific angle, α, as described earlier. The connector 320 (i.e. twist-lock or cone) will gradually lose its contact with a top plate 406 of the holder 330. After tilting to an angle equal or more than the specified angle α, the connector 320 will drop out from the pocket 362 of the holder 330 due to gravitational force. As soon as the dispensing mechanism 310 loses its contact with the bottom surface of the heavier base 370 of the holder 330, the holder 330 will return to the upright orientation, due to a torque created by the counterweight. It should be appreciated that the holder can also be tilted in a reverse direction, i.e. in a counter-clockwise direction.

With reference to Figures 4A and 4B, the connector 320 will drop out of the holder 330 when the center of mass, Cm, 430 of the connector 320 is no longer on any part of the top plate 406. Note that the centre of mass, Cm, 430 shifts as the holder 330 is being tilted, and the line of gravity moves away from the longitudinal axis. Referring to Figures 4B and 4D, the specified angle, α, is the angle between the longitudinal axis 404 and the line of gravity 402, whereas the longitudinal axis 404 is perpendicular to the horizontal base 370 of the holder 330. The specified angle, α, can be derived using the vertical displacement (L) and horizontal displacement (B) from the center of mass of the holder 330 in the upright position.

Using the present example illustrated in Figures 4A and 4B, where the holder top plate 406 is 140mm by 80mm, the connector 320 will be dispensed from the holder 330 when the horizontal displacement (B) is equal to or more than 40mm (i.e. half of the width of the holder 330). The centre of mass of each type of the connector 320 is typically between 10 to 25 mm above the top plate 406. It should be easily envisaged that different values of L and B can be used. In one example, the specified angle can be calculated based on the below formula:

Specified angle, α = arctan (B/L), wherein 0 < α ≤ 90°

**Table 1: Calculation of Tilting Angle**

| Twist-lock type | L(mm) | B (mm) | Angle (degrees) |
|---|---|---|---|
| 1 | 10 | 40 | 75.96 |
| 2 | 25 | 40 | 57.99 |

Referring to Figures 2, 3A and 3B, the sorting module (or sorter) 220 of the sorting and storing device 200 is configured for identifying a type of connector for each connector 320 in a store (or bin) 214 for storing a plurality of connectors 320. In one example, the store 214 refers to a portable bin comprising one or more unsorted connectors provided by a vessel owner upon berthing at the port facility. Sorting of the connectors are usually required since containers above deck and under hatch uses twist-locks and cones respectively. Having a sorting module 220 in close proximity with the storage module 210 reduces the cycle time of container handling, thereby increasing productivity.

The sorter 220 comprises of a pickup device 212 comprising a visioning unit (e.g. a camera and not illustrated in Figure 2), an orientation device (e.g. a clamp and rotation device that are not illustrated in Figure 2) and an identification device (e.g. a 3D imaging device that is not illustrated in Figure 2). The pickup device 212 can be a robotic arm or any device that can move in three-axes and have a pick up head. In the present example, the pickup device 212 is not to be confused with the robotic manipulator described earlier. The pickup device 212 is used for picking of connectors in the store 214 and for carrying one or more connectors to the identification and orientation station 230. The pickup device 212 is not for coning or deconing. The pickup head can be a gripper for clasping a connector or a magnetic head for picking up a connector via magnetic forces. The visioning unit of the sorter 220 is configured to check if the store 214 contains any connectors. If the visioning unit of the sorter 220 detects that there is a connector in the store 214, the pickup device 212 will retrieve the connector and bring the connector to the identification and orientation station 230. The sorter 220 is configured to identify the type of the retrieved connector and control the pickup device 212 to orientate the connector so as to put the connector into an empty holder, in this case, one of the empty holders 360 shown in Figure 3B. Details of how the connector is orientated will be discussed later.

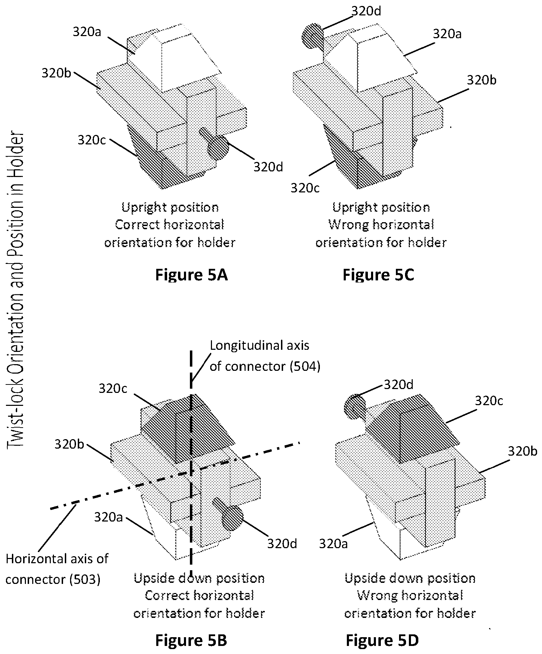

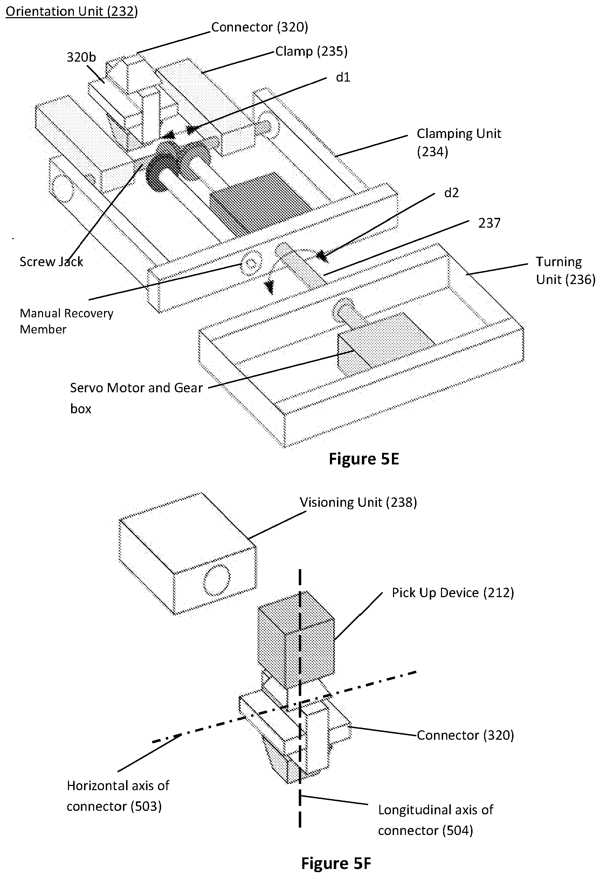

In one example, and referring to Figure 5F, at the identification and orientation station 230, there is an imaging device or visioning unit 238 configured to acquire a 3-D image of part of the connector brought in by the pickup device 212 in any orientation. Thereafter, the imaging device correlates or compares feature points of the acquired 3-D image with feature points in an array of 3-D reference images of all connectors used for coning/deconing at the port facility to identify the type of the connector brought in by the pickup device 212 and the orientation of the connector when it is picked up. After the orientation of the connector has been identified, if necessary (e.g. if the connector is in upside down orientation), the orientation device will assist the pickup device 212 to re-orientate the connector to a suitable orientation for placing the connector into the empty holder 360 of the conveyor mechanism 300. For instance, and referring to Figures 5A to 5D, a connector 320 may have a top portion (also known as lower cone) 320a, a body 320b, a bottom portion (also known as upper cone) 320c and a wire 320d. If the imaging device 238 determines that the magnetic pickup head has picked up the lower cone 320a of the connector 320, but the wire 320d is facing in an inappropriate orientation, the pickup head can rotate the connector 320 about a longitudinal axis 504 of the connector 320. In one example, the pickup head may rotate the connector 320 such that the wire 320d is rotated from the orientation in Figure 5C to the orientation in Figure 5A. Figure 5A illustrates a connector in an upright position and in a correct horizontal orientation (i.e. the wire 320d is facing an equipment control unit such as any one of 108a - 108f of Figure 1), whereas Figure 5C illustrates a connector in an upright position and in a wrong horizontal orientation (i.e. the wire 320d is facing away from an equipment control unit such as any one of 108a - 108f of Figure 1).

In another example, if the imaging device determines that the pickup head has picked up the upper cone 320c of the connector 320, but the wire 320d is facing correctly in an appropriate orientation, the pickup head would need to rotate the connector 320 about a horizontal axis 503 of the connector 320. In such example, the pickup head may require an orientation device to assist with the rotation of the connector 320 about the horizontal axis 503 such that connector 320 is inverted from Figure 5B (i.e. upside down position) to Figure 5A (upright position). Figure 5B illustrates a connector in an upside down position and in a correct horizontal orientation (i.e. the wire 320d is facing towards an equipment control unit such as any one of 108a - 108f of Figure 1), whereas Figure 5D illustrates a connector in an upside position and in a wrong horizontal orientation (i.e. the wire 320d is facing away from an equipment control unit such as any one of 108a - 108f of Figure 1). The magnetic pick up head may be configured to pick up the connector 320 either by contacting the lower cone 320a or the upper cone 320c. If the magnetic pick up head picks up the connector 320 by contacting any portions other than the lower cone 320a and upper cone 320c, the magnetic pick up head may be configured to lose contact with the connector 320 to drop it and pick up it again.

An example of an orientation device 232 is illustrated in Figure 5E. The orientation device 232 is configured to assist the rotation of the connector 320 along a longitudinal axis 504 in Figure 5B of the connector 320, the longitudinal axis 504 being perpendicular to the horizontal axis 503 in Figure 5B. The horizontal axis 503 of the connector is parallel to the body 320b of the connector 320 and/or a base 370 of a holder 330. When a connector 320 is placed in a holder 330, the longitudinal axis 504 of a connector 320 coincides with the longitudinal axis 404 of the holder 330 in Figure 4A. Likewise, when the connector 320 is placed in the holder 330, the horizontal axis 503 of the connector 320 coincides with a horizontal axis 403 of the holder 330.

In Figure 5E, the orientation unit 232 comprises a clamping unit 234 and a turning unit 236. The clamps 235 of the clamping unit 234 are configured to hold the body 320b of the connector 320 in place or to release the body 320b of the connector 320 after the magnetic pick up head contacts the connector 320 through a movement in a direction d1. The clamping unit 234 is connected to the turning unit 236 such that the clamping unit 234 can be rotated in a direction d2 about a shaft 237 connected to a servo motor and gear box of the turning unit 236. The connector 320 can be rotated by any predetermined angle, but typically is set to 180° in order to invert the connector 320 from the upside down position to the upright position.

A suitable orientation for placing the connector 320 into the empty holder 360 of the conveyor mechanism 300 can be configured to be any predetermined orientation, such as any one of the orientations illustrated in Figure 5A or Figure 5D. Once the predetermined orientation is fixed, there will be no changes to it and all relevant processes described herein will be configured according to the predetermined orientation. For instance, the process of a robotic manipulator described in the present disclosure handling a connector for coning or deconing is facilitated by ensuring that the container connector is placed in the suitable orientation within the holder. This is illustrated with reference to Figures 7A to 7H.

Figures 7A to 7D shows how a connector 320 is being handled by an end effector (e.g. 600 of Figure 6A) during coning. Where applicable, reference will also be made to features of the end effector in Figures 6A to 6I. For instance, the end effector 600 removes the connector 320 (also known herein as twist-lock) from a holder with its clamping portion 610 in an upside down orientation. Then, the end effector 600 gradually turns itself to an upright position during its movement to a corner casting so that the twist-lock 320 can be in an appropriate position as shown in Figure 7C for insertion into a corner casting. After the connector 320 is being coned to the corner casting by turning 90° counter clockwise, the wire 320d will be facing away from the container (i.e. in the orientation as indicated in Figure 7D). In such a manner, the robotic manipulator can operate without pivoting/moving in awkward angles, and the trajectory of the robotic manipulator can be predicted in order to forecast any possibility of collision of the end effector 600 with the container or any other obstacles. Therefore, in this case, no external orientation device is required to invert the orientation of the connector 320 after the connector 320 is being retrieved from the holder 330 during coning.

Figures 7E to 7F shows how a connector 320 is being handled by an end effector (e.g. 600 of Figure 6A) during deconing. Where applicable, reference will also be made to features of the end effector in Figures 6A to 6I. For instance, the end effector 600 unlocks the connector 320 from a corner casting by turning the body 320b of the connector 320 by 90°clockwise (i.e. the orientation in Figure 7F). The end effector 600 is arranged to perform deconing by orientating the end effector 600 in an upside down position. During the movement of the end effector 600 to an empty holder (e.g. 360 in Figure 3C) at the predetermined position (e.g. 326b in Figure 3C), the end effector gradaully turns itself to an upright position so that the twist-lock can be in an appropriate position as shown in Figure 7G for placing the connector 320 into the empty holder. In such a manner, the robotic manipulator can operate without pivoting/moving in awkward angles, and the trajectory of the robotic manipulator can be predicted in order to forecast any possibility of collision of the end effector 600 with the container or any other obstacles. Therefore, in this case, no external orientation device is required to invert the orientation of the connector after the connector 320 is removed from the corner casting during deconing.

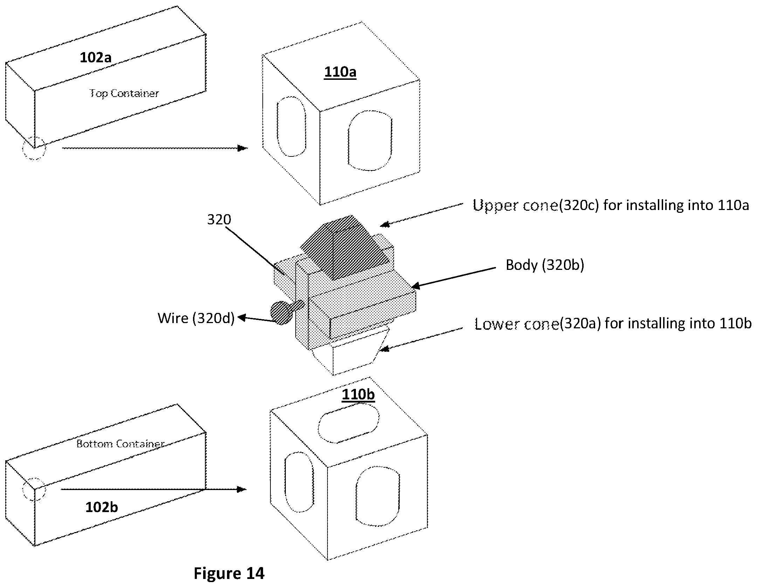

It should be appreciated from Figure 14 that a connector 320 is used to secure a top container 102a to a bottom container 102b that the top container 102a is to be stacked on. At a vessel, workers will release a lower cone 320a of the connector 320 from the bottom container 102b manually for semi-automatic twist-locks so that the top container 102a can be lifted by a quay crane to be transported to an automated integrated wharf operation station (e.g. 100 of Figure 1). Thereafter, a robotic manipulator at the automated integrated wharf operation station will be activated to perform coning or deconing on an lower cone 320a of the connector based on operation information received from a TOS.

Turning back to Figure 2, in summary, the sorter 220 may be configured for
- picking up one connector (e.g. 320 of Figure 3A) stored in the store 214,
- identifying type of the picked connector
- re-orientating the picked connector to a suitable orientation for placing it into one of the plurality of holders of the conveyor mechanism 300 (e.g. 360 of Figure 3B) that is indicated as having no presence of a connector in the indexing data (e.g. 1100 of Figure 11A), and
- placing the orientated connector with type identified into one of the plurality of holders (e.g. 360 of Figure 3B) that is indicated as having no presence of a connector in the indexing data (e.g. 1100 of Figure 11A).

The indexing data (e.g. 1100 of Figure 11A) stored in the memory of the sorting and storing device 200 is updated to indicate presence of a connector in the holder containing the placed connector, and the identified type (including model) of the placed connector.

If the sorter 220 determines, based on the indexing data (e.g. 1100 of Figure 11A), that there is no holder (e.g. 330 of Figure 3A) on the conveyor mechanism 300 available for storing a connector 320, the sorter 220 may be operated to instruct the conveyor mechanism to move one or more holders 330 holding one or more connectors 320 to a designated area and to instruct the dispensing mechanism (e.g. 310 of Figure 3A) to dispense the one or more connectors 320 to the designated area. The designated area may be the bin 214 as illustrated in Figure 2 or a new bin that is being instructed by TOS to replace the bin 214 that is presently used in the station 100 or replace the bin 350 as illustrated in Figure 3A. Note that the bin is usually provided by the vessel that is performing a loading or discharging operation at the port facility. The bin used for collecting the connectors 320 that are dispensed from the holders 330 by the dispensing mechanism 310 can be the same bin that provides connectors 320 for placing into the empty holders 360.

The indexing data (e.g. 1100 of Figure 11A) may then be updated to indicate no presence of a connector for each holder with a connector dispensed to the bin 214 in Figure 2 or bin 350 in Figure 3A. Although it is indicated in the present example that the sorter 220 is responsible for determining whether there is available holder based on the indexing data (e.g. 1100 of Figure 11A), in another arrangement, it could be the station controller 190 in Figure 1 that is responsible for this determination.

If a connector 320 being picked up from the bin 214 cannot be identified (e.g. damaged connector), the pickup device 212 may be configured to place the unidentified connector at a holding area 240. Images of the unidentified item may be captured for sending to a central server (e.g. TOS). These images may be transmitted to an electronic device of a relevant personnel whom may take certain action based on the images. When the bin 214 is detected to be empty by the sorter 220 (i.e. in a situation when all connectors in the bin 214 are being sorted) or if the sorter 220 is being notified that a predetermined number of specified connectors that are required for performing coning or deconing operations for the particular vessel is satisfied, the sorter 220 may place all unidentified items back into the bin 214. Thereafter, the sorter 220 may notify, for instance, the station controller 190 of Figure 1 or a processor of the sorting and storing device 200 that all unidentified items are placed back into the bin 214. The station controller 190 of Figure 1 may be configured to notify that new stores (or bins) be brought in to replace empty stores (bins) or to notify additional stores be brought in order to handle with a situation with multiple vessels and multiple bins belonging to different vessels.

The above-mentioned processor of the sorting and storage device 200 maybe configured for managing the sorter 220 and the storage module 210, and for reporting any notifications (including alarms and fault) and operation statuses of the sorter 220 and the storage module 210. The processor of the sorting and storage device 200 may be further configured to communicate with a processor of an equipment control unit (e.g. any one of 108a-108f of Figure 1 or 1008a-1008h of Figure 10) to facilitate the coning and deconing operation. In another arrangement, a substation (e.g. 1004a or 1004e of Figure 10) may comprise of a substation controller for managing sorting and storing of connectors, and coning and/or deconing operations.

In one arrangement, the sorting and storing device 200 comprises a plurality of storage modules 210 that are cascaded. Hence, at least two conveyor mechanisms and two corresponding dispensing mechanisms are present since each storage module 210 comprises the conveyor mechanism 300 and the corresponding dispensing mechanism 310. The processor of the sorting and sorting device 200 may be configured to control the operations of the plurality of storage modules 210. Each of the plurality of the storage modules 210 may be configured to work independently of each other to increase productivity and storage capability. The plurality of storage modules 210 can be configured to operate in a staggered or asynchronous manner. For instance, in Figure 3C, two storage modules 210 are cascaded in the sorting and storing device 200 as "Chain A" 322 and "Chain B" 324. In such arrangement, one of the storage modules 210 (e.g. Chain A 322) may be configured to prepare a holder for a current coning/deconing job, and the other storage module (e.g. Chain B 324) may be configured to prepare a holder for a subsequent coning/deconing job. In another example, Chain A 322 is arranged to perform coning/deconing operations for a first vessel, while Chain B 324 is arranged to perform coning/deconing operations for a second vessel. As an example, with reference to Figure 3C, the discharging guide 340 may have dividing means 342 for channelling connectors from each storage module 210 to a common bin 214 or respective bins for Chain A 322 and Chain B 324. In another example, the discharging guide 340 may be configured to comprise motorised guiding means (not illustrated in any Figures) to change the inclination of the divider 342 so that a dispensed connector can be dispensed into a corresponding bin. Using the example where "Chain A" 322 is arranged to perform coning/deconing operations for a first vessel, while Chain B 324 is arranged to perform coning/deconing operations for a second vessel, the motorised guiding means is configured to dispense a connector stored in "Chain A" 322 to an output bin for "Chain A" 322 and to dispense a connector stored in "Chain B" 324 to an output bin for "Chain B" 324 based on operation information. For instance, the operation information comprises vessel identifiers to identify the first vessel and the second vessel so that Chain A 322 and Chain B 324 can dispense connectors for these vessels accordingly.

The common bin 214 may be compartmentalised to comprise one or more compartments for storing the dispensed connectors 320. In one arrangement, all models of twist-locks may be placed in one compartment, and all models of cones may be placed in another compartment. This may speed up sorting process of the plurality of connectors in the bin 214 at a next port facility (or for ease of accessing an appropriate connector for upcoming coning operations scheduled to the station 100), since containers above deck and under hatch uses twist-locks and cones respectively

Several arrangements for the case in which more than one storage modules 210 are being cascaded will be described as follows. Figure 3C illustrates two cascaded storage modules 322 and 324 arranged to cooperate with only one sorter (e.g. 220 in Figure 2). As mentioned earlier, each storage module 210 comprises the conveyor mechanism 300 in examples shown in Figures 3A-3C and the conveyor mechanism 300 in turn comprises the pair of roller chains 302. The configuration of the conveyor mechanism 300 applies to each of the conveyor mechanism 322 and 324 described below with reference to Figure 3C.

In one arrangement, the conveyor mechanism 322 may be configured to handle all coning jobs, and the conveyor mechanism 324 may be configured to handle all deconing jobs. In another arrangement, the conveyor mechanism 322 can work with the sorter 220 to move one or more connectors from the bin (e.g. 214 of Figure 2) to one or more empty holders 360 of the conveyor mechanism 322 while the conveyor mechanism 324 is used for performing coning or deconing operation. In this arrangement, with reference to Figure 3C, the robotic manipulator of each equipment control unit (e.g. any one of 108a - 108f of Figure 1) is arranged to retrieve a connector 320 used for coning or return a connector 320 obtained from deconing at a position 326b of the conveyor mechanism 322, while the pickup head of the sorter 220 is arranged to store an identified connector into an empty holder 360 at a position 326a of the conveyor mechanism 324. This means the conveyor mechanism 322 and the conveyor mechanism 324 will move the required holder 330 or 360 to the respective locations, 326a or 326b, depending on the operation that the conveyor mechanism 322 or 324 has to coordinate with the respective sorter 220 or the respective robotic manipulator (e.g. 250 of Figure 2) of the equipment control unit (e.g. 108a-108f of Figure 1). This will prevent the pickup head of the sorter 220 from colliding with the robotic manipulator of the equipment control unit, even if there is a drift in any of the conveyor mechanisms 322 or 324 or if the intervals between these movements are not arranged sequentially.

The plurality of storage modules 210 may also be configured to operate simultaneously. For instance, in the example illustrated in Figure 3C, if the connectors held by the holders of "Chain A" 322 and "Chain B" 324 belong to the same vessel, the station controller 190 or the controller of the sub-station (e.g. 1004a-h in Figure 10) or the controller of the storage and sorting device 200 may dispense all connectors stored in the conveyor mechanisms 322 and 324 at once to speed up the return of the connectors to the vessel owner.

It is appreciated that the station controller 190 of Figure 1 may comprise a network unit for communicating with the server (i.e. TOS) to retrieve a list of job instructions periodically or continuously and instruct the sorting and storing device 200 to perform the list of job instructions until they are completed.

Figure 11A illustrates indexing data 1100 structured in a form of a list. The indexing data 1100 in Figure 11A is described as follows.
- A connector 1102 stored at a first position of a first roller chain 'A' of a conveyor mechanism is of twist-lock type and its model is C5AM-DF.
- A connector 1104 stored at a twelfth position of the first roller chain 'A' is of cone type and its model is SDL-4.
- The second position of the first roller chain 'A' is indicated as 'Empty'.
- A connector 1108 stored at a fifth position of a second roller chain 'B' is of twist-lock type and its model is FA8.
- A connector 1110 stored at an eighth position of the second roller chain 'B' is of cone type and its model is IS-1T/LF.

It is appreciated that the leftmost column (with the header "Connector") in Figure 11A is provided for the sake of discussion and may not actually be present the actual indexing data 1100.

Advantageously, the sorter 220 of Figure 2 or the station controller 190 of Figure 1 may easily determine, from the indexing data 1100, a type of connector that is stored even in the case when there are different storage modules (e.g. 322 and 324 of Figure 3C) comprising different roller chains such as the first roller chain 'A' and the second roller chain 'B'.

Use of the indexing data 1100 is described as follows.

If the sorter 220 of Figure 2 or the station controller 190 of Figure 1 has determined, based on retrieved operation information (e.g. 1200 of Figure 11B), that a deconing operation is to be performed at a location for receiving a connector obtained from deconing, the sorter 220 or the station controller 190 is configured to:
- identify, based on the retrieved information of the container (i.e. part of the retrieved operation information, a type of a connector to be removed from a container;
- determine a position of a holder on a conveyor mechanism (e.g. 300 of Figure 3A) indicated as having no presence of a connector from the indexing data 1100;
- instruct the conveyor mechanism to dispense the connector in the holder into the bin (e.g. 214 in Figure 2) through instructing a dispensing mechanism (e.g. 310 of Figure 3A) to tilt the holders if there is no empty holder (e.g. 360 of Figure 3A;
- instruct the conveyor mechanism to move the holder at the determined position to the location for receiving a connector obtained from deconing the container;
- coordinate with a robotic manipulator to place the removed connector into the moved holder based on the determined position; and
- update the indexing data 1100 to indicate presence of a connector and its type (including its model type) in the holder containing the connector placed by the robotic manipulator, and the identified type of the connector placed by the robotic manipulator.

If the sorter 220 of Figure 2 or the station controller 190 has determined, based on the retrieved operation information, that a coning operation is to be performed at a location for retrieving a connector for coning a container, the sorter 220 or the station controller 190 is configured to:
- identify, based on the retrieved information of a container, the type of a connector to be used during coning;
- determine, based on the indexing data 1100 and the identified type of the connector to be used, a position of a holder on a conveyor mechanism (e.g. 300 of Figure 3A) containing a connector of the type identified to be used during coning;
- instruct the conveyor mechanism to move the holder at the determined position to the location for coning the container;
- coordinate with a robotic manipulator to pick from the location for retrieving a connector for coning the container; and
- update the indexing data 1100 to indicate no presence of a connector in the holder dispensing the connector.

The station 100 of Figure 1 may further comprise a remote diagnostic unit 180 for carrying out exception handling. The remote diagnostic unit 180 shows all the faults and alarms in station 100. It is designed with troubleshooting guides/procedures to allow a remote operator to instruct devices within the station 100 through a device (e.g. 1050 of Figure 10) that is communicatively coupled to the station 100 to perform simple tasks such as reset the position of the robot manipulator 250 in Figure 2 and/or reset the application of the detection device 252 in Figure 2. The remote diagnostic unit 180 may be used in conjunction with a remote surveillance and supervision device 107. The remote surveillance and supervision device 107 uses the cameras 120 in Figure 1 for surveillance.

The station controller 190 of Figure 1 of the station 100 in Figure 1 may be further configured to operate as a notification unit for receiving one or more signals in an event of a predetermined exception and for sending notification to one or more alerting devices (e.g. 1050 in Figure 10) in data communication with the station controller 190. The predetermined exceptions may comprise any of the following scenarios:
- a connector has dropped before coning or deconing is completed;
- a connector is jammed in a corner casting;
- one of a plurality of robotic manipulators is faulty;
- the indexing data indicates that there is no holder on the conveyor mechanism available for storing a connector;
- a connector cannot be identified due to damage;
- information relating to a vehicle number of a vehicle entering the location for coning or deconing cannot be authenticated; and
- information relating to container number of a container carried by a vehicle for coning or deconing cannot be authenticated.

In another arrangement, the notification may be sent to a remote control center comprising the one or more alerting devices (e.g. 1050 in Figure 10) or alerting device(s) owned by technician(s) for the technician(s) to supervise the coning and/or deconing operations at the port facility. The remote control center may be located anywhere far from the wharf. The remote control center may comprise of an operation dashboard to monitor the operations in all stations. This allows operators at the remote control center or any personnel having one of the alerting devices (e.g. 1050 in Figure 10) to carry out simple diagnosis and basic troubleshooting before the technicians are sent to the station 100 of Figure 1 for detailed repair/troubleshooting.

Each of the one or more alerting devices (e.g. 1050 in Figure 10) may be configured to provide one or more user selectable options to disable a robotic manipulator so that if a notification that the robotic manipulator is faulty is received, the robotic manipulator can be configured to be inoperable via the one or more user selectable options.

In one example, if one substation (e.g. 1004f in Figure 10) is out of order, an operator may configure the station controller 190 of Figure 1 such that the substation that is out of order is skipped. For instance, in the set up as illustrated by Figure 10, if the substation 1004f comprising the equipment control unit 1008f and sorting and storage device 1006f is out of order, the station controller 190 of Figure 1 may be configured to disable the substation 1004f and configure the substation 1004g comprising the equipment control unit 1008g and sorting and storage device 1006g to handle all coning and/or deconing jobs that are previously allocated to the substation 1004f to prevent queue interruption.

In another example, if more than two substations in a station are found to be faulty, the station controller 190 may be configured to send a notification to the one or more alerting devices (e.g. 1050 in Figure 10) to receive user approval to divert an existing queue of vehicles (e.g. 104 in Figure 1) awaiting coning/deconing jobs to other stations handling coning and deconing. The notification may include a service request to a maintenance team to check on the two faulty substations.

Each of the one or more alerting devices (e.g. 1050 in Figure 10) may be further configured to provide one or more user selectable options to re-initiate a coning or deconing operation so that if a notification that a connector has dropped during a coning or deconing operation is received, re-initiation of the coning or deconing operation is selectable via the one or more user selectable options.

In one example, with reference to Figures 1, 2, 3A and 3B, if deconing operation is to be performed at a corner casting of a container to be deconed, and if the connector 320 is determined to be removed but not stored in an empty holder 360 of the sorting and storing device 200, the user may indicate that a deconing operation need not be reinitiated. In this case, it is likely the removed connector 320 has dropped, and can be retrieved later.

In another example, if coning operation is to be performed at a corner casting of a container to be coned, and if the connector 320 is determined to be not installed at a corner casting after coning, a user may reinitiate another coning operation. In this case, it is likely that the connector 320 has dropped. The connector 320 that has dropped can be arranged to be picked up after the whole coning operation is completed in station 100.

Each of the one or more alerting devices (e.g. 1050 in Figure 10) may be further configured to be provided a location of a station (e.g. 100 of Figure 1) so that a user may go to the station for troubleshooting if, for instance, a torque control of the robotic manipulator exceeds a predetermined threshold indicating that a connector is jammed in a corner casting.

Alternatively, each of the one or more alerting devices (e.g. 1050 in Figure 10) may be further configured to provide one or more user selectable options to overwrite location data of a next destination of a vehicle (e.g. 104 in Figure 10) after departing from a station (e.g. 100 in Figure 1). Hence, if one or more of the following conditions occur:
- a notification that a connector is jammed in a corner casting of a container carried by a vehicle (e.g. 104 in Figure 10) is received on the one or more alerting devices (e.g. 1050 in Figure 10),
- a notification that a container carried by the vehicle is found to be damaged is received, and
- a notification that information relating to vehicle number of a vehicle entering the location for coning or deconing cannot be authenticated is received,
- a notification that information relating to container number of a container carried by a vehicle for coning or deconing cannot be authenticated is received.
redirection of the vehicle (e.g. 104 in Figure 10) to, for instance, a service centre is selectable via the one or more user selectable options. Advantageously, the operations at the port facility will not be disrupted as the station (e.g. 100 in Figure 1) can continue to handle coning or deconing operations for other vehicles without any problems.

Each of the one or more alerting devices (e.g. 1050 in Figure 10) may be further configured to provide one or more user inputs to key in a vehicle number or a container number so that if a notification that information relating to a vehicle number or container number of a container or containers on a vehicle entering a location for coning or deconing cannot be authenticated is received, authentication can be provided based on the one or more user inputs. For instance, if a vehicle number of a vehicle (e.g. 104 of Figure 1) or a container number of each of one or more containers carried on the vehicle cannot be identified by the station controller 190 of Figure 1, the user can enter, via the one or more user inputs, the vehicle number or the container number identified by the user through processing of captured images of the vehicle and the one or more containers carried on the vehicle (e.g. images captured by the one or more cameras 120 of Figure 1 at the station 100 of Figure 1) in order to determine what operation is to be performed at a coning or deconing station.

### Workflow of Automated Intelligent Wharf Operation Station (AIWOS)

Figure 12A illustrates how the station 100 of Figure 1 and the station 1000 of Figure 10 communicate with a server (i.e. Terminal Operating System (TOS)) 1250 for managing operations in a port facility and one or more alerting devices for remote diagnostics as well as remote surveillance and supervision of the station 100. For instance, a user may access video streams of the coning or deconing operations being performed in the station 100 through the one or more alerting devices. Operation information 1200 or other job details required for completion of the coning and/or deconing jobs scheduled for the station 100 are retrieved from the TOS 1250 and being processed by the station controller 190. The station controller 190 communicates with each of the different modules in the station 100 in order to obtain the progress of completion of each job and/or faults of the parts. The remote surveillance and supervision unit 107 and the container recognition unit 101 communicates with the plurality of pan-zoom cameras 120 in the station 100 to obtain videos and/or images for viewing and/or further image processing. If a job is completed, the information will be passed to the TOS 1250 for real-time updating so that the TOS 1250 is aware of the status of each vehicle 104 and each container (e.g. 102a and 102b of Figure 1) and can schedule upcoming jobs accordingly (e.g. fleet management, manpower allocation). If a fault is reported and a remote controller is unable to resolve the fault, the TOS 1250 may be informed by the station controller 190 and/or the user device of the remote controller. This allows the TOS 1250 to redirect work flow to a suitable area (e.g. service area or another station in operation) for further processing.

Although it is illustrated in Figure 12A that the TOS 1250 only communicates directly with the station controller 190, it should be appreciated that TOS 1250 can also be configured to dispatch operation information directly to the respective processors of each of the different modules such as the sorting and storage device 200 of Figure 2, equipment control unit 108a-108f of Figure 1 or 1008a-1008h in Figure 10, traffic management unit 160 of Figure 1 or a processor for each sub-station 1004a-1004h of Figure 10. This means that the sorting function or the coning and/or deconing function instructed through the station controller 190 can be carried out directly at the processors in the sorting and storage device or the equipment control unit, if these respective processors are configured to communicate with TOS 1250 to retrieve operation information and/or connector compatibility information.

Figure 12B is a flowchart showing steps for dispatching containers to/from a station. When a vessel berths at the port, containers may be required to unload from the vessel and/or containers at the berth may be required to load to the vessel. These activities can be regarded as a vessel operation. The process of such vessel operation begins at a step S1250. At a step S1252, the TOS 1250 described with reference to Figure 12A provides operation information 1200 such as container number, type of job (i.e. coning/deconing) to be performed, type of connectors involved, any special coning/deconing requirements (e.g. no coning or deconing required, fix connectors only at two diagonal corners) to the station controller 190. If there is any fault detected by the station controller 190 and/or the station controller 190 being notified of any fault at a step S1254, the station controller 190 will in turn notify one or more user devices (such as an alerting device 1050 in Figure 10) so that remote surveillance, supervision and/or diagnostic can be carried at a step S1264. For instance, the user device of a remote control room operator is notified and the remote control room operator can rectify the fault remotely. But if the fault is determined, at a step S1266, to be resolved remotely by the control room operator or a remote user, for instance, by keying in a container identification number in the case that the fault is that a container recognition unit (e.g. 101 of Figure 1) fails to identify a container or the resolution of the fault is to simply instruct the robotic manipulator to move to a home position by issuing the instruction to the remote diagnostic unit 107 in the station 100 through the station controller 190, the process goes back to step S1252 to perform the coning or deconing job indicated by the TOS to perform. This arrangement advantageously reduces the need to send someone physically to the station 100 to troubleshoot, and improves the overall efficiency of the vessel operation.

If a fault cannot be rectified remotely by the remote control room operator at a step S1266, the remote control room operator may then deploy a technician to the station 100 to conduct further troubleshooting. The remote control room operator may inform the TOS that the station 100 is out of service directly or indirectly (e.g. via the station controller 190) at a step S1268.

If the fault is determined at a step S1270 to be rectified by the technician, the remote control room operator who is monitoring the progress of the repair and recovery of the station 100 can inform the TOS that the station is back in operation so that new jobs can be scheduled to be carried out by the station 100 (and vehicles can be directed to the station) at a step S1272. In another arrangement, the technician may send a signal through an user interface of his user device or through a station interface to notify the TOS of the recovery. In one example, once the station has recovered from its fault, the station controller 190 ensures that the present coning or deconing job has been completed. The station 100 can then proceed back to step S1252 to handle the next coning or deconing job indicated in the operation information provided by the TOS.

However, if the fault remains unresolved by the technician at a step S1270, the technician can inform the control room operator at a step S1274 and/or the TOS directly through an user interface of his device. It may be possible for the technician to request the TOS to provide a replacement equipment control unit or a storage and sorting device or any required spare parts to the faulty station. The control room operator may also send a signal to the TOS to notify that the station 100 is out of service and all pending jobs should be redirected at a step S1276). In another arrangement, the station controller 190 may be configured to notify the TOS that the station 100 is out of service and will be moved to a standby area or a service center if the station controller 190 receives such request (e.g. from the station interface or a remote device or the station). The TOS may be configured to replace the faulty station with a replacement station in order to complete the vessel operation at a step S1276.

It should be appreciated at the step S1270, if the technician is not able to clear the fault, the technician will check if the fault is arising from the vehicle or equipment control unit. This means that when the equipment control unit is able to return to home position and can function normally, the vehicle presently in the station may be configured to be redirected to an exception handling area. But if the fault is due to the equipment control unit and/or storage and sorting device, the technician is trained to ensure that the vehicle presently in the station can move out of the station while notifying the TOS that the station is out of service.

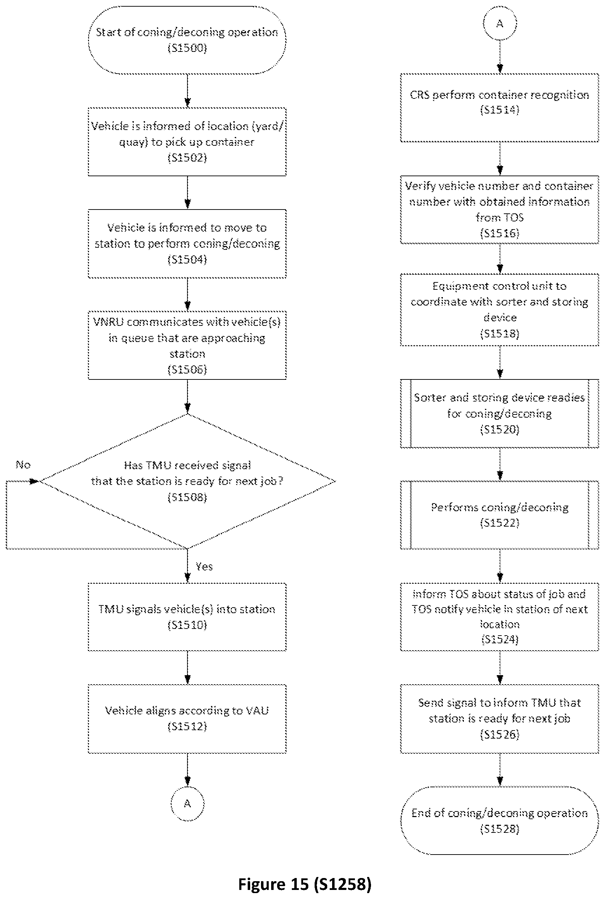

Under normal operation (i.e. when there are no faults), the station controller 190 may be configured to poll periodically or continuously for status and/or information for each of the units/devices that are communicatively connected to it, for instance, each equipment control unit, each storage and sorting device, the vehicle alignment unit, and so on (S1256). More specifically, the station controller 190 may be configured to monitor the coning/deconing process (of a connector with respect to a corner casting of the container) for each equipment control unit and/or to update the TOS upon completion of a coning/deconing job (S1258). Details of how a station controller can be configured to monitor each coning/deconing operation and/or update the TOS upon completion of such operation will be discussed in detail with reference to Figure 15.

If a coning/deconing job is being completed, the station controller will determine if the vessel operation is completed or if there are more jobs being allocated to the station controller to complete at a step S1260. If there are no pending jobs for the vessel operation or new vessel operation allocated to the station controller 190, the station controller 190 will be notified of an end of vessel operation at a step S1262. Subsequently, the station controller 190 may be configured to put the station on a standby mode or to perform a reinitialization process, whereby all connectors are discharged from the holders and/or all robotic manipulators are set to home position.

Figure 15 illustrates a coning/deconing workflow. Specifically, a station controller 190 can be configured to monitor each coning/deconing operation assigned to a station 100 and /or update the TOS described with reference to Figures 12A and 12B upon completion of such operation. At a step S1500, a coning or deconing operation begins. Coning is a process of attaching twist-locks (TL) or cones (AC) to container corner castings prior to loading onto vessels, while deconing is a process of removing twist-locks or cones from container corner castings upon discharge from vessels.

A vehicle 104 (hereinafter, 104 refers to one or more vehicles) is informed by the TOS of a location (e.g. yard for coning operations and quay for deconing operations) to pick up a container at a step S1502 and to transport the picked up container to the station 100 to perform coning or deconing at a step S1504. The vehicle 104 will be queued in line for entry into the station 100. As the vehicle(s) 104 in queue are approaching the station 100, a vehicle number recognition unit (VNRU) 150 of the station 100 communicates with one or more vehicles 104 that are approaching the station 100 to obtain the vehicle number and store them in a memory accessible by a station controller 190 of the station at a step S1506. The station controller 190 may arrange a storage and sorting device 200, based on operation information, to prepare appropriate connectors that are required for the upcoming coning operations in advance or prepare a plurality of empty holders 360 for the upcoming deconing operations in advance to shorten the overall cycle time of container handling. For instance, the TOS can prepare a list of vehicles that are tasked to transport to a specific station and transmit the prepared list to the station controller 190 for advanced preparation.

The vehicles in queue will remain stationary, until a traffic management unit (TMU) 160 of the station 100 received a signal that the station 100 is ready for next coning/deconing job. In one arrangement, the station controller 190 may be configured to send a signal to the traffic management unit 160 to indicate that the station 100 is ready for the next coning/deconing job when the station controller 190 detects that the vehicle 104 in the station 100 has successfully exited the station. If it is determined that the station 100 is ready for next coning/deconing job at a step S1508, the traffic management unit 160 will signal one or more vehicles 104 that is next in queue to move into the station 100 at a step S1510.

Each of the one or more vehicles 104 is aligned to a predetermined location for performing a coning or deconing operation by coordinating with signal(s) of a vehicle alignment unit (VAU) 140 of the station 100 at a step S1512. In some examples, a movable platform for moving a vehicle carrying one or more containers or a movable platform for moving one or more equipment control units configured for performing coning or deconing for one or more containers is provided to align and/or orientate the vehicle or the one or more equipment control units to facilitate the coning or deconing of one or more containers carried by the vehicle. Container recognition of one or more containers being transported by the one or more vehicles 104 may be performed by a container recognition unit (CRS) 101 simultaneously while the vehicle 104 is aligning itself or may begin container recognition as soon as the vehicle 104 is aligned at the predetermined location at a step S1514. The container recognition unit 101 may be arranged to cooperate with a plurality of pan tilt zoom cameras 120 in the station 100 to obtain a container identifier of each of the containers detected in the station 100.

After obtaining the respective vehicle number(s) and container identifier(s) of the one or more vehicles 104 carrying the one or more containers presently in the station 100, the station controller 190 verifies these details with operation information (e.g. data 1200 of Figure 11B) retrieved from the TOS at a step S1516. If the operation information does not match with the identified vehicle number(s) and/or container identifier(s), a remote operator may be notified, for instance, via an alerting device. In one example, the remote operator may be configured to confirm the identified details with the operation information retrieved from the TOS. If there is truly a difference, the remote operator may send an instruction to the station controller 190 to notify the TOS to update its records, and/or retrieve corresponding information of the container identifier. For instance, it may be that the operation information indicates a vehicle 1234 is carrying two 6.096 m (20-feet) containers with identifiers being "ABCD1234567" and "WXYZ9876543", but the identified container identifiers are "ABCD1234567" and "ABCD9876543". In such example, the station controller 190 may send a request to the TOS to retrieve the related operation information of the container "ABCD9876543" so that coning/deconing operation may be performed. At the same time, the station controller 190 may also request the TOS to update its record to indicate that the vehicle 1234 is carrying "ABCD1234567" and "ABCD9876543" and not "WXYZ9876543".

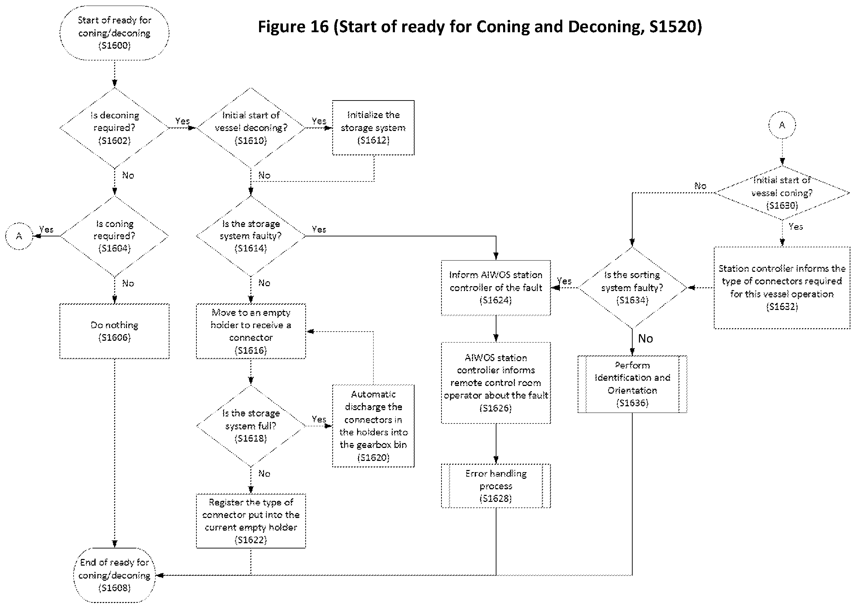

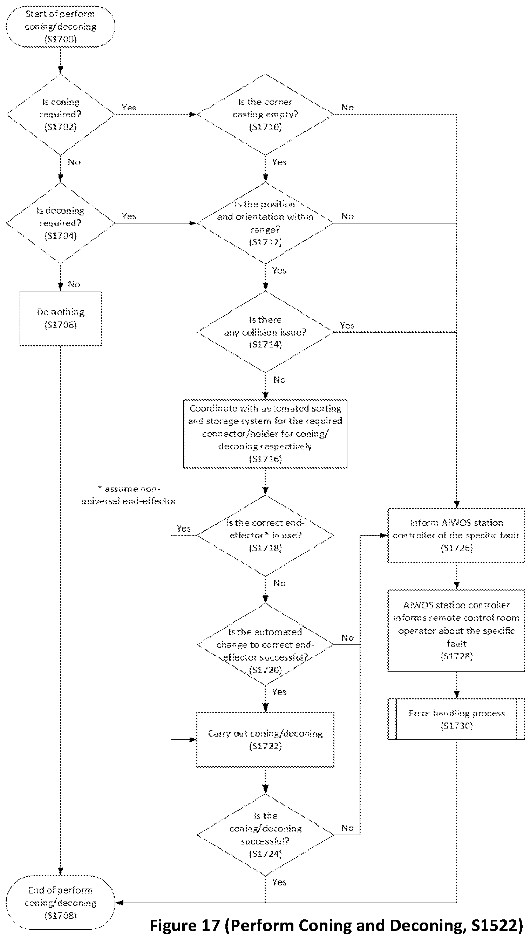

Upon obtaining the operation information of the containers to be coned or the containers to be deconed, the station controller 190 is arranged to instruct its one or more equipment control units (e.g. 108a-f of Figure 1) to coordinate with its one or more storage and sorting devices (e.g. 106a-f of Figure 1) at a step S1518. The respective storage and sorting devices prepares itself in advance for the scheduled coning or deconing job at a step S1520. The process of how the respective storage and sorting device prepares itself for a coning job or a deconing job will be discussed in detail later with reference to Figure 16. Once a storage and sorting device 200 is ready to provide a required connector at a location for retrieving a connector used for coning a container or ready to provide an empty holder at a location for receiving a connector obtained from deconing a container, the respective equipment control units performs the coning or deconing at a step S1522. The process of coning or deconing will be discussed in detail later with reference to Figure 17.

The TOS will be informed of a status (e.g. fault detected, job completed) of the coning or deconing operation of the one or more containers carried by the one or more vehicles in station at a step S1524. If applicable, the TOS may notify the vehicle 104 in station of its next destination (e.g. error handling area, quay, yard) at the step S1524. Once the station 100 is ready for the next coning or deconing job, a signal is being sent to inform the traffic management unit 160 at a step S1526. Each coning or deconing operation ends at a step S1528 and repeats from step S1500 again if there is any pending coning or deconing job allocated to the station 100.

Figure 16 illustrates how a storage and sorting device 200 (e.g. 106a-f in Figure 1) prepares itself in advance before performing a coning or deconing operation (S1522 of Figure 15). The storage and sorting device 200 may be configured to coordinate with an equipment control unit (e.g. 108a-f) to complete deconing at a step S1522 in order to proceed with some steps, such as step S1622, in Figure 16.

The coning or deconing process of a storage and sorting device 200 begins at a step S1600. The storage and sorting device 200 may be configured to receive an instruction to perform coning or deconing from the station controller 190. Upon receipt of such instruction, the storage and sorting device 200 will first determine if deconing is required at a step S1602. If it is determined at the step S1602 that deconing is required, the station controller 190 of an Automated Integrated Wharf Operation Station ("AIWOS") 100 or a controller of the storage and sorting device 200 will determine if the deconing operation is associated with an initial start of a vessel deconing operation at a step S1610.

It is noted that when a vessel berths at a port facility, deconing is typically performed before coning. This allows container(s) on board to be unloaded from the vessel so that container(s) to be shipped by the vessel can be loaded onto the vessel. Specifically, the station 100 may be arranged to perform a plurality of deconing jobs before performing a plurality of coning jobs. In another arrangement, concurrent loading of containers requiring coning and offloading of containers requiring deconing may begin simultaneously on a vessel but using different quay cranes.

Therefore, when the station 100 is to perform a first deconing job for a vessel i.e. YES at S1610, the storage module 210 of the storage and sorting device 200 is initialised at a step S1612. During an initialisation of a storage module, a plurality of connectors are being arranged to be dispensed out of the holders of a conveyor mechanism (e.g. 300 in Figures 3A and 3B) so that there will be sufficient empty holders to store the connectors obtained from the deconing jobs for the vessel. The dispensed connectors are collected and returned to an earlier vessel that has performed coning and/or deconing at the station 100.

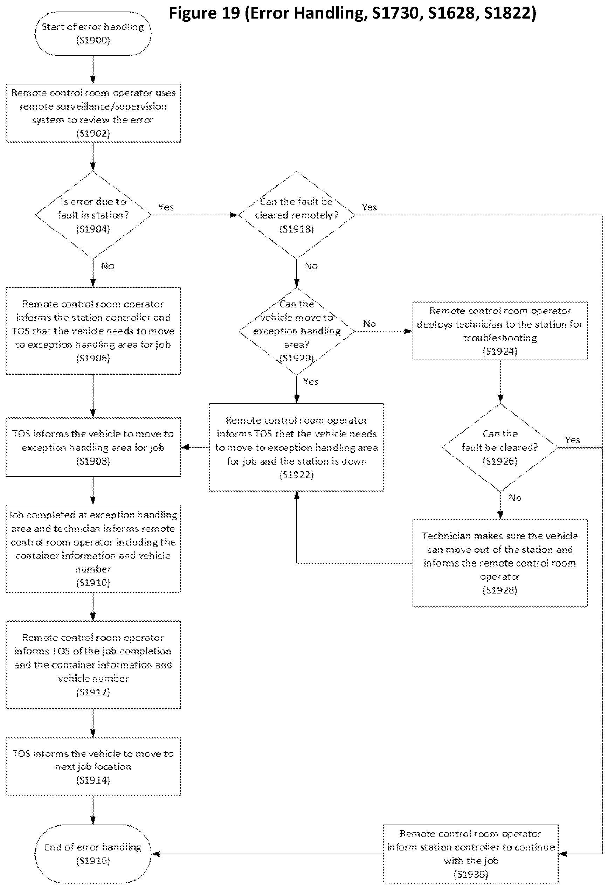

The station controller 190 or the controller of the storage and sorting device 200 will monitor if the storage module is faulty (e.g. whether the conveyor mechanism 300 and dispensing mechanism 310 is functioning properly) at a step S1614. If it is determined at the step S1614 that the storage module 210 is faulty, the station controller will be notified of the specific fault at a step S1624. Subsequently, the station controller 190 sends a notification to a remote operator about the specific fault via his alerting device (such as device 1050 in Figure 10), which may a mobile phone, desktop or any hand-held device at a step S1626. The remote operator may be in a remote control room or in transit (moving around a port facility or out of the port facility). Error handling (or exception handling) process will be invoked at a step S1628. Error handling will be discussed in detail later with reference to Figure 19.

If it is determined that the storage module 210 is functioning at the step S1614, the conveyor mechanism 300 of the storage module 210 is instructed to move to an empty holder 360 to receive and store a connector obtained from deconing of a container at a step S1616. In one example, the conveyor mechanism 300 is configured to move a nearest empty holder 360 to a location (e.g. 326b of Figure 3C) for receiving a connector obtained from deconing. In another arrangement, the conveyor mechanism 300 is configured to move an empty holder having an adjacent holder holding an identical type of connector to the location for receiving a connector obtained from deconing by referring to indexing data stored in a memory that is accessible by the station controller 190 or the controller of the storage and sorting device 200.

In the event that it is determined that there are no empty holders (i.e. storage module 210 is full) at a step S1618, the storage module 210 is arranged to discharge connector(s) that are stored in holder(s) into a bin at a step S1620 in order to provide empty holder(s) for the deconing process. Once there is at least one empty holder available in the conveyor mechanism 300 in Figure 3A and 3B, the station controller 190 or the controller of the storage and sorting device 200 can coordinate with the conveyor mechanism 300 to move the empty holder to a location for receiving a holder obtained from deconing at the step S1616. Subsequently, the station controller 190 is configured to instruct an equipment control unit (e.g. 108a-f of Figure 1) to perform deconing, which is essentially proceeding with step S1522 of Figure 15.

In one example, the dispensing mechanism 310 may be arranged to dispense connectors that would not be used in the upcoming predetermined number of coning jobs based on the operation information retrieved from the TOS and the indexing data stored in a memory accessible by the station controller 190 or the controller of the storage and sorting device 200. The indexing data (e.g. 1100 of Figure 11A) stored in the memory may comprise:
(i) a presence of a connector in each holder,
(ii) a type and a model of the connector that is contained in each holder, and
(iii) a position of each holder of the conveyor mechanism 300.

Once the connector obtained from deconing of a container is stored into an empty holder of the conveyor mechanism 300, the indexing data is updated to indicate presence of a connector in the holder containing the placed connector, and the identified type of the placed connector at a step S1622. The deconing process of the storage and sorting device 200 then ends at a step S1608.

Referring back to the step S1602, if deconing is not required from the received instruction(s) from the station controller 190 or the controller of the storage and sorting device 200, the station controller 190 or the controller of the storage and sorting device 200 will determine at a step S1604 whether a coning process is required. If it is determined at the steps S1602 and S1604 that neither deconing nor coning is required, the conveyor mechanism 300 may remain stationary i.e. at home position and do nothing at a step S1606. In one arrangement, when there is no action required by the station 100 at the step S1606, the conveyor mechanism 300 may coordinate with a sorter 220 of the storage and sorting device 200 to place identified and orientated connector from a bin 214 into empty holders 360 of the conveyor mechanism 300 at a location (e.g. 326a of Figure 3C) for loading connectors into a storage module 210.

If a coning process is determined to be required at the step S1604, the station controller 190 or the controller of the storage and sorting device 200 will determine if the coning operation is associated with an initial start of a vessel coning operation at a step S1630. If the station 100 is to perform a first coning job for the vessel i.e. YES at S1630, the station controller 190 notifies the storage and sorting device 200 the type of connector required for this coning job at a step S1632. Subsequently, the station controller 190 or the controller of the storage and sorting device 200 will check if the sorter 220 is faulty at a step S1634. If it is determined at the step S1634 that the sorter 220 is faulty, the station controller 190 will be notified of the specific fault at the step S1624. Subsequently, the station controller 190 sends a notification to a remote operator about the specific fault via his alerting device such as the device 1050 in Figure 10, which may be a mobile phone, desktop or any hand-held device at a step S1626. Error handling (or exception handling) process will be subsequently invoked at a step S1628.

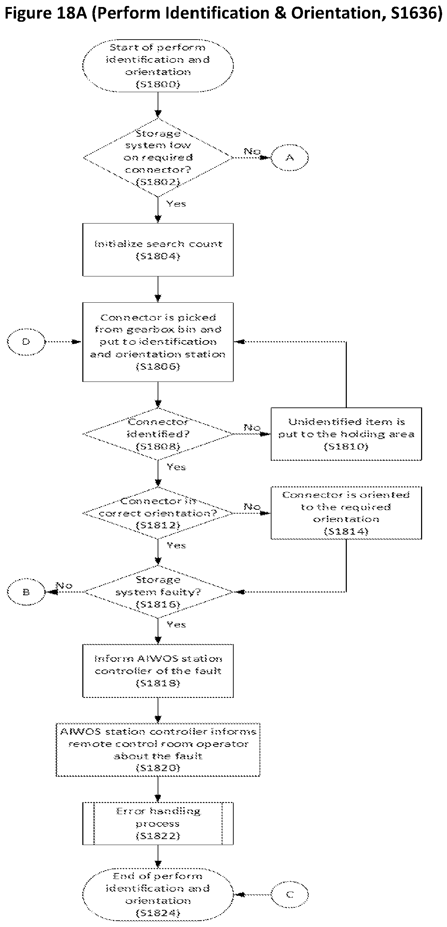

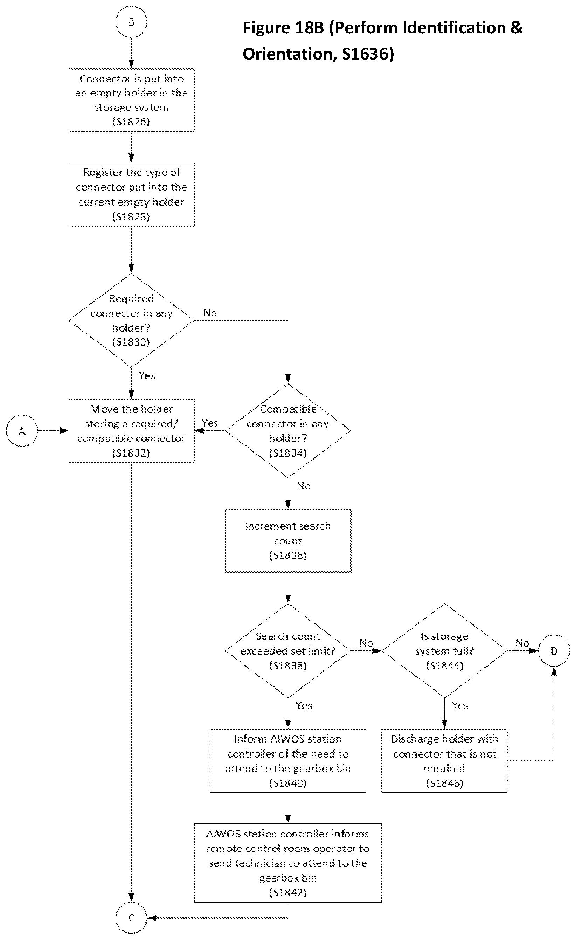

If the sorter 220 is determined at the step S1634 to be functioning, the station controller 190 will perform identification and orientation, i.e. pick and load connectors for coning onto holders of the conveyor mechanism 300 at a step S1636. The process of identification and orientation of a connector in the bin 214 will be discussed in the following paragraphs with reference to Figures 18A and 18B.

With reference to Figures 18A and 18B, the sorter 220 begins the process for preparing a required model and/or type of connector 320 used for a coning job at a step S1800. The station controller 190 or the controller of the storage and sorting device 200 is configured to determine, based on indexing data (e.g. 1100 of Figure 11A) stored in a memory, whether a storage module 210 of the storage and sorting device 200 has a predetermined number of the required connector(s) at a step S1802. For instance, if the predetermined number is set as one, the station controller 190 checks if there is a presence of the required connector 320 in any one of the plurality of the holders 330 in the storage module 210. In another arrangement, if the predetermined number is 10, the station controller 190 checks if there are ten required connectors in one or more storage modules in use for a particular vessel operation. It should be appreciated that a plurality of storage modules may be cascaded for use at each substation (e.g. 1004a-h of Figure 10).

If the number of the required connectors is determined to be less than the predetermined number at the step S1802, the station controller 190 or the controller of the storage and sorting device 200 is configured to initialise a search count at a step S1804. The search count is configured to alert a remote operator about a delay in finding a required type of connector and/or its compatible connector to complete a coning job if the search count exceeds a particular threshold.

At a step S1806, a pick up device 212 of the sorter 220 picks up an unidentified connector from a bin 214 and places it at an identification and orientation station 230. If the picked connector cannot be identified at the identification and orientation station 230 at a step S1808, the unidentified item will be placed in a holding area 240 at a step S1810 and a new connector will be picked from the bin 214. However, if the picked connector can be identified at the step S1808, the controller will determine if the identified connector is in a desired orientation for placement into an empty holder 360 (e.g. as shown in Figure 5A) at a step S1812. The identified connector is orientated to the required orientation at a step S1814, if it is determined that the identified connector is not in the desired orientation at the step S1812. For example, the identified connector in a non-desirable orientation may be inverted (e.g. Figure 5B) or the wire of the connector is not facing a desired direction (e.g. Figure 5C).

Once the identified connector is in an orientation for placement (such as Figure 5A) into an empty holder 360, the station controller 190 or the controller of the storage and sorting device 200 is configured to place the orientated connector in the empty holder 360 of a conveyor mechanism (e.g. 300 in Figure 3A and 3B) of a storage module (e.g. 210 in Figure 2). Prior to storing the orientated connector in the empty holder 360 of the conveyor mechanism, the controller first determines if the storage module is faulty at a step S1816. If the storage module is determined to be operating without fault at the step S1816, the orientated connector is placed into the empty holder 360 of the conveyor mechanism at a step S1826. Once the orientated connector is stored into the empty holder 360 by the pickup head 212 of the sorter 200, the indexing data is updated to indicate presence of a connector in the holder and the type of connector being held in that holder at a step S1828. This is a process to load the holders of the conveyor mechanism 300 with as many connectors beforehand in order to reduce overall cycle time. If the storage module is full i.e. no empty holders 360 in the conveyor mechanism 300, the station controller 190 is arranged to dispense at least one holder that is holding a connector that is not required for the present coning job and/or a connector that is not compatible for use in the present or upcoming jobs.

If it is determined at the step S1816 that one or more storage modules 210 is faulty, the station controller 190 will be notified of the specific fault at a step S1818. Subsequently, the station controller 190 sends a notification to a remote operator about the specific fault via his alerting device (such as device 1050 in Figure 10), which may be a mobile phone, desktop or any hand-held device at a step S1820. Error handling (or exception handling) process will be subsequently be invoked at a step S1822. Once the error handling process is completed at the step S1822, the preparation for a required connector used for a coning job also ends, which refers to the step S1608 of Figure 16.

At a step S1830, the station controller 190 is configured, based on the operation information (e.g. data 1200 of Figure 11B) retrieved from the TOS, to determine if there is any required connector for the coning job in any one of the holders 330 (of a storage module). If there are one or more storage modules (e.g. 322 and 324 of Figure 3C) being used to serve a vessel operation in the station 100, the determination is based on the total number of required connectors in the one or more storage modules. It is appreciated that the controller of the storage and sorting device 200 can work together with the station controller 190 or be replaced by the station controller 190 to perform coning or deconing.

If a required connector for the coning job is available, the conveyor mechanism 300 that holds the particular holder storing the connector will be move to a location for retrieving the connector for coning (e.g. 326b) at a step S1832. Once the preparation for the present coning job is completed, the process ends at a step S1824 which corresponds to the step S1636 of Figure 16. If there is no required connector in any holder at the step S1830, the station controller 190 or the controller of the storage and sorting device 200 is configured to check if there are any compatible connectors from the vessel sorted from the bin 214 and/or stored in any one of the holders at a step S1834. This check for compatible connectors is done as a secondary procedure. Hence, the station controller is configured to prioritize the use of a required connector over the use of a compatible connector. However, if compatible connectors are used, the replenishing of the required connector(s) into the holders of the conveyor mechanism 300 for coning can be completed faster and not delay the coning operation.

"A required connector" used herein refers to a specific type and model (i.e. ideal type) of connector indicated by a vessel owner to use during a coning operation for the container to be coned. "A compatible connector" used herein refers to all types of the connector that can be used as direct replacements of the required connector intended for the particular coning operation. In one arrangement, a compatible connector and a required connector uses the same type of end effector. In another arrangement, a compatible connector is suitable for use to secure the containers above-deck or below-deck, but require a change of end effector (by referring to the indexing data 1100 in Figure 11A) in order to perform the coning operation. Note that an effector can be used for different models of connectors.

An example of compatibility data (non-exhaustive) is stored in a memory accessible by the station controller 190 or the controller of the storage and sorting device 200 is illustrated in Table 2 below.

**Table 2: Compatibility Data between some models of connectors**

| **SIN** | **Type** | **Model of Connector** |
|---|---|---|
| 1 | Twist-lock A | T-2.3C, C8A-DF, TL-GA/L, C5AM-DF |
| 2 | Cone A | S-1.47B, C16A |
| 3 | Cone B | C12C, IS-1T |
| 4 | Cone C | SDL-4, IS-1T/LG |

Note that there is a slight difference during the removal of type "Cone A" and type "Cone B" from a corner casting of a container because Cone A requires an operating mechanism different from Cone B. The operating mechanism for both "Cone A" and "Cone B" remains the same during the installation onto the corner casting the container. Consequently, "Cone A" and "Cone B" use the same type of end effector. In contrast, "Cone C" requires use of an end effector different from the end effector used for "Cone A" and "Cone B".

In the present disclosure, compatibility between a compatible connector and a required connector is to be understood as the compatible connector is compatible to the required connector if a change of end effector usable to install the required connector is not required to install the compatible connector. Hence, in an arrangement where a compatible connector and a required connector are configured to use the same type of end effector, Cone A will be deemed compatible with Cone B because they do not require use of different end effectors.

However, in another arrangement, the compatibility between a compatible connector and a required connector can be understood as the compatible connector is compatible to the required connector if the compatible connector is suitable for use to secure the container(s) but require a change of end effector in order to perform the coning operation. In this case, if a compatible connector is suitable for use to secure the containers but require a change of end effector in order to perform the coning operation, "Cone C" is considered compatible with "Cone A" and "Cone B".

As an example, and referring to the first row of the operation data 1200 in Figure 11B, the required connector for the coning operation is "C5AM-DF". If it is determined at the step S1830 that no "C5AM-DF" connector is present, the station controller 190 or the controller of the storage and sorting device 200 will be configured to find if there are any compatible models (e.g. T-2.3C, C8A-DF, TL-GA/L). In this arrangement, the vessel operation will not be interrupted and overall cycle time will be reduced.

If there is no required connector and compatible holder in any holder at the step S1834, the search count will be incremented at a step S1836. The search count will also be polled at a step S1838 to determine if it exceeds a threshold. In such arrangement, the sorting may be arranged to stop only if the number of required connector exceeds a minimum limit as determined in step S1802.

If the search count exceeds a threshold, the station controller 190 will be triggered at a step S1840. The station controller 190 is configured to send an alert to a remote operator via his alerting device upon receipt of the triggering signal, so that a technician can be deployed to attend to the bin 214 at S1842. The alerting device may be a mobile phone, desktop or any hand-held device. It should be appreciated that by implementation of a search count, the sorter 200 can be configured to stop searching for a specific model of connector or the compatible models required for completing the coning job. This will reduce a delay (if any) in the cycle time, and notify a technician to conduct preliminary check. For instance, the technician can troubleshoot to identify if there is an image recognition problem with the identification and orientation station and/or to confirm if the bin 214 really does not contain the required connector and/or its compatible connector when the search count exceeds the threshold.

But if the search count does not exceed the threshold at the step S1838, the station controller 190 or the controller of the storage and sorting device 200 is configured to determine if the storage module 210 is full i.e. a situation where there are no empty holders in the conveyor mechanism 300 at a step S1844. If it is determined at the step S1844 that there are empty holders available in the storage module 210, step S1806 will be repeated. This means that more connectors will be picked from the bin 214 for identification and orientation. But if the storage module 210 is determined to be full (i.e. no empty holders), the station controller 190 or the controller of the storage and sorting device 200 is configured to discharge some of the holders stored with connectors that are not required for the coning job and/or upcoming coning jobs at a step S1846 in order to have empty holders to store identified connectors picked from the bin 214. Step S1806 is then repeated i.e. more connectors are picked up from the bin 214.

In summary, from the description above, the station controller 190 is configured to determine the number of the required connector available to complete a coning job, and if it is determined that the storage module 210 is running low on the required connector, the sorter 200 is configured to:
- pick up connectors from a bin and perform identification and orientation.
- initialise a search count,
- increment the search count by one if a required type of connector and its compatible type for coning is absent, and
- sending a notification to alert a remote operator if the search count exceeds a predetermined threshold,
wherein the search count is the number of times the sorter identifies a connector picked from the bin before finding the required connector or its compatible type to complete the coning.

As an example, the remote operator may be alerted if there are more twist-locks than cones in a bin being sorted in an Automated Integrated Wharf Operation Station, AIWOS, (e.g. 100 in Figure 1) to carry out a vessel operation and cones are required to complete the coning. In this example, the remote operator can dispatch a technician to verify the problem. The technician may check if there are required or compatible connectors in unsorted bins that are in the station or in bins in other stations.

At step S1846, where holders not storing required connector and/or compatible connector are dispensed by a dispensing mechanism 310, the dispensed connectors may be directed to a particular corner of a bin 214 using a controllable divider (e.g. 342 of Figure 3C). This will reduce the possibility of picking up the same connector during the next iteration of picking, sorting and identifying. Optionally, the identification and orientation station 230 may further comprise a buffer bin (not illustrated in Figures) to store identified connectors that are not required or compatible for the present coning job at step S1808. It should be appreciated that indexing can be carried out at the buffer bin to assist subsequent transfer to a storage module.

If it is indicated that there are required connector and/or compatible connector in the holder, the holder storing the required/compatible connector will be moved to a location for retrieving connectors for coning (e.g. 326b) at a step S1832. The preparation for a coning process of a storage and sorting device 200 then ends at a step S1824, which corresponds to the step S1608 of Figure 16. Subsequently, the station controller 190 is configured to instruct an equipment control unit (e.g. 108a-f of Figure 1) to perform coning i.e. the process proceeds with S1522 of Figure 15. Once the connector stored into the holder is retrieved to perform coning, the indexing data is updated to indicate absence of a connector in the holder.

It should be appreciated that a skilled person whom is experienced in day-to-day port operations would understand that there are only two models (i.e. one model for above deck, and one model for below deck) for a vessel loading/unloading operation during new build. However, as the vessel goes into duty and commutes to a number of port facilities, the number of models that are used for above deck or below deck may increase over time. This is largely because wrong (but compatible) models may be used during coning/deconing at some port facilities and/or replacement of damaged connectors may be required. The damaged connectors may be replaced with any available (and compatible) type of connectors in order to complete the vessel operation. A practical problem arises as there is a need for a lashing worker to spend time to find the specified model or compatible model(s) to install to the container before the container can be loaded onto the vessel. Note that the quantity of each distinct type of connector in each bin belonging to a vessel is not known at the start of a vessel operation.

In addition, there is a possibility that connectors provided by the vessel owner are insufficient to complete all the coning jobs for the vessel operation. In such a case, the captain of the vessel would be informed if there are not enough required connectors and/or compatible connectors left for coning all the container(s) meant for loading onto vessel. It is usually the decision of the captain to inform the corresponding shipping line on the follow up process. For instance, these affected container(s) would be prevented from loading onto the vessel (due to a lack of required/compatible connectors), and are arranged to be loaded onto a next available vessel travelling to the same destination. Implementation of a search count helps to keep a reasonable number of required connector in a storage module (in advance) for productivity. It also provides a more reliable way to identify a scenario where there are insufficient connectors suitable for completing all coning jobs within a vessel operation so that the vessel captain can be promptly informed about the incapability to complete the vessel operation.

Although in the present workflow, the station controller 190 monitors for any faults flagged by the sorter 220 or the storage module 210 of the storage and sorting device 220 before instructions are sent to the sorter 220 or the storage module 210 for execution. However, it should be understood that these steps of monitoring for faults can be arranged in any order or arranged as interrupts such that if a fault is detected, the station controller 190 is notified of the fault.

Figure 17 illustrates the coning or deconing process of S1522 in detail. The coning or deconing of a container in a station 100 by a robotic manipulator (e.g. 1009a of Figure 10, 250 of Figure 2) of an equipment control unit (e.g. 1008a of Figure 10) begins at a step S1700. If it is determined at a step S1702 that coning is required of the robotic manipulator, the station controller 190 determines if a corner casting is empty at a step S1710. In one example, this can be performed by analysing images acquired by a visioning unit disposed at an end effector of the robotic manipulator. If it is determined that the corner casting is not empty during a coning process, the station controller will be informed of the specific fault at a step S1726.

If it is determined at the step S1702 that coning is not required, the station controller determines if deconing is required at a step S1704. If it is determined at the step S1702 that coning is not required and that deconing is not required by the robotic manipulator at the step S1704, the robotic manipulator will remain stationary (i.e. at home position and do nothing) at a step S1706. For instance, it can be determined at S1706 that there may be specific requirements for a coning or deconing job which do not require manipulation by the robotic manipulator (e.g. no coning or deconing required, fixed connectors only at two diagonal corners of the containers). The coning and/or deconing process for the containers in station then ends at a step S1708.

In the event that it is determined at a step S1704 that deconing is required or if it is determined that coning is required at the step S1702 and the corner casting is empty at the step S1710, the station controller 190 determines at a step S1712 to check if the position and orientation of the connector is within a range of the robotic manipulator. It should be appreciated that the container connectors are stored or transported in a desired orientation (as discussed with reference to Figure 7A to 7H). If it is determined that the expected movement of the robotic manipulator is out of range at the step S1712, the station controller will be informed of the specific fault at a step S1726.

The station controller 190 is also configured to detect any collision issue at a step S1714. For instance, the station controller 190 may be arranged to calculate a probability of collision and comparing the calculated probability of collision with a predetermined threshold and/or to detect collision of the robotic manipulator by monitoring an impact sensor on the robotic manipulator. The probability of collision may be calculated by determining the location of the container with respect to the robotic manipulator and predicting the movement trajectory of the robotic manipulator. The probability of collision may also be calculated by capturing one or more images when the robotic manipulator is in motion during coning or deconing. The captured images may be compared with a set of reference images to determine if there is an obstacle being captured by a imaging unit located near an end effector of the robotic manipulator. A fault occurs if the calculated probability of collision exceeds the predetermined threshold or the impact sensor detects a collision of the robotic manipulator.

If no faults are detected at any of the steps S1710, S1712 and S1714, the robotic manipulator of the equipment control unit will coordinate with the storage and sorting device at a step S1716 to:
- retrieve a connector used for coning a container, at a location (of a conveyor mechanism) for retrieving a connector used for coning a container, based on the operation information retrieved from the TOS and indexing information stored in a memory accessible by the storage and sorting device, or
- place a connector obtained from deconing a container into an identified empty holder, at a location (of a conveyor mechanism) for receiving a connector obtained from deconing a container, based on the operation information retrieved from the TOS and indexing information stored in a memory accessible the storage and sorting device.

During the coordination between the robotic manipulator (e.g. 250 of Figure 2) of the equipment control unit (e.g. 108a-f in Figure 1) with the storage and sorting device 200, the equipment control unit (e.g. 108a-f in Figure 1) may be further configured to determine the type and/or specific model of the connector to be handled. The equipment control unit (e.g. 108a-f in Figure 1) may be configured to verify with the information provided by the vessel owner to TOS and/or indexing data stored in a memory accessible by the station controller 190.

It should be appreciated the station controller 190 may have to determine if the robotic manipulator is equipped with the correct end effector at a step S1718. For instance, if it is determined at the step S1718, based on the operation information and/or images captured by visioning unit of the end effector, that an end effector of a twist-lock model type "C5AM-DF" is required, but the present end effector is of a cone model type "IS-1T/LF", the equipment control unit is configured to request the robotic manipulator to retrieve the correct end effector from an effector exchange rack. Although it is indicated in the Figure 17 that the determination of a change in end effector is performed after checking that no faults are detected at any of the steps S1710, S1712 and S1714, the check for an appropriate end effector may actually be made to be performed right before the step S1702 and after S1700 instead. In another example, with reference to Figure 17 and 18B, where a required type of connector, for instance, "C5AM-DF" is determined to be absent at step S1830, and a connector that is compatible with "C5AM-DF" is determined to be present at step S1834, the station controller is configured to check if a change of end effector is required at step S1718 in order to perform coning with the connector that is compatible with "C5AM-DF".

Referring back to Figure 17, if it is determined that a change of the correct end effector is required at the step S1718, the station controller 190 and/or controller of the equipment control unit will proceed to check if the automated change to the correct end effector is successful at a step S1720. In the event that the change to the correct end effector is not successful at the step S1720, the station controller 190 will be informed of the specific fault at the step S1726.

If it is determined that the robotic manipulator is equipped with the correct end effector at the step S1720, the robotic manipulator proceeds to carry out coning/deconing at a step S1722. During the coning or deconing operation, the station controller 190 and/or the controller of the equipment control unit (e.g. 108a-f of Figure 1) monitors the coning process of installing the connector onto the container or the deconing process of removing the connector from the container. It should be appreciated that if a change of end effector is determined at the step S1718 to be not required, the step S1720 is skipped. This means that the station controller 190 and/or controller of the equipment control unit is instructed to carry out coning/deconing at the step S1722 and checks if the coning process or the deconing process is successfully completed at a step S1724. Once the present coning or deconing job is completed, the process ends at a step S1708, which means that S1522 of Figure 15 is completed. The station controller 190 will then update the TOS about the status of the present coning/deconing job and the TOS will transmit the location data of the next destination of the vehicle 104 in the station 100 to the vehicle 104, which is step S1524 of Figure 15.

If the station controller 190 is notified of a specific fault from the equipment control unit (e.g. 108a-f of Figure 1) at the step S1726, for instance, if a corner casting of a container is not empty during deconing process, a robotic manipulator out of range, the calculated probability of collision exceeds the predetermined threshold or if the impact sensor detects a collision, the station controller 190 sends a notification to a remote operator about the specific fault via his alerting device at a step S1728. The alerting device may be in the form of a mobile phone, desktop or any hand-held device. Error handling (or exception handling) process will be invoked at a step S1730. Error handling will be discussed in detail later with reference to Figure 19.

### Error Handling

Error handling (otherwise known as exception handling in the present disclosure) may be invoked at a step S1900 if any one of the predetermined errors occur (e.g. step S1728 in Figure 17, step S1828 in Figure 18). It is appreciated that although in the present embodiment, the same error handling process is triggered when the apparatus 100 requires a remote operator to review an error, it can be easily envisaged by a skilled person to have a different error handling process for each flow chart (such as a different error handling process for coning and deconing respectively).

The remote operator may use the remote surveillance system/supervision system 107 via an alerting device 1050 to review the error detected by the station 100 at a step S1902. If it is determined that the error is due to a fault arising from the station 100 at a step S1904, a further determination is required at a step S1918 to check if the fault can be cleared remotely. For instance, the remote operator may attempt to reinitialise the station 100 (e.g. instructing all equipment control units, sorter and storage device to stop all operations and return to their respective home positions). If the detected fault is able to be cleared remotely by intervention of a remote operator at the step S1918, the remote operator may inform the station controller 190 to continue with or repeat the current job at a step S1930. The error handling process then ends at a step S1916.

If the remote operator is unable to remotely clear the detected fault caused by the station 100 at the step S1918, the remote operator will determine whether the vehicle 104 is capable of moving to an exception handling area at a step S1920. In the case of an automated guided vehicle 104, if the unmanned vehicle 104 breaks down, a signal will be transmitted to the station controller 190. In the case of a prime mover 104 that is driven by a human driver, if the prime mover 104 breaks down, the driver can communicate with technicians or interact with an user interface (PMPC) placed in his vehicle. If the vehicle 104 is capable of moving to the exception handling area, the remote operator or the station controller 190 may request the TOS to instruct the vehicle 104 to move to the exception handling area and to indicate that the station 100 is down for operation at a step S1922. Steps 1908 to S1916 are subsequently processed for the vehicle 104 arranged to move to the exception handling area. Details of steps S1908 to S1916 would be discussed in detail in the following paragraph.

Although it is not illustrated in the flow chart in Figure 19, the TOS is configured to re-direct vehicles waiting in queue to enter the faulty station 100 to other operating station(s). In the event that the vehicle 104 is not capable of moving to the exception handling (e.g. the robotic manipulator is stuck to a corner casting, the vehicle breaks down etc.), the remote operator deploys a technician to the faulty station 100 for troubleshooting at a step S1924. If the fault can be successfully cleared by the deployed technician at a step S1926, the error handling process will continue with steps S1930 and S1916. Otherwise, if the detected fault cannot be cleared by the deployed technician, the technician will ensure that it is possible for the vehicle 104 to move out from the station to the exception handling area at a step S1928. Subsequently, the error handling process will proceed to the next step S1922 i.e. the TOS instructs the vehicle 104 to move to the exception handling area. In an example when station controller 190 is instructed to continue with the present coning or deconing job at the step S1930, the station controller 190 may be configured to determine whether the present coning or deconing job is completed partially before instructing a designated equipment control unit (e.g. 1008a-h of Figure 10) to coordinate with its respective storage and sorting device (e.g. 1006a-h of Figure 10) to complete the coning or deconing job. For instance, and referring to Figure 10, if three out of the four corner castings, such as 1025a-c, of a container to be coned 1022 have been installed with the required connector, the station controller 190 is arranged to initiate coning for the remaining corner casting 1025d.

If it is determined that the detected error is not due to a fault by the station 100 at the step S1904, the remote operator informs the station controller 190 and/or the TOS that the vehicle 104 needs to move to an exception handling area to perform the job manually at a step S1908. The scheduled coning or deconing operation is then completed manually by a technician at the exception handing area at a step S1910. The technician may also inform the remote operator and/or the TOS about the manual job completion at steps S1910 and S1912 respectively. The scheduled coning or deconing operation will be updated by correlating the job status with the container information and vehicle number (e.g. by communication through walkie-talkie or by visual inspection and inputting the required parameters through the alerting device 1050). Once the TOS is informed of the completion of the coning/deconing operation at the step S1912, the TOS informs the vehicle via in-vehicle communication infrastructure to move to the next job location at a step S1914. The error handling process then ends at the step S1916.

Examples of an error not due to a fault by the station 100 may include an instance where a connector is jammed at a corner casting during a deconing operation, and an instance where a possibility of collision between a robotic manipulator and the corner casting is determined to be high.

### Date communication between server, crew device (or alerting device) and apparatus

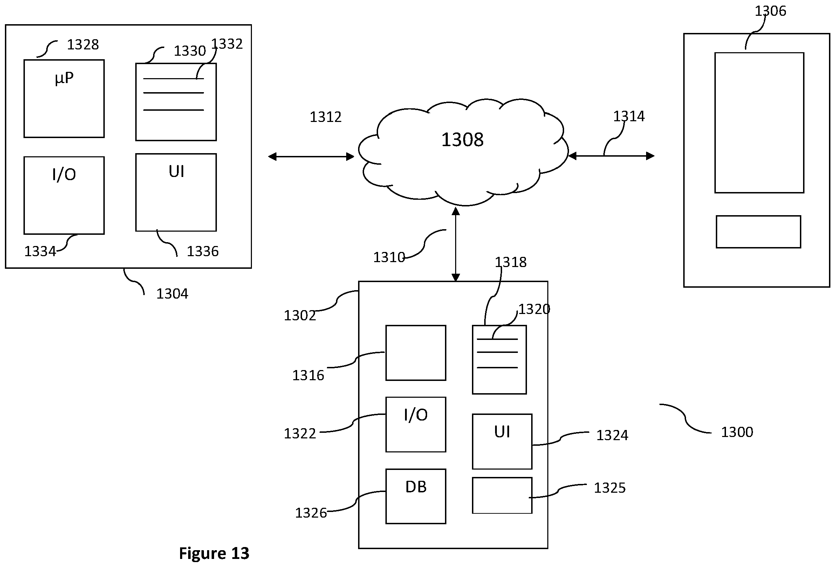

Figure 13 illustrates a data communication system 1300 according to an exemplary example of the present disclosure for controlling communication between an apparatus 1302 (e.g. each of 106a-106f in Figure 1 or each of 1006a-1006h in Figure 10 or controller 190 in Figure 1) for moving connectors for container coning and deconing, a server 1304 (i.e. Terminal Operating System 1250 in Figure 12A) for managing operations at a port facility and a crew device 1306 owned by a personnel working at the port facility. It is appreciated that the station controller 190 of Figure 1 may have the elements of the apparatus 1302. Any image processor, controller or processor mentioned in the present disclosure may also have the same elements as the apparatus 1302.

The apparatus 1302 may be an computing device and comprises a number of individual components including, but not limited to, processing unit 1316, a memory 1318 (e.g. a volatile memory such as a Random Access Memory (RAM) for the loading of executable instructions 1320, the executable instructions defining the functionality the apparatus 1302 carries out under control of the processing unit 1316. The apparatus 1302 also comprises a network module 1325 allowing the apparatus to communicate over the communications network 1308 (for example the internet). User interface 1324 is provided for user interaction and may comprise, for example, conventional computing peripheral devices such as display monitors, computer keyboards and the like. The apparatus 102 may also comprise a database 1326. It should also be appreciated that the database 1326 may not be local to the server apparatus 1302. The database 1326 may be a cloud database.

The processing unit 1316 is connected to input/output devices such as a computer mouse, keyboard/keypad, a display, headphones or microphones, a video camera and the like (not illustrated in Figure) via Input/Output (I/O) interfaces 1322. The components of the processing unit 1316 typically communicate via an interconnected bus (not illustrated in Figure 1) and in a manner known to the person skilled in the relevant art.

The processing unit 1316 may be connected to the network 1308, for instance, the Internet, via a suitable transceiver device (i.e. a network interface) or a suitable wireless transceiver, to enable access to e.g. the Internet or other network systems such as a wired Local Area Network (LAN) or Wide Area Network (WAN). The processing unit 1316 of the apparatus 1302 may also be connected to one or more external wireless communication enabled remote servers 1304 and crew devices 1306 through the respective communication links 1310, 1312, 1314 via the suitable wireless transceiver device e.g. a WiFi transceiver, Bluetooth module, Mobile telecommunication transceiver suitable for Global System for Mobile Communication (GSM), 3G, 3.5G, 4G, 5G telecommunication systems, or the like.

The crew device 1306 can be a computing or mobile device, for example, smart phones, tablet devices, and other handheld devices. The one or more crew devices 1306 may be able to communicate through other communications network, such as, wired network, mobile telecommunication networks, but these are omitted from Figure 1 for the sake of clarity. Instead of the system architecture described above for the computing or mobile device 1302, the crew device 1306 and/or the apparatus may be a computing or mobile device having the system architecture of the remote server 1304.

The remote server 1304 may comprise a number of individual components including, but not limited to, microprocessor 1328, a memory 1330 (e.g. a volatile memory such as a RAM) for the loading of executable instructions 1332, the executable instructions defining the functionality the remote server 1304 carries out under control of the processor 1328. The remote server 1304 also comprises a network module (not illustrated in Figure) allowing the remote server 1304 to communicate over the communications network 1308. User interface 1336 is provided for user interaction and control that may be in the form of a touch panel display and presence of a keypad as is prevalent in many smart phone and other handheld devices. The remote server 1304 may also comprise a database (not illustrated in Figure), which may not be local to the remote server 1304 but a cloud database. The remote server 1304 may include a number of other Input/Output (I/O) interfaces as well but they may be for connection with headphones or microphones, Subscriber identity module (SIM) card, flash memory card, USB based device, and the like, which are more for mobile device usage.

The software and one or more computer programs may include, for example, the client applications and may further include one or more software applications for e.g. instant messaging platform, audio/video playback, internet accessibility, operating the remote server 1304 and crew device 1306 (i.e. operating system), network security, file accessibility, database management, which are applications typically equipped on a desktop or portable (mobile) device. The software and one or more computer programs may be supplied to the user of the remote server 1304 or the crew device 1306 encoded on a data storage medium such as a CD-ROM, on a flash memory carrier or a Hard Disk Drive, and are to be read using a corresponding data storage medium drive for instance, a data storage device (not illustrated in Figure 1). Such application programs may also be downloaded from the network 1308. The application programs are read and controlled in its execution by the processing unit 1316 or microprocessor 1328. Intermediate storage of program data may be accomplished using RAM 1320 or 1330.

Furthermore, one or more of the steps of the computer programs or software may be performed in parallel rather than sequentially. One or more of the computer programs may be stored on any machine or computer readable medium that may be non-transitory in nature. The computer readable medium may include storage devices such as magnetic or optical disks, memory chips, or other storage devices suitable for interfacing with a general purpose computer or mobile device. The machine or computer readable medium may also include a hard-wired medium such as exemplified in the Internet system, or wireless medium such as exemplified in the Wireless LAN (WLAN) system. The computer program when loaded and executed on such a general-purpose computer effectively results in an apparatus that implements the steps of the computing methods in examples herein described.
In summary, examples of the present disclosure may have the following features.

There is provided an apparatus (e.g. 100 of Figure 1, 820a, 820b of Figure 8, 1000 of Figure 10) for container coning and/or deconing, wherein the apparatus comprises a processor (e.g. 190 of Figure 1, 1316 of Figure 13) for executing instructions to operate the apparatus; a store (e.g. 214 of Figure 2) for storing a plurality of connectors (e.g. 320 of Figure 3A); a sorter (e.g. 106a-f in Figure 1, 220 in Figure 2, 1006a-h in Figure 10) for identifying type of connector; a conveyor mechanism (e.g. 300 of Figure 3A) comprising a plurality of holders (e.g. 330 of Figure 3A) for holding the plurality of connectors, the conveyor mechanism being configured for moving one or more of the plurality of holders to a location (e.g. 326b in Figure 3C) for retrieving a connector used for coning a container or for moving one or more of the plurality of holders to a location (e.g. 326b in Figure 3C) for receiving a connector obtained from deconing a container; a dispensing mechanism (e.g. 310 of Figure 3A) configured to tilt one of the plurality of holders in a manner to dispense a connector out of the tilted holder; and a memory (e.g. 1318 in Figure 13) for storing indexing data (e.g. 1100 in Figure 11A) indicating a presence of a connector in each of the plurality of holders; a type of the connector that is held in each holder (e.g. 1100a in Figure 11A); and a position of each holder on the conveyor mechanism (e.g. 1100b in Figure 11A).

The sorter may be configured to pick up one connector stored in the store, identify type of the picked connector, orientate the picked connector to an orientation for placement into a holder; and place the orientated connector with type identified into one of the plurality of holders (e.g. 360 of Figure 3A) that is indicated as having no presence of a connector in the indexing data. The processor may be configured to operate the apparatus to update the indexing data in the memory to indicate presence of a connector in the holder containing the placed connector, and the identified type of the placed connector.

One of the plurality of holders mounted to the conveyor mechanism and movable along the conveyor mechanism may be configured such that a connector held by the holder is maintained in an upright orientation (e.g. as illustrated in Figure 4A) when moved by the conveyor mechanism and the connector is dispensed from the holder when the holder is tilted by the dispensing mechanism to a specific angle (α).

Optionally, the holder configured to maintain the connector in the upright orientation is configured with a heavier base (e.g. 370 of Figure 3D) and is pivotably mounted to the conveyor mechanism such that the heavier base would alter orientation of the holder to maintain the holding of the connector in the upright orientation due to gravity after the holder is tilted to the specific angle (e.g. α of Figure 4B) by the dispensing mechanism.

The apparatus may be operated to determine whether there is a holder (e.g. 360 of Figure 3A) on the conveyor mechanism available for storing a connector, and if, based on the indexing data, the apparatus determines that there is no holder on the conveyor mechanism available for storing the connector, the apparatus is operable to instruct the conveyor mechanism to move one or more holders (e.g. 330 of Figure 3A) holding one or more connectors to a location for the dispensing mechanism (e.g. 328b of Figure 3B) to dispense the one or more connectors; instruct the dispensing mechanism to dispense the one or more connectors in the one or more holders to the store; and update the indexing data to indicate no presence of a connector for each holder that dispensed a connector.

The apparatus may be operated to retrieve information of the container (e.g. 1200 of Figure 11B) from a server (e.g. 1250 in Figure 12A, 1304 in Figure 13); and determine an operation to be performed on the container (e.g. 102a, 102b in Figures 1 and 1022 of Figure 10) from the retrieved information of the container, wherein the operation is coning or deconing.

If the operation to be performed on the container is determined to be deconing, the apparatus is operable to identify, based on the retrieved information of the container, the type of a connector to be removed from the container; determine a position of a holder on the conveyor mechanism indicated as having no presence of a connector from the indexing data; instruct the conveyor mechanism to move the holder at the determined position to the location for receiving a connector obtained from deconing the container; instruct a robotic manipulator(e.g. 250 of Figure 2, 904 of Figure 9A, 1009a-h of Figure 11) to remove the connector from the container and place the removed connector into the moved holder based on the determined position; and update the indexing data to indicate presence of a connector in the holder containing the connector placed by the robotic manipulator, and the identified type of the connector placed by the robotic manipulator.

If the operation to be performed on the container is determined to be coning, the apparatus is operable to: identify, based on the retrieved information of the container, the type of a connector to be used during coning; determine, based on the indexing data and the identified type of the connector to be used, a position of a holder on the conveyor mechanism containing a connector of the type identified to be used during coning; instruct the conveyor mechanism to move the holder at the determined position to the location for retrieving a connector used for coning the container; instruct a robotic manipulator to retrieve the identified connector from the moved holder and perform coning by placing the identified connector onto the container; and update the indexing data to indicate no presence of a connector in the moved holder that held the identified connector retrieved for coning the container.

The apparatus may be configured to terminate coning or deconing and retract the robotic manipulator when a motion sensor detects movement of a vehicle (e.g. 104 of Figure 1, 840 of Figure 8, 1020 of Figure 10) carrying a container being coned or deconed, or movement of the container on a vehicle that is being coned or deconed during performing of coning or deconing by the robotic manipulator.

The robotic manipulator may comprise an end effector (e.g. 254 of Figure 2, 600 of Figures 6A-6C) and the end effector is configured to handle a specific type of connector during container coning or deconing.

The robotic manipulator may be configured to analyse if there is any jammed connector during coning or deconing by checking a torque control of the robotic manipulator; analyse a possibility of the robotic manipulator colliding with an obstacle in a movement trajectory of the robotic manipulator by determining the location of the container with respect to the robotic manipulator and predicting the movement trajectory of the robotic manipulator; analyse a possibility of the robotic manipulator colliding with an obstacle in a movement trajectory of the robotic manipulator by capturing one or more images when the robotic manipulator is in motion during coning or deconing and comparing with a set of reference images to determine if there is an obstacle along the movement trajectory; detect an impact of the robotic manipulator with an obstacle using an impact sensor on the robotic manipulator; and detect if a connector being handled by the robotic manipulator has been dropped.

The robotic manipulator may be configured to change the end effector to match the type of connector to be handled during coning or deconing after determining whether a change of the end effector is required, and if change of the end effector is required, the apparatus is configured to retrieve information about a location of a target end effector at an exchange store (e.g. 270 of Figure 2); instruct the robot manipulator to disengage an existing end effector mounted on the robotic manipulator at a predetermined location in the exchange store; and move to the location of the target end effector to engage the target end effector.

Each end effector may comprise at least one of a clamping device (e.g. 610 of Figure 6A), a twisting device (e.g. 630 of Figure 6A), a pushing device (620 of Figure 6A, 620a and 620b of Figures 6D-F) and a rotation device (e.g. 640 of Figure 6A) for installation or removal of the connector.

The apparatus may comprise an energy source for providing power to the apparatus, wherein the energy source is a solar panel, a portable generator, or one or more rechargeable batteries.

The apparatus may be fitted with a retractable shelter (e.g. 902 of Figure 9A) configured to operate with a weather sensor to extend and shelter a container being coned or deconed from environmental conditions according to input from the weather sensor.

The apparatus may further comprise a station controller (e.g. 190 of Figure 1) comprising a processor configured to execute instructions to control the station controller to operate as: a traffic management unit (e.g. 162 of Figure 1, 1010 of Figure 10) for directing movement of one or more vehicles carrying containers to the a location for performing a coning or deconing operation; and a vehicle number recognition unit (e.g. 150 of Figure 1) for receiving information relating to a vehicle number of the one or more vehicles entering the location for performing a coning or deconing operation; and a vehicle alignment unit (e.g. 140 and/or 142 of Figure 1) for directing the one or more vehicles entering the location for performing a coning or deconing operation to align in a predetermined manner; a notification unit for receiving one or more signals in an event of a predetermined exception and for sending notification to one or more alerting devices (e.g. 1050 of Figure 10) in data communication with the processor of the station controller.

The station controller may be configured to: identify an identification number on a container (e.g. 102a, 102b in Figures 1 and 14 and 1022 of Figure 10) through captured images of the container; assess physical condition of the container using imaging techniques performed on captured images of the container; and detect a position of a door of the container using imaging techniques performed on the captured images of the container, wherein the position of the door and any detected damage of the container is transmitted to a central server (e.g. 1250 in Figure 12A, 1304 in Figure 13).

Each alerting device may be arranged to be notified of one or more of the following predetermined exceptions: a connector has dropped before coning or deconing is completed; a connector is jammed in a corner casting; one of a plurality of robotic manipulators is faulty; a container is found to be damaged; information relating to a vehicle number of a vehicle entering the location for coning or deconing cannot be authenticated; and information relating to container number of a container carried by a vehicle for coning or deconing cannot be authenticated.

The one or more alerting devices may each be configured to provide one or more user selectable options to disable a robotic manipulator so that if a notification that the robotic manipulator is faulty is received, the robotic manipulator is determined to be operable via the one or more user selectable options.

The one or more alerting devices may each be configured to provide one or more user selectable options to re-initiate a coning or deconing operation so that if a notification that a connector has dropped during a coning or deconing operation is received, re-initiation of the coning or deconing operation is selectable via the one or more user selectable options.

The one or more alerting devices may each be configured to determine information relating to a vehicle number of a vehicle using imaging techniques on captured images of the vehicle.

The apparatus may comprise at least two of the conveyor mechanism and at least two of the dispensing mechanism, wherein the at least two of the dispensing mechanism is situated at the location where a connector used for coning a container is retrieved by the at least two of the conveyor mechanism, or where a connector obtained from deconing a container is received by the at least two of the conveyor mechanism.

Optionally, at least two of the conveyor mechanism are arranged adjacent to each other and each of the at least two conveyor mechanism is arranged within reach of a robotic manipulator so that each conveyor mechanism is able to move one or more of the plurality of holders to the location for retrieving the connector used for coning a container or for moving one or more of the plurality of holders to the location for receiving the connector obtained from deconing a container.

Optionally, the apparatus may be further configured such that if the identified type of a connector to be used during coning is not present in any holder on the conveyor mechanism, the apparatus is configured to identify, based on the retrieved information of the container and the indexing data, a compatible connector being held in a holder on the conveyor mechanism for performing coning operation of the container.

Optionally, if the identified type of a connector to be used during coning and the compatible connector is not present in any holder on the conveyor mechanism, the notification unit is configured to send a notification to the one or more alerting devices if the search count exceeds a predetermined number.

The apparatus may comprise a movable platform for moving a vehicle carrying one or more containers so as to align and/or orientate the vehicle to facilitate the coning or deconing of the one or more containers carried by the vehicle.

The apparatus may comprise a movable platform for moving one or more equipment control units configured for performing coning or deconing for one or more containers so as to align and/or orientate the one or more equipment control units to facilitate the coning or deconing of the one or more containers.

The apparatus may comprise a container transporter for carrying one or more containers; and a track for guiding the container transporter to move to a location for performing a coning or deconing operation.

There is also provided a method for container coning and/or deconing, wherein the method comprises a sorting step (e.g. S1800 of Figure 18A) for identifying type of connector for a plurality of connectors in a store; a conveying step for moving one or more of the plurality of holders of a conveyor mechanism to a location for retrieving a connector used for coning a container (e.g. S1832 of Figure 18B) or for moving one or more of the plurality of holders of a conveyor mechanism to a location for receiving a connector obtained from deconing a container (e.g. S1616 of Figure 16) and a dispensing step (e.g. S1620 of Figure 16, S1846 of Figure 18B) for tilting one of the plurality of holders in a manner to dispense a connector out of the one holder to the store; a storing step (e.g. S1622 of Figure 16, S1828 of Figure 18B) for storing indexing data indicating a presence of a connector in each of the plurality of holders, a type of the connector that is held in each holder, and a position of each holder on the conveyor mechanism.

The sorting step may comprise picking up one connector stored in the store; identifying type of the picked connector (e.g. S1806 of Figure 18A); orientating (e.g. S1814 of Figure 18A) the picked connector to a suitable orientation for placement into the holder; and placing the orientated connector with type identified into one of the plurality of holders that is indicated as having no presence of a connector in the indexing data (e.g. S1826 of Figure 18B); and an updating step for updating the indexing data to indicate presence of a connector in the holder containing the placed connector and the identified type of the place connector (e.g. S1828 of Figure 18B).

While the invention has been particularly shown and described with reference to specific embodiments, it should be understood by those skilled in the art that various changes in form and details may be made therein without departing from the scope of the invention as defined in the appended claims. The scope of the invention is thus indicated by the appended claims and all changes which come within the meaning and range of equivalency of the claims are therefore intended to be embraced.

## Claims

1. An apparatus (100, 820a, 820b, 1000) for container coning and/or deconing, wherein the apparatus (100, 820a, 820b, 1000) comprises:
a processor (190, 1316) for executing instructions to operate the apparatus (100, 820a, 820b, 1000);
a store (214) for storing a plurality of connectors (320); and
a conveyor mechanism (300) comprising a plurality of holders (330) for holding the plurality of connectors (320), the conveyor mechanism (300) being configured for moving one or more of the plurality of holders to a location (326b) for retrieving a connector used for coning a container (1200) or for moving one or more of the plurality of holders to a location (326b) for receiving a connector obtained from deconing a container (1200),
**characterised in that** the apparatus (100, 820a, 820b, 1000) further comprises:
a sorter (106a-f, 220, 1006a-h) for identifying type of connector;
a dispensing mechanism (310) configured to tilt one of the plurality of holders (330) in a manner to dispense a connector out of the tilted holder; and
a memory (1318) for storing indexing data (1100) indicating:
a presence of a connector in each of the plurality of holders (330);
a type of the connector that is held in each holder (1100a); and
a position of each holder (1100a) on the conveyor mechanism (300),
wherein the sorter (106a-f, 220, 1006a-h) is configured to
pick up one connector stored in the store (214),
identify type of the picked connector,
orientate the picked connector to an orientation for placement into a holder; and place the orientated connector with type identified into one of the plurality of holders(360) that is indicated as having no presence of a connector in the indexing data (1100), and
the processor (190, 1316) is configured to operate the apparatus (100, 820a, 820b, 1000) to update the indexing data (1100) in the memory to indicate
presence of a connector in the holder containing the placed connector, and
the identified type of the placed connector.

2. The apparatus (100, 820a, 820b, 1000) of claim 1, wherein the one of the plurality of holders to be tilted by the dispensing mechanism (310) is mounted to the conveyor mechanism (300) and movable along the conveyor mechanism (300) such that a connector held by the holder is maintained in an upright orientation when moved by the conveyor mechanism (300) and the connector is dispensed from the holder when the holder is tilted by the dispensing mechanism (310) to a specific angle (α).

3. The apparatus (100, 820a, 820b, 1000) of claim 2, wherein the holder (330, 360) configured to maintain the connector in the upright orientation is configured with a heavier base (370) and is pivotably mounted to the conveyor mechanism (300) such that the heavier base would alter orientation of the holder to maintain the holding of the connector in the upright orientation due to gravity after the holder is tilted to the specific angle (α) by the dispensing mechanism (310).

4. The apparatus (100, 820a, 820b, 1000) of any of the preceding claims, wherein the apparatus (100, 820a, 820b, 1000) is operable to determine whether there is a holder (360) on the conveyor mechanism (300) available for storing a connector, and if, based on the indexing data (1100), it is determined that there is no holder on the conveyor mechanism (300) available for storing the connector, the apparatus (100, 820a, 820b, 1000) is operable to:
instruct the conveyor mechanism (300) to move one or more holders (330) holding one or more connectors (320) to a location (328b) for the dispensing mechanism (310) to dispense the one or more connectors (320);
instruct the dispensing mechanism (310) to dispense the one or more connectors (320) in the one or more holders (330) to the store; and
update the indexing data (1100) to indicate
no presence of a connector for each holder that dispensed a connector.

5. The apparatus (100, 820a, 820b, 1000) of any of the preceding claims, wherein the apparatus (100, 820a, 820b, 1000) is operable to:
retrieve information of the container (1200) from a server (1250); and
determine an operation to be performed on the container (102a, 102b, 1022) from the retrieved information of the container (1200), wherein the operation is coning or deconing.

6. The apparatus (100, 820a, 820b, 1000) of claim 5, wherein if the operation is deconing, the apparatus (100, 820a, 820b, 1000) is operable to:
identify, based on the retrieved information of the container (1200), the type of a connector to be removed from the container (1200);
determine a position of a holder on the conveyor mechanism (300) indicated as having no presence of a connector from the indexing data (1100);
instruct the conveyor mechanism (300) to move the holder at the determined position to the location for receiving a connector obtained from deconing the container (1200);
instruct a robotic manipulator (250, 904, 1009a-h) to remove the connector from the container (1200) and place the removed connector into the moved holder based on the determined position; and
update the indexing data (1100) to indicate
presence of a connector in the holder containing the connector placed by the robotic manipulator (250, 904, 1009a-h), and
the identified type of the connector placed by the robotic manipulator (250, 904, 1009a-h).

7. The apparatus (100, 820a, 820b, 1000) of claim 5
wherein if the operation is coning, the apparatus (100, 820a, 820b, 1000) is operable to:
identify, based on the retrieved information of the container (1200), the type of a connector to be used during coning;
determine, based on the indexing data (1100) and the identified type of the connector to be used, a position of a holder on the conveyor mechanism (300) containing a connector of the type identified to be used during coning;
instruct the conveyor mechanism (300) to move the holder at the determined position to the location for retrieving a connector used for coning the container (1200);
instruct a robotic manipulator (250, 904, 1009a-h) to retrieve the identified connector from the moved holder and perform coning by placing the identified connector onto the container (1200); and
update the indexing data (1100) to indicate
no presence of a connector in the moved holder that held the identified connector retrieved for coning the container (1200).

8. The apparatus (100, 820a, 820b, 1000) of any one of claims 6 or 7, wherein the apparatus (100, 820a, 820b, 1000) is configured to terminate coning or deconing and retract the robotic manipulator (250, 904, 1009a-h) when a motion sensor detects movement of a vehicle (104) carrying a container (1200) being coned or deconed, or movement of the container (1200) on a vehicle (104) that is being coned or deconed during performing of coning or deconing by the robotic manipulator (250, 904, 1009a-h).

9. The apparatus (100, 820a, 820b, 1000) of any one of claims 6 to 8, wherein the robotic manipulator (250, 904, 1009a-h) comprises an end effector (254, 600) and the end effector (254, 600) is configured to handle a specific type or more than one type of connector during container coning or deconing.

10. The apparatus (100, 820a, 820b, 1000) of any one claims 6 to 9, wherein the robotic manipulator (250, 904, 1009a-h) is configured to:
analyse if there is any jammed connector during coning or deconing by checking a torque control of the robotic manipulator (250, 904, 1009a-h);
analyse a possibility of the robotic manipulator (250, 904, 1009a-h) colliding with an obstacle in a movement trajectory of the robotic manipulator (250, 904, 1009a-h) by determining the location of the container (1200) with respect to the robotic manipulator (250, 904, 1009a-h) and predicting the movement trajectory of the robotic manipulator (250, 904, 1009a-h);
analyse a possibility of the robotic manipulator (250, 904, 1009a-h) colliding with an obstacle in a movement trajectory of the robotic manipulator (250, 904, 1009a-h) by capturing one or more images when the robotic manipulator (250, 904, 1009a-h) is in motion during coning or deconing and comparing with a set of reference images to determine if there is an obstacle along the movement trajectory;
detect an impact of the robotic manipulator (250, 904, 1009a-h) with an obstacle using an impact sensor on the robotic manipulator (250, 904, 1009a-h); and
detect if a connector being handled by the robotic manipulator (250, 904, 1009a-h) has been dropped.

11. The apparatus (100, 820a, 820b, 1000) of claim 9, wherein the robotic manipulator (250, 904, 1009a-h) is configured to change the end effector (254, 600) to match the type of connector to be handled during coning or deconing after determining whether a change of the end effector (254, 600) is required, and if change of the end effector (254, 600) is required, the apparatus (100, 820a, 820b, 1000) is configured to:
retrieve information about a location of a target end effector (254, 600) at an exchange store (270);
instruct the robotic manipulator (250, 904, 1009a-h) to disengage an existing end effector mounted on the robotic manipulator (250, 904, 1009a-h) at a predetermined location in the exchange store (270); and
move to the location of the target end effector (254, 600) to engage the target end effector (254, 600).

12. The apparatus (100, 820a, 820b, 1000) of claim 9, wherein each end effector (254, 600) comprises at least one of a clamping device (610), a twisting device (630), a pushing device (620, 620a, 620b) and a rotation device (640) for installation or removal of the connector.

13. The apparatus (100, 820a, 820b, 1000) of any of the preceding claims, wherein the apparatus (100, 820a, 820b, 1000) comprises an energy source for providing power to the apparatus (100, 820a, 820b, 1000), wherein the energy source is a solar panel, a portable generator, or one or more rechargeable batteries.

14. The apparatus (100, 820a, 820b, 1000) of any one of the preceding claims, wherein the apparatus (100, 820a, 820b, 1000) is fitted with a retractable shelter (902) configured to operate with a weather sensor to extend and shelter a container (1200) being coned or deconed from environmental conditions according to input from the weather sensor.

15. The apparatus (100, 820a, 820b, 1000) of any one of the preceding claims, wherein the apparatus (100, 820a, 820b, 1000) comprises a station controller (190) comprising
a processor configured to execute instructions to control the station controller (190) to operate as:
a traffic management unit (162, 1010) for directing movement of one or more vehicles carrying containers to a location for performing a coning or deconing operation;
a vehicle number recognition unit (150) for receiving information relating to a vehicle number of the one or more vehicles entering the location for performing a coning or deconing operation;
a vehicle alignment unit (140, 142) for directing the one or more vehicles entering the location for performing a coning or deconing operation to align in a predetermined manner; and
a notification unit for receiving one or more signals in an event of a predetermined exception and for sending notification to one or more alerting devices (1050) in data communication with the processor of the station controller (190).

16. The apparatus (100, 820a, 820b, 1000) of claim 15, wherein the station controller (190) is configured to:
identify an identification number on a container (102a, 102b, 1022) through captured images of the container (102a, 102b, 1022);
assess physical condition of the container (102a, 102b, 1022) using imaging techniques performed on captured images of the container (102a, 102b, 1022); and
detect a position of a door of the container (102a, 102b, 1022) using imaging techniques performed on the captured images of the container (102a, 102b, 1022),
wherein the position of the door and any detected damage of the container (102a, 102b, 1022) is transmitted to a central server (1250, 1304).

17. The apparatus (100, 820a, 820b, 1000) of claim 15 or 16, wherein the alerting device (1050) is notified of one or more of the following predetermined exceptions:
a connector has dropped before coning or deconing is completed;
a connector is jammed in a corner casting;
one of a plurality of robotic manipulators (250, 904, 1009a-h) is faulty;
a container is found to be damaged;
information relating to a vehicle number of a vehicle (104) entering the location for coning or deconing cannot be authenticated; and
information relating to container number of a container carried by a vehicle (104) for coning or deconing cannot be authenticated.

18. The apparatus (100, 820a, 820b, 1000) of any one of claims 15 to 17, wherein the one or more alerting devices (1050) is each configured to provide one or more user selectable options to disable a robotic manipulator (250, 904, 1009a-h) so that if a notification that the robotic manipulator (250, 904, 1009a-h) is faulty is received, the robotic manipulator (250, 904, 1009a-h) is determined to be operable via the one or more user selectable options.

19. The apparatus (100, 820a, 820b, 1000) of any one of claims 15 to 18, wherein the one or more alerting devices (1050) is each configured to provide one or more user selectable options to re-initiate a coning or deconing operation so that if a notification that a connector has dropped during a coning or deconing operation is received, re-initiation of the coning or deconing operation is selectable via the one or more user selectable options.

20. The apparatus (100, 820a, 820b, 1000) of any one of claims 15 to 19, wherein the one or more alerting devices (1050) is configured to determine information relating to a vehicle number of a vehicle (104) or container number of container(s) on a vehicle (104) using imaging techniques on captured images of the vehicle (104).

21. The apparatus (100, 820a, 820b, 1000) of any one of the preceding claims, wherein the apparatus (100, 820a, 820b, 1000) comprises at least two of the conveyor mechanism (300) and at least two of the dispensing mechanism (310), wherein the at least two of the dispensing mechanism (310) is situated at the location where a connector used for coning a container (1200) is retrieved by the at least two of the conveyor mechanism (300), or where a connector obtained from deconing a container (1200) is received by the at least two of the conveyor mechanism (300).

22. The apparatus (100, 820a, 820b, 1000) of claim 7, wherein if the identified type of a connector to be used during coning is not present in any holder on the conveyor mechanism (300), the apparatus (100, 820a, 820b, 1000) is configured to identify, based on the retrieved information of the container and the indexing data (1100), a compatible connector being held in a holder on the conveyor mechanism (300) for performing coning operation of the container (1200).

23. The apparatus (100, 820a, 820b, 1000) of claim 15, wherein if the identified type of a connector to be used during coning and the compatible connector is not present in any holder on the conveyor mechanism (300), a search count is being incremented, and
wherein the notification unit is configured to send a notification to one or more alerting devices (1050) if the search count exceeds a predetermined number.

24. The apparatus (100, 820a, 820b, 1000) as claimed in any one of the preceding claims, wherein the apparatus (100, 820a, 820b, 1000) comprises:
a movable platform (2000) for moving a vehicle (104) carrying one or more containers so as to align and/or orientate the vehicle (104) to facilitate the coning or deconing of the one or more containers carried by the vehicle (104).

25. The apparatus (100, 820a, 820b, 1000) as claimed in any one of the preceding claims, wherein the apparatus (100, 820a, 820b, 1000) comprises:
a movable platform (2100) for moving one or more equipment control units (108a-f, 1008a-h) configured for performing coning or deconing for one or more containers so as to align and/or orientate the one or more equipment control units to facilitate the coning or deconing of the one or more containers.

26. The apparatus (100, 820a, 820b, 1000) as claimed in any one of the preceding claims, wherein the apparatus (100, 820a, 820b, 1000) comprises:
a container transporter (104) for carrying one or more containers; and
a track for guiding the container transporter (104) to move to a location for performing a coning or deconing operation.

27. A method for container coning and/or deconing, wherein the method comprises:
a conveying step for moving one or more of a plurality of holders mounted to a conveyor mechanism to a location for retrieving a connector used for coning a container (S1832) or for moving one or more of a plurality of holders mounted to a conveyor mechanism to a location for receiving a connector obtained from deconing a container (S1616),
**characterised in that** the method further comprises:
a sorting step (S1800) for identifying type of connector for a plurality of connectors in a store;
a dispensing step (S1620, S1846) for tilting one of the plurality of holders in a manner to dispense a connector out of the one holder to the store;
a storing step (S1622, S1828) for storing indexing data indicating:
a presence of a connector in each of the plurality of holders;
a type of the connector that is held in each holder; and
a position of each holder on the conveyor mechanism,
wherein the sorting step comprises:
picking up one connector stored in the store;
identifying type of the picked connector;
orientating (S1814) the picked connector to a suitable orientation for placement into the holder; and
placing the orientated connector with type identified into one of the plurality of holders that is indicated as having no presence of a connector in the indexing data; and
an updating step (S1828) for updating the indexing data to indicate
presence of a connector in the holder containing the placed connector and the identified type of the place connector.

## Patentansprüche

1. Vorrichtung (100, 820a, 820b, 1000) zur Containerkonisierung und/oder -dekonisierung, wobei die Vorrichtung (100, 820a, 820b, 1000) umfasst:
einen Prozessor (190, 1316) zum Ausführen von Anweisungen zum Betrieb der Vorrichtung (100, 820a, 820b, 1000) ;
ein Lager (214) zum Lagern einer Vielzahl von Verbindern (320); und
einen Fördermechanismus (300), der eine Vielzahl von Behältern (330) zum Halten der Vielzahl von Verbindern (320) umfasst, wobei der Fördermechanismus (300) dazu ausgelegt ist, einen oder mehrere der Vielzahl von Behältern an einen Ort (326b) zum Entnehmen eines zur Konisierung eines Containers (1200) verwendeten Verbinders zu bewegen, oder um einen oder mehrere der Vielzahl von Behältern an einen Ort (326b) zum Empfangen eines bei der Dekonisierung eines Containers (1200) erhaltenen Verbinders zu bewegen,
**dadurch gekennzeichnet, dass** die Vorrichtung (100, 820a, 820b, 1000) ferner umfasst:
einen Sortierer (106a-f, 220, 1006a-h) zum Identifizieren der Art des Verbinders;
einen Ausgabemechanismus (310), der dazu ausgelegt ist, einen der Vielzahl von Behältern (330) in einer Weise zu kippen, dass ein Verbinder aus dem gekippten Behälter ausgegeben wird; und
einen Speicher (1318) zum Speichern von Indizierungsdaten (1100), die Folgendes angeben:
das Vorhandensein eines Verbinders in jedem der Vielzahl von Behältern (330);
eine Art des Verbinders, der in jedem Behälter (1100a) gehalten wird; und
eine Position jedes Behälters (1100a) auf dem Fördermechanismus (300),
wobei der Sortierer (106a-f, 220, 1006a-h) dazu ausgelegt ist,
einen im Lager (214) gelagerten Verbinder aufzunehmen,
die Art des aufgenommenen Verbinders zu identifizieren,
den aufgenommenen Verbinder zum Einlegen in einen Behälter auszurichten; und
den ausgerichteten Verbinder identifizierter Art in einen der Vielzahl von Behältern (360) zu legen, der in den Indizierungsdaten (1100) als kein Vorhandensein eines Verbinders angegeben ist, und
der Prozessor (190, 1316) dazu ausgelegt ist, die Vorrichtung (100, 820a, 820b, 1000) zu betreiben, um die Indizierungsdaten (1100) im Speicher zu aktualisieren, um Folgendes anzugeben:
das Vorhandensein eines Verbinders in dem Behälter, der den eingelegten Verbinder enthält, und
die identifizierte Art des platzierten Verbinders.

2. Vorrichtung (100, 820a, 820b, 1000) gemäß Anspruch 1, wobei der eine aus der Vielzahl von Behältern, der durch den Ausgabemechanismus (310) gekippt werden soll, an dem Fördermechanismus (300) so angebracht und entlang des Fördermechanismus (300) bewegbar ist, dass ein durch den Behälter gehaltener Verbinder beim Bewegen durch den Fördermechanismus (300) in einer aufrechten Ausrichtung gehalten wird, und der Verbinder durch den Behälter ausgegeben wird, wenn der Behälter durch den Ausgabemechanismus (310) auf einen bestimmten Winkel (α) gekippt wird.

3. Vorrichtung (100, 820a, 820b, 1000) gemäß Anspruch 2, wobei der Behälter (330, 360), der dazu ausgelegt ist, den Verbinder in der aufrechten Ausrichtung zu halten, mit einer schwereren Basis (370) ausgelegt ist und schwenkbar an dem Fördermechanismus (300) so angebracht ist, dass die schwerere Basis die Ausrichtung des Behälters ändern würde, um das Halten des Verbinders in der aufrechten Ausrichtung aufgrund der Schwerkraft beizubehalten, nachdem der Behälter durch den Ausgabemechanismus (310) auf den bestimmten Winkel (α) gekippt ist.

4. Vorrichtung (100, 820a, 820b, 1000) gemäß einem der vorhergehenden Ansprüche, wobei die Vorrichtung (100, 820a, 820b, 1000) betreibbar ist, um zu ermitteln, ob es einen zum Lagern eines Verbinders verfügbaren Behälter (360) auf dem Fördermechanismus (300) gibt, und wenn basierend auf den Indizierungsdaten (1100) ermittelt wird, das es keinen zum Lagern des Verbinders verfügbaren Behälter auf dem Fördermechanismus (300) gibt, die Vorrichtung (100, 820a, 820b, 1000) dazu betreibbar ist:
den Fördermechanismus (300) anzuweisen, einen oder mehrere Behälter (330), die einen oder mehrere Verbinder (320) halten, an einen Ort (328b) zu bewegen, an dem der Ausgabemechanismus (310) den einen oder die mehreren Verbinder (320) ausgeben soll;
den Ausgabemechanismus (310) anzuweisen, den einen oder die mehreren Verbinder (320) in dem einen oder den mehreren Behältern (330) an das Lager auszugeben; und
die Indizierungsdaten (1100) zu aktualisieren, um für jeden Behälter, der einen Verbinder ausgegeben hat, kein Vorhandensein eines Verbinders anzugeben.

5. Vorrichtung (100, 820a, 820b, 1000) gemäß einem der vorhergehenden Ansprüche, wobei die Vorrichtung (100, 820a, 820b, 1000) dazu betreibbar ist:
Informationen über den Container (1200) aus einem Server (1250) abzurufen; und
einen an dem Container (102a, 102b, 1022) durchzuführenden Vorgang aus den abgerufenen Informationen des Containers (1200) zu ermitteln, wobei der Vorgang Konisierung oder Dekonisierung ist.

6. Vorrichtung (100, 820a, 820b, 1000) gemäß Anspruch 5, wobei, wenn der Vorgang Dekonisierung ist, die Vorrichtung (100, 820a, 820b, 1000) dazu betreibbar ist:
basierend auf den abgerufenen Informationen des Containers (1200) die Art eines Verbinders zu identifizieren, der von dem Container (1200) zu entfernen ist;
eine Position eines Behälters auf dem Fördermechanismus (300) zu ermitteln, die anhand der Indizierungsdaten (1100) als kein Vorhandensein eines Verbinders angegeben ist;
den Fördermechanismus (300) anzuweisen, den Behälter an der ermittelten Position an den Ort zum Empfangen eines bei der Dekonisierung des Containers (1200) erhaltenen Verbinders zu bewegen;
Anweisen eines robotischen Manipulators (250, 904, 1009a-h), den Verbinder vom Container (1200) zu entfernen und den entfernten Verbinder in den bewegten Behälter basierend auf der ermittelten Position zu legen; und
die Indizierungsdaten (1100) zu aktualisieren, um Folgendes anzugeben:
das Vorhandensein eines Verbinders in dem Behälter, der den durch den robotischen Manipulator (250, 904, 1009a-h) eingelegten Verbinder enthält, und
die identifizierte Art des durch den robotischen Manipulator (250, 904, 1009a-h) eingelegten Verbinders.

7. Vorrichtung (100, 820a, 820b, 1000) gemäß Anspruch 5,
wobei, wenn der Vorgang Konisierung ist, die Vorrichtung (100, 820a, 820b, 1000) dazu betreibbar ist:
basierend auf den abgerufenen Informationen des Containers (1200) die Art eines während der Konisierung zu verwendenden Verbinders zu identifizieren;
basierend auf den Indizierungsdaten (1100) und der identifizierten Art des zu verwendenden Verbinders eine Position eines Behälters auf dem Fördermechanismus (300) zu ermitteln, der einen Verbinder der identifizierten Art enthält, der während der Konisierung verwendet werden soll;
den Fördermechanismus (300) anzuweisen, den Behälter an der ermittelten Position an den Ort zu bewegen, an der ein zur Konisierung des Containers (1200) verwendeter Verbinder zu entnehmen ist;
einen robotischen Manipulator (250, 904, 1009a-h) anzuweisen, den identifizierten Verbinder aus dem bewegten Behälter zu entnehmen und eine Konisierung durchzuführen, indem der identifizierte Verbinder auf den Container (1200) gelegt wird; und
die Indizierungsdaten (1100) zu aktualisieren, um Folgendes anzugeben:
kein Vorhandensein eines Verbinders in dem bewegten Behälter, der den identifizierten Verbinder enthielt, der zur Konisierung des Containers (1200) entnommen wurde.

8. Vorrichtung (100, 820a, 820b, 1000) gemäß einem der Ansprüche 6 oder 7, wobei die Vorrichtung (100, 820a, 820b, 1000) dazu ausgelegt ist, die Konisierung oder Dekonisierung zu beenden und den robotischen Manipulator (250, 904, 1009a-h) zurückzuziehen, wenn ein Bewegungssensor eine Bewegung eines Fahrzeugs (104), das einen Container (1200) trägt, der konisiert oder dekonisiert wird, oder eine Bewegung des Containers (1200) auf einem Fahrzeug (104), das konisiert oder kondensiert wird, während der Durchführung der Konisierung oder Dekonisierung durch den robotischen Manipulator (250, 904, 1009a-h) erfasst.

9. Vorrichtung (100, 820a, 820b, 1000) gemäß einem der Ansprüche 6 bis 8, wobei der robotische Manipulator (250, 904, 1009a-h) einen Endeffektor (254, 600) umfasst und der Endeffektor (254, 600) dazu ausgelegt ist, während der Containerkonisierung oder -dekonisierung eine bestimmte Art oder mehr als eine Art von Verbinder handzuhaben.

10. Vorrichtung (100, 820a, 820b, 1000) gemäß einem der Ansprüche 6 bis 9, wobei der robotische Manipulator (250, 904, 1009a-h) dazu ausgelegt ist:
durch Überprüfen einer Drehmomentsteuerung des robotischen Manipulators (250, 904, 1009a-h) zu überprüfen, ob sich der Verbinder während der Konisierung oder Dekonisierung verklemmt hat;
eine Möglichkeit zu analysieren, dass der robotische Manipulator (250, 904, 1009a-h) in einer Bewegungsbahn des robotischen Manipulators (250, 904, 1009a-h) mit einem Hindernis kollidiert, indem die Position des Containers (1200) in Bezug auf den robotischen Manipulator (250, 904, 1009a-h) ermittelt und die Bewegungsbahn des robotischen Manipulators (250, 904, 1009a-h) vorhergesagt wird;
die Möglichkeit zu analysieren, dass der robotische Manipulator (250, 904, 1009a-h) mit einem Hindernis in einer Bewegungsbahn des robotischen Manipulators (250, 904, 1009a-h) kollidiert, indem ein oder mehrere Bilder aufgenommen werden, wenn sich der robotische Manipulator (250, 904, 1009a-h) während der Konisierung oder Dekonisierung in Bewegung befindet, und mit einem Satz von Referenzbildern verglichen werden, um zu ermitteln, ob ein Hindernis entlang der Bewegungsbahn vorhanden ist;
einen Aufprall des robotischen Manipulators (250, 904, 1009a-h) auf ein Hindernis unter Verwendung eines Stoßsensors an dem robotischen Manipulator (250, 904, 1009a-h) zu erfassen; und
zu erfassen, ob ein durch den robotischen Manipulator (250, 904, 1009a-h) gehandhabter Verbinder heruntergefallen ist.

11. Vorrichtung (100, 820a, 820b, 1000) gemäß Anspruch 9, wobei der robotische Manipulator (250, 904, 1009a-h) dazu ausgelegt ist, den Endeffektor (254, 600) zu wechseln, um ihn an die Art des Verbinders anzupassen, der während der Konisierung oder Dekonisierung gehandhabt werden soll, nachdem ermittelt wurde, ob ein Wechsel des Endeffektors (254, 600) erforderlich ist, und wenn ein Wechsel des Endeffektors (254, 600) erforderlich ist, die Vorrichtung (100, 820a, 820b, 1000) dazu ausgelegt ist:
Informationen über den Ort eines Soll-Endeffektors (254, 600) in einem Wechsellager (270) abzurufen;
den robotischen Manipulator (250, 904, 1009a-h) anzuweisen, einen vorhandenen Endeffektor, der an dem robotischen Manipulator (250, 904, 1009a-h) angebracht ist, an einem vorbestimmten Ort in dem Wechsellager (270) zu trennen; und
sich an den Ort des Soll-Endeffektors (254, 600) zu bewegen, um den Soll-Endeffektor (254, 600) anzubringen.

12. Vorrichtung (100, 820a, 820b, 1000) gemäß Anspruch 9, wobei jeder Endeffektor (254, 600) mindestens eine Klemmvorrichtung (610), eine Verdrehvorrichtung (630), eine Schiebevorrichtung (620, 620a, 620b) und eine Drehvorrichtung (640) zur Installation oder Entfernung des Verbinders umfasst.

13. Vorrichtung (100, 820a, 820b, 1000) gemäß einem der vorhergehenden Ansprüche, wobei die Vorrichtung (100, 820a, 820b, 1000) eine Energiequelle zur Versorgung der Vorrichtung (100, 820a, 820b, 1000) mit Strom umfasst, wobei die Energiequelle ein Solarpanel, ein tragbarer Generator oder eine oder mehrere wiederaufladbare Batterien ist.

14. Vorrichtung (100, 820a, 820b, 1000) gemäß einem der vorhergehenden Ansprüche, wobei die Vorrichtung (100, 820a, 820b, 1000) mit einer einziehbaren Schutzvorrichtung (902) ausgestattet ist, die dazu ausgelegt ist, mit einem Wettersensor zusammenzuwirken, um einen Container (1200), der konisiert oder dekonisiert wird, gemäß der Eingabe des Wettersensors auszufahren und vor Umweltbedingungen zu schützen.

15. Vorrichtung (100, 820a, 820b, 1000) gemäß einem der vorhergehenden Ansprüche, wobei die Vorrichtung (100, 820a, 820b, 1000) eine Stationssteuervorrichtung (190) umfasst, die Folgendes umfasst:
einen Prozessor, der dazu ausgelegt ist, Anweisungen auszuführen, um die Stationssteuervorrichtung (190) so zu steuern, dass sie arbeitet als:
eine Verkehrsverwaltungseinheit (162, 1010) zum Leiten der Bewegung eines oder mehrerer Fahrzeuge, die Container transportieren, an einen Ort, an dem ein Konisierungs- oder Dekonisierungsvorgang durchgeführt wird;
eine Fahrzeugnummernerkennungseinheit (150) zum Empfangen von Informationen bezüglich einer Fahrzeugnummer des einen oder der mehreren Fahrzeuge, die in den Ort zum Durchführen eines Konisierungs- oder Dekonisierungsvorgangs einfahren;
eine Fahrzeugausrichtungseinheit (140, 142) zum Leiten des einen oder der mehreren Fahrzeuge, die zum Durchführen eines Konisierungs- oder Dekonisierungsvorgangs in den Ort einfahren, sodass sich diese in einer vorbestimmten Weise ausrichten; und
eine Benachrichtigungseinheit zum Empfangen eines oder mehrerer Signale im Falle einer vorbestimmten Ausnahme und zum Senden einer Benachrichtigung an eine oder mehrere Warnvorrichtungen (1050), die in Datenkommunikation mit dem Prozessor der Stationssteuervorrichtung (190) stehen.

16. Vorrichtung (100, 820a, 820b, 1000) gemäß Anspruch 15, wobei die Stationssteuervorrichtung (190) dazu ausgelegt ist:
durch aufgenommene Bilder eines Containers (102a, 102b, 1022) eine Identifikationsnummer an dem Container (102a, 102b, 1022) zu identifizieren;
den physischen Zustand des Containers (102a, 102b, 1022) unter Verwendung von Bildgebungsverfahren, die an aufgenommenen Bildern des Containers (102a, 102b, 1022) durchgeführt werden, zu bewerten; und
eine Position einer Tür des Containers (102a, 102b, 1022) unter Verwendung von Bildgebungsverfahren, die an den aufgenommenen Bildern des Containers (102a, 102b, 1022) durchgeführt werden, zu erfassen,
wobei die Position der Tür und jede erfasste Beschädigung des Containers (102a, 102b, 1022) an einen zentralen Server (1250, 1304) übertragen wird.

17. Vorrichtung (100, 820a, 820b, 1000) gemäß Anspruch 15 oder 16, wobei die Warnvorrichtung (1050) über eine oder mehrere der folgenden vorbestimmten Ausnahmen benachrichtigt wird:
ein Verbinder ist abgefallen, bevor die Konisierung oder Dekonisierung abgeschlossen ist;
ein Verbinder ist in einem Eckgussteil eingeklemmt;
ein einer Vielzahl von robotischen Manipulatoren (250, 904, 1009a-h) ist defekt;
ein Container wird als beschädigt aufgefunden;
die Informationen über die Fahrzeugnummer eines Fahrzeugs (104), das in den Ort zur Konisierung oder Dekonisierung einfährt, kann nicht authentifiziert werden; und
die Informationen über die Containernummer eines Containers, der durch ein Fahrzeug (104) zur Konisierung oder Dekonisierung befördert wird, kann nicht authentifiziert werden.

18. Vorrichtung (100, 820a, 820b, 1000) gemäß einem der Ansprüche 15 bis 17, wobei die eine oder die Vielzahl von Warnvorrichtungen (1050) jeweils dazu ausgelegt sind, eine oder mehrere durch den Benutzer auswählbare Optionen zum Deaktivieren eines robotischen Manipulators (250, 904, 1009a-h) bereitzustellen, sodass, wenn eine Benachrichtigung empfangen wird, dass der robotische Manipulator (250, 904, 1009a-h) fehlerhaft ist, der robotische Manipulator (250, 904, 1009a-h) über die eine oder die mehreren durch den Benutzer auswählbaren Optionen als betriebsfähig ermittelt wird.

19. Vorrichtung (100, 820a, 820b, 1000) gemäß einem der Ansprüche 15 bis 18, wobei die eine oder die mehreren Warnvorrichtungen (1050) jeweils dazu ausgelegt sind, eine oder mehrere durch den Benutzer auswählbare Optionen zum erneuten Einleiten eines Konisierungs- oder Dekonisierungsvorgangs bereitzustellen, sodass, wenn eine Benachrichtigung empfangen wird, dass ein Verbinder während eines Konisierungs- oder Dekonisierungsvorgangs heruntergefallen ist, das erneute Einleiten des Konisierungs- oder Dekonisierungsvorgangs über die eine oder die mehreren durch den Benutzer auswählbaren Optionen ausgewählt werden kann.

20. Vorrichtung (100, 820a, 820b, 1000) gemäß einem der Ansprüche 15 bis 19, wobei die eine oder die mehreren Warnvorrichtungen (1050) dazu ausgelegt sind, Informationen in Bezug auf eine Fahrzeugnummer eines Fahrzeugs (104) oder eine Containernummer eines Containers oder mehrerer Container auf einem Fahrzeug (104) unter Verwendung von Bildgebungsverfahren an aufgenommenen Bildern des Fahrzeugs (104) zu ermitteln.

21. Vorrichtung (100, 820a, 820b, 1000) gemäß einem der vorhergehenden Ansprüche, wobei die Vorrichtung (100, 820a, 820b, 1000) mindestens zwei des Fördermechanismus (300) und mindestens zwei des Ausgabemechanismus (310) umfasst, wobei die mindestens zwei des Ausgabemechanismus (310) an dem Ort angeordnet sind, an dem ein Verbinder, der zur Konisierung eines Containers (1200) verwendet wird, durch die mindestens zwei des Fördermechanismus (300) aufgenommen wird, oder an dem ein Verbinder, der bei der Dekonisierung eines Containers (1200) erhalten wird, durch die mindestens zwei des Fördermechanismus (300) aufgenommen wird.

22. Vorrichtung (100, 820a, 820b, 1000) gemäß Anspruch 7, wobei die Vorrichtung (100, 820a, 820b, 1000) dazu ausgelegt ist, basierend auf den abgerufenen Informationen des Containers und der Indizierungsdaten (1100) einen kompatiblen Verbinder zu identifizieren, der in einem Behälter auf dem Fördermechanismus (300) gehalten wird, um einen Konisierungsvorgang des Containers (1200) durchzuführen, wenn die identifizierte Art eines Verbinders, der während des Konisierungsvorgangs verwendet werden soll, in keinem Behälter auf dem Fördermechanismus (300) vorhanden ist.

23. Vorrichtung (100, 820a, 820b, 1000) gemäß Anspruch 15, wobei, wenn die identifizierte Art eines Verbinders, die während der Konisierung zu verwenden ist, und der kompatible Verbinder in keinem Behälter auf dem Fördermechanismus (300) vorhanden ist, ein Suchzählwert erhöht wird, und
wobei die Benachrichtigungseinheit dazu ausgelegt ist, eine Benachrichtigung an eine oder mehrere Warnvorrichtungen (1050) zu senden, wenn der Suchzählwert eine bestimmte Zahl überschreitet.

24. Vorrichtung (100, 820a, 820b, 1000) gemäß einem der vorhergehenden Ansprüche, wobei die Vorrichtung (100, 820a, 820b, 1000) umfasst:
eine bewegbare Plattform (2000) zum Bewegen eines Fahrzeugs (104), das einen oder mehrere Container trägt, um das Fahrzeug (104) auszurichten und/oder zu orientieren, um die Konisierung oder Dekonisierung des einen oder der Vielzahl von Containern, die durch das Fahrzeug (104) getragen werden, zu ermöglichen.

25. Vorrichtung (100, 820a, 820b, 1000) gemäß einem der vorhergehenden Ansprüche, wobei die Vorrichtung (100, 820a, 820b, 1000) umfasst:
eine bewegbare Plattform (2100) zum Bewegen einer oder mehrerer Ausrüstungssteuereinheiten (108a-f, 1008a-h), die zum Durchführen von Konisierung oder Dekonisierung für einen oder mehrere Container ausgelegt sind, um die eine oder mehreren Ausrüstungssteuereinheiten auszurichten und/oder zu orientieren, um die Konisierung oder Dekonisierung des einen oder der mehreren Container zu ermöglichen.

26. Vorrichtung (100, 820a, 820b, 1000) gemäß einem der vorhergehenden Ansprüche, wobei die Vorrichtung (100, 820a, 820b, 1000) umfasst:
einen Containertransporter (104) zum Transportieren eines oder mehrerer Container; und
eine Spur zum Führen des Containertransporters (104), damit dieser sich an einen Ort bewegt, an dem ein Konisierungs- oder Dekonisierungsvorgang durchgeführt werden soll.

27. Verfahren zur Containerkonisierung und/oder - dekonisierung, wobei das Verfahren umfasst:
einen Förderschritt zum Bewegen eines oder einer Vielzahl von Behältern, die an einem Fördermechanismus angebracht sind, an einen Ort zum Aufnehmen eines Verbinders, der zur Konisierung eines Containers (S1832) verwendet wird, oder zum Bewegen eines oder mehrerer einer Vielzahl von Behältern, die an einem Fördermechanismus angebracht sind, an einen Ort zum Aufnehmen eines bei der Dekonisierung eines Containers (S1616) erhaltenen Verbinders,
**dadurch gekennzeichnet, dass** das Verfahren ferner umfasst:
einen Sortierschritt (S1800) zum Identifizieren der Art eines Verbinders für eine Vielzahl von Verbindern in einem Lager;
einen Ausgabeschritt (S1620, S1846) zum Kippen eines der Vielzahl von Behältern in einer Weise, dass ein Verbinder aus dem einen Behälter in das Lager ausgegeben wird;
einen Speicherschritt (S1622, S1828) zum Speichern von Indizierungsdaten, die Folgendes angeben:
das Vorhandensein eines Verbinders in jedem der Vielzahl von Behältern;
eine Art des Verbinders, der in jedem Behälter gehalten wird; und
eine Position jedes Behälters auf dem Fördermechanismus,
wobei der Sortierschritt umfasst:
Aufnehmen eines im Lager gelagerten Verbinders;
Identifizieren der Art des aufgenommenen Verbinders;
Ausrichten (S1814) des aufgenommenen Verbinders in eine geeignete Ausrichtung zum Einlegen in den Behälter; und
Einlegen des ausgerichteten Verbinders der identifizierten Art in einen der Vielzahl von Behältern, der in den Indizierungsdaten als kein Vorhandensein eines Verbinders angegeben ist; und
einen Aktualisierungsschritt (S1828) zum Aktualisieren der Indizierungsdaten, um Folgendes anzugeben:
Vorhandensein eines Verbinders in dem Behälter, der den eingelegten Verbinder enthält, und die identifizierte Art des eingelegten Verbinders.

## Revendications

1. Appareil (100, 820a, 820b, 1000) pour la fixation de cônes à et/ou le retrait de cônes d'un conteneur, l'appareil (100, 820a, 820b, 1000) comprenant :
un processeur (190, 1316) destiné à exécuter des instructions pour faire fonctionner l'appareil (100, 820a, 820b, 1000) ;
une réserve (214) destinée à stocker une pluralité de connecteurs (320) ; et
un mécanisme de transport (300) comprenant une pluralité de supports (330) destinée à tenir la pluralité de connecteurs (320), le mécanisme de transport (300) étant configuré pour déplacer l'un ou plusieurs de la pluralité de supports jusqu'à un emplacement (326b) pour récupérer un connecteur utilisé pour la fixation de cônes à un conteneur (1200) ou pour déplacer l'un ou plusieurs de la pluralité de supports jusqu'à un emplacement (326b) pour recevoir un connecteur obtenu à partir du retrait de cônes d'un conteneur (1200),
**caractérisé en ce que** l'appareil (100, 820a, 820b, 1000) comprend en outre :
une trieuse (106a-f, 220, 1006a-h) destinée à identifier un type de connecteur ;
un mécanisme de distribution (310) configuré pour incliner l'un de la pluralité de supports (330) de manière à distribuer un connecteur hors du support incliné ; et
une mémoire (1318) destinée à stocker des données d'indexation (1100) indiquant :
une présence d'un connecteur dans chacun de la pluralité de supports (330) ;
un type du connecteur qui est tenu dans chaque support (1100a) ; et
une position de chaque support (1100a) sur le mécanisme de transport (300),
dans lequel la trieuse (106a-f, 220, 1006a-h) est configurée pour
saisir un connecteur stocké dans la réserve (214),
identifier le type du connecteur saisi, orienter le connecteur saisi dans une orientation pour une mise en place dans un support ; et
placer le connecteur orienté avec le type identifié dans l'un de la pluralité de supports (360) qui est indiqué comme n'ayant aucune présence d'un connecteur dans les données d'indexation (1100), et
le processeur (190, 1316) est configuré pour faire fonctionner l'appareil (100, 820a, 820b, 1000) pour actualiser les données d'indexation (1100) dans la mémoire pour indiquer
la présence d'un connecteur dans le support contenant le connecteur placé, et
le type identifié du connecteur placé.

2. Appareil (100, 820a, 820b, 1000) de la revendication 1, dans lequel le support de la pluralité de supports devant être incliné par le mécanisme de distribution (310) est monté sur le mécanisme de transport (300) et mobile le long du mécanisme de transport (300) de telle sorte qu'un connecteur tenu par le support est maintenu dans une orientation verticale lorsqu'il est déplacé par le mécanisme de transport (300) et le connecteur est distribué à partir du support quand le support est incliné par le mécanisme de distribution (310) jusqu'à un angle spécifique (α).

3. Appareil (100, 820a, 820b, 1000) de la revendication 2, dans lequel le support (330, 360) configuré pour maintenir le connecteur dans l'orientation verticale est configuré avec un socle plus lourd (370) et est monté avec faculté de pivotement sur le mécanisme de transport (300) de telle sorte que le socle plus lourd modifierait l'orientation du support pour maintenir la tenue du connecteur dans l'orientation verticale en raison de la gravité après que le support aurait été incliné jusqu'à l'angle spécifique (a) par le mécanisme de distribution (310).

4. Appareil (100, 820a, 820b, 1000) de l'une quelconque des revendications précédentes, l'appareil (100, 820a, 820b, 1000) étant utilisable pour déterminer s'il y a un support (360) sur le mécanisme de transport (300) disponible pour stocker un connecteur, et l'appareil (100, 820a, 820b, 1000), si, sur la base des données d'indexation (1100), il est déterminé qu'il n'y a aucun support sur le mécanisme de transport (300) disponible pour stocker le connecteur, étant utilisable pour :
donner l'instruction au mécanisme de transport (300) de déplacer un ou plusieurs supports (330) tenant un ou plusieurs connecteurs (320) jusqu'à un emplacement (328b) pour que le mécanisme de distribution (310) distribue le ou les connecteurs (320) ;
donner l'instruction au mécanisme de distribution (310) de distribuer le ou les connecteurs (320) dans le ou les supports (330) à la réserve ; et
actualiser les données d'indexation (1100) pour indiquer
aucune présence d'un connecteur pour chaque support qui a distribué un connecteur.

5. Appareil (100, 820a, 820b, 1000) de l'une quelconque des revendications précédentes, l'appareil (100, 820a, 820b, 1000) étant utilisable pour :
récupérer des informations du conteneur (1200) à partir d'un serveur (1250) ; et
déterminer une opération devant être effectuée sur le conteneur (102a, 102b, 1022) à partir des informations récupérées du conteneur (1200), l'opération étant la fixation de cônes ou le retrait de cônes.

6. Appareil (100, 820a, 820b, 1000) de la revendication 5, l'appareil (100, 820a, 820b, 1000), si l'opération est le retrait de cônes, étant utilisable pour :
identifier, sur la base des informations récupérées du conteneur (1200), le type d'un connecteur devant être retiré du conteneur (1200) ;
déterminer une position d'un support sur le mécanisme de transport (300) indiqué comme n'ayant aucune présence d'un connecteur à partir des données d'indexation (1100) ;
donner l'instruction au mécanisme de transport (300) de déplacer le support à la position déterminée jusqu'à l'emplacement pour recevoir un connecteur obtenu à partir du retrait de cônes du conteneur (1200) ;
donner l'instruction à un robot manipulateur (250, 904, 1009a-h) de retirer le connecteur du conteneur (1200) et placer le connecteur retiré dans le support déplacé sur la base de la position déterminée ; et
actualiser les données d'indexation (1100) pour indiquer :
la présence d'un connecteur dans le support contenant le connecteur placé par le robot manipulateur (250, 904, 1009a-h), et
le type identifié du connecteur placé par le robot manipulateur (250, 904, 1009a-h).

7. Appareil (100, 820a, 820b, 1000) de la revendication 5, l'appareil (100, 820a, 820b, 1000), si l'opération est la fixation de cônes, étant utilisable pour :
identifier, sur la base des informations récupérées du conteneur (1200), le type d'un connecteur devant être utilisé pendant la fixation de cônes ;
déterminer, sur la base des données d'indexation (1100) et du type identifié du connecteur devant être utilisé, une position d'un support sur le mécanisme de transport (300) contenant un connecteur du type identifié devant être utilisé pendant la fixation de cônes ;
donner l'instruction au mécanisme de transport (300) de déplacer le support à la position déterminée jusqu'à l'emplacement pour récupérer un connecteur utilisé pour la fixation de cônes au conteneur (1200) ;
donner l'instruction à un robot manipulateur (250, 904, 1009a-h) de récupérer le connecteur identifié à partir du support déplacé et effectuer la fixation de cônes en plaçant le connecteur identifié sur le conteneur (1200) ; et
actualiser les données d'indexation (1100) pour indiquer :
aucune présence d'un connecteur dans le support déplacé qui tenait le connecteur identifié récupéré pour la fixation de cônes au conteneur (1200).

8. Appareil (100, 820a, 820b, 1000) de l'une quelconque des revendications 6 et 7, l'appareil (100, 820a, 820b, 1000) étant configuré pour terminer la fixation de cônes ou le retrait de cônes et rétracter le robot manipulateur (250, 904, 1009a-h) quand un capteur de mouvement détecte le déplacement d'un véhicule (104) transportant un conteneur (1200) auquel des cônes ont été fixés ou duquel des cônes ont été retirés, ou le déplacement du conteneur (1200) sur un véhicule (104) auquel des cônes sont en train d'être fixés ou duquel des cônes sont en train d'être retirés pendant la réalisation de la fixation de cônes ou du retrait de cônes par le robot manipulateur (250, 904, 1009a-h) .

9. Appareil (100, 820a, 820b, 1000) de l'une quelconque des revendications 6 à 8, dans lequel le robot manipulateur (250, 904, 1009a-h) comprend un effecteur terminal (254, 600) et l'effecteur terminal (254, 600) est configuré pour manipuler un type ou plus d'un type spécifique de connecteur pendant la fixation de cônes à ou le retrait de cônes d'un conteneur.

10. Appareil (100, 820a, 820b, 1000) de l'une quelconque des revendications 6 à 9, dans lequel le robot manipulateur (250, 904, 1009a-h) est configuré pour :
analyser s'il y a un quelconque connecteur coincé pendant la fixation de cônes ou le retrait de cônes en vérifiant une commande de couple du robot manipulateur (250, 904, 1009a-h) ;
analyser une possibilité pour que le robot manipulateur (250, 904, 1009a-h) heurte un obstacle sur une trajectoire de déplacement du robot manipulateur (250, 904, 1009a-h) en déterminant l'emplacement du conteneur (1200) par rapport au robot manipulateur (250, 904, 1009a-h) et en prédisant la trajectoire de déplacement du robot manipulateur (250, 904, 1009a-h) ;
analyser une possibilité pour que le robot manipulateur (250, 904, 1009a-h) heurte un obstacle sur une trajectoire de déplacement du robot manipulateur (250, 904, 1009a-h) en capturant une ou plusieurs images quand le robot manipulateur (250, 904, 1009a-h) est en mouvement pendant la fixation de cônes ou le retrait de cônes et en les comparant à un ensemble d'images de référence pour déterminer s'il y a un obstacle le long de la trajectoire de déplacement ;
détecter un choc du robot manipulateur (250, 904, 1009a-h) avec un obstacle en utilisant un capteur de choc sur le robot manipulateur (250, 904, 1009a-h) ; et
détecter si un connecteur en train d'être manipulé par le robot manipulateur (250, 904, 1009a-h) est tombé.

11. Appareil (100, 820a, 820b, 1000) de la revendication 9, le robot manipulateur (250, 904, 1009a-h) étant configuré pour changer l'effecteur terminal (254, 600) pour qu'il corresponde au type de connecteur devant être manipulé pendant la fixation de cônes ou le retrait de cônes après avoir déterminé si un changement de l'effecteur terminal (254, 600) est nécessaire, et l'appareil (100, 820a, 820b, 1000), si un changement de l'effecteur terminal (254, 600) est nécessaire, étant configuré pour :
récupérer des informations sur un emplacement d'un effecteur terminal cible (254, 600) dans une réserve d'échange (270) ;
donner l'instruction au robot manipulateur (250, 904, 1009a-h) de désenclencher un effecteur terminal existant monté sur le robot manipulateur (250, 904, 1009a-h) à un emplacement prédéterminé dans la réserve d'échange (270) ; et
se déplacer jusqu'à l'emplacement de l'effecteur terminal cible (254, 600) pour enclencher l'effecteur terminal cible (254, 600).

12. Appareil (100, 820a, 820b, 1000) de la revendication 9, dans lequel chaque effecteur terminal (254, 600) comprend au moins un dispositif parmi un dispositif de serrage (610), un dispositif de torsion (630), un dispositif de poussée (620, 620a, 620b) et un dispositif de rotation (640) pour l'installation ou le retrait du connecteur.

13. Appareil (100, 820a, 820b, 1000) de l'une quelconque des revendications précédentes, l'appareil (100, 820a, 820b, 1000) comprenant une source d'énergie destinée à alimenter électriquement l'appareil (100, 820a, 820b, 1000), la source d'énergie étant un panneau solaire, un générateur portable, ou une ou plusieurs batteries rechargeables.

14. Appareil (100, 820a, 820b, 1000) de l'une quelconque des revendications précédentes, l'appareil (100, 820a, 820b, 1000) étant équipé d'un abri rétractable (102) configuré pour fonctionner avec un capteur météorologique pour s'étendre et abriter un conteneur (1200) auquel des cônes sont en train d'être fixés ou duquel des cônes sont en train d'être retirés contre les conditions environnementales en fonction d'une entrée provenant du capteur météorologique.

15. Appareil (100, 820a, 820b, 1000) de l'une quelconque des revendications précédentes, l'appareil (100, 820a, 820b, 1000) comprenant un dispositif de commande de poste (190) comprenant
un processeur configuré pour exécuter les instructions pour commander au dispositif de commande de poste (190) de fonctionner comme :
une unité de gestion du trafic (162, 1010) destinée à diriger le déplacement d'un ou plusieurs véhicules transportant des conteneurs jusqu'à un emplacement pour effectuer une opération de fixation de cônes ou de retrait de cônes ;
une unité de reconnaissance de numéro de véhicule (150) destinée à recevoir des informations concernant un numéro de véhicule du ou des véhicules entrant dans l'emplacement pour effectuer une opération de fixation de cônes ou de retrait de cônes ;
une unité d'alignement de véhicules (140, 142) destinée à diriger le ou les véhicules entrant dans l'emplacement pour effectuer une opération de fixation de cônes ou de retrait de cônes pour qu'ils s'alignent d'une manière prédéterminée ; et
une unité de notification destinée à recevoir un ou plusieurs signaux en cas d'exception prédéterminée et à envoyer une notification à un ou plusieurs dispositifs d'alerte (1050) en communication de données avec le processeur du dispositif de commande de poste (190).

16. Appareil (100, 820a, 820b, 1000) de la revendication 15, dans lequel le dispositif de commande de poste (190) est configuré pour :
identifier un numéro d'identification d'un conteneur (102a, 102b, 1022) par des images capturées du conteneur (102a, 102b, 1022) ;
évaluer l'état physique du conteneur (102a, 102b, 1022) en utilisant des techniques d'imagerie effectuées sur des images capturées du conteneur (102a, 102b, 1022) ; et
détecter une position d'une porte du conteneur (102a, 102b, 1022) en utilisant des techniques d'imagerie effectuées sur les images capturées du conteneur (102a, 102b, 1022),
dans lequel la position de la porte et de tout dommage détecté du conteneur (102a, 102b, 1022) est transmise à un serveur central (1250, 1304).

17. Appareil (100, 820a, 820b, 1000) de la revendication 15 ou 16, dans lequel le dispositif d'alerte (1050) reçoit une notification d'une ou plusieurs des exceptions prédéterminées suivantes :
un connecteur est tombé avant qu'une fixation de cônes ou un retrait de cônes soit achevé ;
un connecteur est coincé dans une pièce de coin ;
l'un d'une pluralité de robots manipulateurs (250, 904, 1009a-h) est défectueux ;
un conteneur se révèle être endommagé ;
des informations concernant un numéro de véhicule (104) entrant dans l'emplacement pour la fixation de cônes ou le retrait de cônes ne peuvent pas être authentifiées, et
des informations concernant un numéro de conteneur d'un conteneur transporté par un véhicule (104) pour la fixation de cônes ou le retrait de cônes ne peuvent pas être authentifiées.

18. Appareil (100, 820a, 820b, 1000) de l'une quelconque des revendications 15 à 17, dans lequel le ou les dispositifs d'alerte (1050) sont chacun configurés pour proposer une ou plusieurs options sélectionnables par l'utilisateur pour désactiver un robot manipulateur (250, 904, 1009a-h) de telle sorte que, si une notification selon laquelle le robot manipulateur (250, 904, 1009a-h) est défectueux est reçue, le robot manipulateur (250, 904, 1009a-h) est déterminé comme étant utilisable par le biais de la ou des options sélectionnables par l'utilisateur.

19. Appareil (100, 820a, 820b, 1000) de l'une quelconque des revendications 15 à 18, dans lequel le ou les dispositifs d'alerte (1050) sont chacun configurés pour proposer une ou plusieurs options sélectionnables par l'utilisateur pour relancer une opération de fixation de cônes ou de retrait de cônes de telle sorte que, si une notification selon laquelle un connecteur est tombé pendant une opération de fixation de cônes ou de retrait de cônes est reçue, un relancement de l'opération de fixation de cônes ou de retrait de cônes est sélectionnable par le biais de la ou des options sélectionnables par l'utilisateur.

20. Appareil (100, 820a, 820b, 1000) de l'une quelconque des revendications 15 à 19, dans lequel le ou les dispositifs d'alerte (1050) sont configurés pour déterminer des informations concernant un numéro de véhicule d'un véhicule (104) ou un numéro de conteneur d'un ou plusieurs conteneurs sur un véhicule (104) en utilisant des techniques d'imagerie sur des images capturées du véhicule (104).

21. Appareil (100, 820a, 820b, 1000) de l'une quelconque des revendications précédentes, l'appareil (100, 820a, 820b, 1000) comprenant au moins deux unités du mécanisme de transport (300) et au moins deux unités du mécanisme de distribution (310), dans lequel les au moins deux unités du mécanisme de distribution (310) sont situées à l'emplacement où un connecteur utilisé pour la fixation de cônes à un conteneur (1200) est récupéré par les au moins deux unités du mécanisme de transport (300), ou où un connecteur obtenu à partir du retrait de cônes d'un conteneur (1200) est reçu par les au moins deux unités du mécanisme de transport (300).

22. Appareil (100, 820a, 820b, 1000) de la revendication 7, l'appareil (100, 820a, 820b, 1000), si le type identifié d'un connecteur devant être utilisé pendant la fixation de cônes n'est pas présent dans un quelconque support sur le mécanisme de transport (300), étant configuré pour identifier, sur la base des informations récupérées du conteneur et des données d'indexation (1100), un connecteur compatible tenu dans un support sur le mécanisme de transport (300) pour effectuer une opération de fixation de cônes au conteneur (1200).

23. Appareil (100, 820a, 820b, 1000) de la revendication 15, dans lequel, si le type identifié d'un connecteur devant être utilisé pendant la fixation de cônes et le connecteur compatible ne sont pas présents dans un quelconque support sur le mécanisme de transport (300), un décompte de recherches est incrémenté, et
dans lequel l'unité de notification est configurée pour envoyer une notification à un ou plusieurs dispositifs d'alerte (1050) si le décompte de recherches dépasse un nombre prédéterminé.

24. Appareil (100, 820a, 820b, 1000) selon l'une quelconque des revendications précédentes, l'appareil (100, 820a, 820b, 1000) comprenant :
une plate-forme mobile (2000) destinée à déplacer un véhicule (104) transportant un ou plusieurs conteneurs de manière à aligner et/ou orienter le véhicule (104) pour faciliter la fixation de cônes ou le retrait de cônes du ou des conteneurs transportés par le véhicule (104).

25. Appareil (100, 820a, 820b, 1000) selon l'une quelconque des revendications précédentes, l'appareil (100, 820a, 820b, 1000) comprenant :
une plate-forme mobile (2000) destinée à déplacer une ou plusieurs unités de commande d'équipement (108a-f, 1008a-h) configurées pour effectuer la fixation de cônes ou le retrait de cônes pour un ou plusieurs conteneurs de manière à aligner et/ou orienter la ou les unités de commande d'équipement pour faciliter la fixation de cônes ou le retrait de cônes du ou des conteneurs.

26. Appareil (100, 820a, 820b, 1000) selon l'une quelconque des revendications précédentes, l'appareil (100, 820a, 820b, 1000) comprenant :
un transporteur de conteneurs (104) destiné à transporter un ou plusieurs conteneurs ; et
une piste destinée à guider le transporteur de conteneurs (104) pour qu'il se déplace jusqu'à un emplacement pour effectuer une opération de fixation de cônes ou de retrait de cônes.

27. Procédé de fixation de cônes à et/ou de retrait de cônes d'un conteneur, le procédé comprenant :
une étape de transport destinée à déplacer l'un ou plusieurs d'une pluralité de supports montés sur un mécanisme de transport jusqu'à un emplacement pour récupérer un connecteur utilisé pour la fixation de cônes à un conteneur (S1832) ou à déplacer l'un ou plusieurs d'une pluralité de supports montés sur un mécanisme de transport jusqu'à un emplacement pour recevoir un connecteur obtenu à partir du retrait de cônes d'un conteneur (S1616),
**caractérisé en ce que** le procédé comprend en outre :
une étape de tri (S1800) destinée à identifier un type de connecteur pour une pluralité de connecteurs dans une réserve ;
une étape de distribution (S1620, S1846) destinée à incliner l'un de la pluralité de supports de manière à distribuer un connecteur hors du support à la réserve ;
une étape de stockage (S1622, S1828) destinée à stocker des données d'indexation indiquant :
une présence d'un connecteur dans chacun de la pluralité de supports ;
un type du connecteur qui est tenu dans chaque support ; et
une position de chaque support sur le mécanisme de transport,
dans lequel l'étape de tri comprend :
la saisie d'un connecteur stocké dans la réserve ;
l'identification du type du connecteur saisi ;
l'orientation (S1814) du connecteur saisi dans une orientation appropriée pour une mise en place dans le support ; et
la mise en place du connecteur orienté avec le type identifié dans l'un de la pluralité de supports qui est indiqué comme n'ayant aucune présence d'un connecteur dans les données d'indexation ; et
une étape d'actualisation (S1828) destinée à actualiser les données d'indexation pour indiquer
la présence d'un connecteur dans le support contenant le connecteur placé et le type identifié du connecteur placé.
